(19) **Europäisches Patentamt / European Patent Office / Office européen des brevets**

(11) **EP 4 742 658 A1**

(12) **EUROPEAN PATENT APPLICATION**
published in accordance with Art. 153(4) EPC

(43) Date of publication:
**13.05.2026  Bulletin 2026/20**

(21) Application number: **24836196.6**

(22) Date of filing: **27.05.2024**

(51) International Patent Classification (IPC):
**H04N 19/105** (2014.01)    **H04N 19/593** (2014.01)
**H04N 19/132** (2014.01)    **H04N 19/176** (2014.01)
**H04N 19/157** (2014.01)

(52) Cooperative Patent Classification (CPC):
**H04N 19/105; H04N 19/132; H04N 19/157;
H04N 19/176; H04N 19/593**

(86) International application number:
**PCT/KR2024/007146**

(87) International publication number:
**WO 2025/009747 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  04.07.2023  KR 20230086778
          30.11.2023  KR 20230171815

(71) Applicant: Samsung Electronics Co., Ltd.
**Suwon-si, Gyeonggi-do 16677 (KR)**

(72) Inventors:
• **PARK, Minsoo**
  **Suwon-si, Gyeonggi-do 16677 (KR)**
• **PARK, Minwoo**
  **Suwon-si, Gyeonggi-do 16677 (KR)**
• **PARK, Jeeyoon**
  **Suwon-si, Gyeonggi-do 16677 (KR)**
• **CHOI, Kwangpyo**
  **Suwon-si, Gyeonggi-do 16677 (KR)**

(74) Representative: **Appleyard Lees IP LLP
G Mill
Dean Clough Industrial Park
Halifax HX3 5AH (GB)**

(54) **ENCODING METHOD, ENCODING APPARATUS, DECODING METHOD, AND DECODING APPARATUS FOR IMAGE**

(57)   Provided are an image decoding method, an image decoding apparatus, an image encoding method, and an image encoding apparatus, the image decoding method including: when a prediction mode of a current block is a mode for determining a reference block in a current image including the current block, determining the reference block in the current image including the current block; when all samples of the reference block are reconstructed, reconstructing the current block using the reference block; and when at least some samples of the reference block are not reconstructed, determining the at least some unreconstructed samples using reconstructed samples of the current image; and reconstructing the current block using the reference block including the determined at least some samples.

FIG. 17

**Description**

TECHNICAL FIELD

The present disclosure relates to the field of image encoding and decoding. More particularly, the present disclosure relates to an apparatus and method for encoding and decoding an image by using a reference block.

BACKGROUND ART

In image encoding and decoding, an image is split into blocks, and each block is prediction-encoded and prediction-decoded through inter prediction or intra prediction.

Inter prediction is a technique for compressing an image by removing temporal redundancy between images. In inter prediction, blocks of a current image are predicted by using a reference image. A reference block that is most similar to a current block may be searched for within a certain search range in the reference image. The current block is predicted based on the reference block, and a prediction block generated as a result of the prediction is subtracted from the current block to generate a residual block.

Intra prediction is a technique for compressing an image by removing spatial redundancy within the image. Intra prediction generates a prediction block based on neighboring pixels of a current block according to a prediction mode. Then, the prediction block is subtracted from the current block to generate a residual block.

A residual block generated through inter prediction or intra prediction is transformed, quantized, and then transmitted to a decoder. The decoder inversely quantizes and inversely transforms the residual block, and reconstructs a current block by combining a prediction block of a current block with the residual block. The decoder may filter the reconstructed current block to remove artifacts within the reconstructed current block.

DISCLOSURE OF INVENTION

SOLUTION TO PROBLEM

An image decoding method according to an embodiment of the present disclosure is provided. When a prediction mode of a current block is a mode for determining a reference block in a current image including the current block, the method may include determining the reference block in the current image including the current block. At least some samples of the reference block may be reconstructed. When all samples of the reference block are reconstructed, the method may include reconstructing the current block by using the reference block. When at least some samples of the reference block are not reconstructed, the method may include determining the at least some unreconstructed samples by using reconstructed samples of the current image. The method may include reconstructing the current block by using the reference block including the determined at least some samples.

An image decoding apparatus according to an embodiment of the present disclosure is provided. The image decoding apparatus may include at least one processor. When a prediction mode of a current block is a mode for determining a reference block in a current image including the current block, the at least one processor may be configured to determine the reference block in the current image including the current block. At least some samples of the reference block may be reconstructed. When all samples of the reference block are reconstructed, the at least one processor may be configured to reconstruct the current block by using the reference block. When at least some samples of the reference block are not reconstructed, the at least one processor may be configured to determine the at least some unreconstructed samples by using reconstructed samples of the current image. The at least one processor may be configured to reconstruct the current block by using the reference block including the determined at least some samples.

According to an embodiment of the present disclosure, an image encoding method is provided. When a prediction mode of a current block is a mode for determining a reference block in a current image including the current block, the method may include determining the reference block in the current image including the current block. At least some samples of the reference block may be reconstructed. When all samples of the reference block are reconstructed, the method may include reconstructing the current block by using the reference block. When at least some samples of the reference block are not reconstructed, the method may include determining the at least some unreconstructed samples by using reconstructed samples of the current image. The method may include reconstructing the current block by using the reference block including the determined at least some samples.

An image encoding apparatus according to an embodiment of the present disclosure is provided. The image encoding apparatus may include at least one processor. When a prediction mode of a current block is a mode for determining a reference block in a current image including the current block, the at least one processor may be configured to determine the reference block in the current image including the current block. At least some samples of the reference block may be reconstructed. When all samples of the reference block are reconstructed, the at least one processor may be configured to reconstruct the current block by using the reference block. When at least some samples of the reference block are not reconstructed, the at least one processor may be configured to determine the at least some unreconstructed samples by using reconstructed samples of the current image. The at least one processor may be configured to reconstruct the current block by using the reference block including the determined at least some samples.

According to an embodiment of the present disclosure, a computer-readable storage medium storing a bitstream is provided.

BRIEF DESCRIPTION OF DRAWINGS

FIG. 1 is a block diagram illustrating an image decoding apparatus, according to an embodiment of the present disclosure.

FIG. 2 is a block diagram illustrating an image encoding apparatus, according to an embodiment of the present disclosure.

FIG. 3 illustrates a process of determining at least one coding unit by splitting a current coding unit, according to an embodiment of the present disclosure.

FIG. 4 illustrates a process of determining at least one coding unit by splitting a non-square coding unit, according to an embodiment of the present disclosure.

FIG. 5 illustrates a process of splitting a coding unit based on at least one of block shape information and split shape mode information, according to an embodiment of the present disclosure.

FIG. 6 illustrates a method of determining a certain coding unit from among an odd number of coding units, according to an embodiment of the present disclosure.

FIG. 7 illustrates an order of processing a plurality of coding units when the plurality of coding units are determined by splitting a current coding unit, according to an embodiment of the present disclosure.

FIG. 8 illustrates a process of determining that a current coding unit is to be split into an odd number of coding units when coding units are not processable in a certain order, according to an embodiment of the present disclosure.

FIG. 9 illustrates a process of determining at least one coding unit by splitting a first coding unit, according to an embodiment of the present disclosure.

FIG. 10 illustrates that a shape into which a second coding unit is splittable is restricted when the second coding unit having a non-square shape, which is determined when a first coding unit is split, satisfies a certain condition, according to an embodiment of the present disclosure.

FIG. 11 illustrates a process of splitting a square coding unit when split shape mode information indicates that the square coding unit is not to be split into four square coding units, according to an embodiment of the present disclosure.

FIG. 12 illustrates that a processing order between a plurality of coding units may vary according to a process of splitting a coding unit, according to an embodiment of the present disclosure.

FIG. 13 illustrates a process of determining a depth of a coding unit as a shape and a size of the coding unit change, when the coding unit is recursively split to determine a plurality of coding units, according to an embodiment of the present disclosure.

FIG. 14 illustrates depths that are determinable based on shapes and sizes of coding units, and part indexes (PIDs) that are for distinguishing the coding units, according to an embodiment of the present disclosure.

FIG. 15 illustrates that a plurality of coding units are determined based on a plurality of certain data units included in a picture, according to an embodiment of the present disclosure.

FIG. 16 illustrates coding units determinable for each picture when a combination of shapes for splitting a coding unit is different for each picture, according to an embodiment of the present disclosure.

FIG. 17 illustrates various shapes of a coding unit determinable based on split shape mode information that may be represented as a binary code, according to an embodiment of the present disclosure.

FIG. 18 illustrates other shapes of a coding unit determinable based on split shape mode information that may be represented as a binary code, according to an embodiment of the present disclosure.

FIG. 19 is a block diagram illustrating an image encoding and decoding system for performing loop filtering, according to an embodiment of the present disclosure.

FIG. 20 is a block diagram illustrating a configuration of an image decoding apparatus, according to an embodiment of the present disclosure.

FIG. 21 is a diagram for describing a process of determining a reference block in intra prediction, according to an embodiment of the present disclosure.

FIG. 22 is a diagram for describing a reference block including an unreconstructed sample, according to an embodiment of the present disclosure.

FIG. 23 is a diagram for determining an unreconstructed reference block, according to an embodiment of the present disclosure.

FIG. 24 is a diagram for describing a process of determining an unreconstructed sample, according to an embodiment of the present disclosure.

FIG. 25 is a diagram for describing a template matching-based prediction mode, according to an embodiment of the present disclosure.

FIG. 26A is a diagram for describing a template of a template matching-based prediction mode, according to an embodiment of the present disclosure.

FIG. 26B is a diagram for describing a template of a template matching-based prediction mode, according to an embodiment of the present disclosure.

FIG. 27 is a diagram for describing a template matching-based prediction mode, according to an embodiment of the present disclosure.

FIG. 28 is a flowchart for describing prediction using a plurality of reference blocks, according to an embodiment of the present disclosure.

FIG. 29 is a flowchart for describing an image decoding method of performing prediction on a current block, according to an embodiment of the present disclosure.

FIG. 30 is a block diagram illustrating a configuration of an image encoding apparatus, according to an embodiment of the present disclosure.

FIG. 31 is a flowchart illustrating an image encoding method of performing prediction on a current block, according to an embodiment of the present disclosure.

## MODE FOR THE INVENTION

As the present disclosure allows for various changes and numerous examples, particular embodiments will be illustrated in the drawings and described in detail in the written description. However, this is not intended to limit the present disclosure to particular modes of practice, and all changes, equivalents, and substitutes that do not depart from the spirit and technical scope of various embodiments of the present disclosure may be encompassed in the present disclosure.

In the description of embodiments, certain detailed explanations of related art are omitted when it is deemed that they may unnecessarily obscure the essence of the present disclosure. Also, numbers (e.g., first and second) used in the description of the embodiments are merely identifier codes for distinguishing one element from another.

Throughout the present disclosure, the expression "at least one of a, b, or c" indicates only a, only b, only c, both a and b, both a and c, both b and c, all of a, b, and c, or variations thereof.

In the present disclosure, it will be understood that when elements are "connected" or "coupled" to each other, the elements may be directly connected or coupled to each other, but may alternatively be connected or coupled to each other with an intervening element therebetween, unless specified otherwise.

In the present disclosure, regarding an element represented as a '... unit' or a 'module', two or more elements may be combined into one element or one element may be divided into two or more elements. In addition, each element described hereinafter may additionally perform some or all of functions performed by another element, in addition to main functions of itself, and some of the main functions of each element may be performed entirely by another element.

In the present disclosure, an 'image' may include a picture, a still image, frames, a moving image including a plurality of consecutive still images, or a video.

In the present disclosure, a 'sample' is data that is assigned to a sampling location of an image and may include data to be processed. For example, a sample may include a pixel in a frame of a spatial domain. A block may refer to a unit including a plurality of samples.

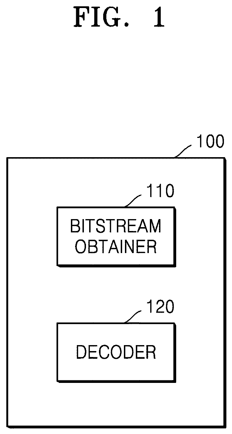

Hereinafter, an image encoding method and apparatus and an image decoding method and apparatus based on coding units and transform units having a tree structure according to an embodiment of the present disclosure will be described with reference to FIGS. 1-19.

FIG. 1 is a block diagram illustrating an image decoding apparatus 100, according to an embodiment of the present disclosure.

The image decoding apparatus 100 may include a bitstream obtainer 110 and a decoder 120. The bitstream obtainer 110 and the decoder 120 may include at least one processor. Also, the bitstream obtainer 110 and the decoder 120 may include a memory in which instructions to be executed by the at least one processor are stored.

The bitstream obtainer 110 may receive a bitstream. The bitstream includes information obtained when an image encoding apparatus 200 described below encodes an image. Also, the bitstream may be transmitted from the image encoding apparatus 200. The image encoding apparatus 200 and the image decoding apparatus 100 may be connected to each other by wire or wirelessly, and the bitstream obtainer 110 may receive the bitstream by wire or wirelessly. The bitstream obtainer 110 may receive the bitstream from a storage medium such as an optical medium or a hard disk. The decoder 120 may reconstruct an image based on information obtained from the received bitstream. The decoder 120 may obtain a syntax element for reconstructing the image from the bitstream. The decoder 120 may reconstruct the image based on the syntax element.

An operation of the image decoding apparatus 100 will be described in detail, and the bitstream obtainer 110 may receive a bitstream.

The image decoding apparatus 100 may perform an operation of obtaining a bin string corresponding to a split shape mode of a coding unit from the bitstream. Also, the image decoding apparatus 100 may perform an operation of determining a split rule of a coding unit. Additionally, the image decoding apparatus 100 may perform an operation of splitting a coding unit into a plurality of coding units, based on at least one of the bin string corresponding to the split shape mode or the split rule. The image decoding apparatus 100 may determine a first range which is an allowable size range of a coding unit, according to a ratio of a width and a height of the coding unit, in order to determine the split rule. The image decoding apparatus 100 may determine a second range which is an allowable size range of a coding unit, according to a split shape mode of the coding unit, in order to determine the split rule.

Hereinafter, splitting of a coding unit according to an embodiment of the present disclosure will be described in detail.

First, one picture may be split into one or more slices or one or more tiles. One slice or one tile may be a sequence of largest coding units (coding tree units (CTUs)). According to an implementation example, one slice may include one or more tiles, and one slice may include one or more largest coding units. A slice including one or more tiles may be determined in a picture.

As a concept compared to a largest coding unit (CTU), there is a largest coding block (coding tree block (CTB)). A largest coding block (CTB) denotes an NxN block including NxN samples (N is an integer). Each color component may be split into one or more largest coding blocks.

When a picture has three sample arrays (sample arrays for Y, Cr, and Cb components), a largest coding unit (CTU) includes a largest coding block of a luma sample, two corresponding largest coding blocks of chroma samples, and syntax structures used to encode the luma sample and the chroma samples. When a picture is a monochrome picture, a largest coding unit includes a largest coding block of a monochrome sample and syntax structures used to encode the monochrome samples. When a picture is a picture encoded in color planes separated according to color components, a largest coding unit includes syntax structures used to encode the picture and samples of the image.

One largest coding block (CTB) may be split into MxN coding blocks including MxN samples (M and N are integers).

When a picture has sample arrays for Y, Cr, and Cb components, a coding unit (CU) includes a coding block of a luma sample, two corresponding coding blocks of chroma samples, and syntax structures used to encode the luma sample and the chroma samples. When a picture is a monochrome picture, a coding unit includes a coding block of a monochrome sample and syntax structures used to encode the monochrome samples. When a picture is a picture encoded in color planes separated according to color components, a coding unit includes syntax structures used to encode the picture and samples of the image.

As described above, a largest coding block and a largest coding unit are conceptually distinguished from each other, and a coding block and a coding unit are conceptually distinguished from each other. That is, a (largest) coding unit refers to a data structure including a (largest) coding block including a corresponding sample and a syntax structure corresponding to the (largest) coding block. However, because it is understood by one of ordinary skill in the art that a (largest) coding unit or a (largest) coding block refers to a block of a certain size including a certain number of samples, a largest coding block and a largest coding unit, or a coding block and a coding unit are mentioned in the following specification without being distinguished unless otherwise described.

An image may be split into largest coding units (CTUs). A size of each largest coding unit may be determined based on information obtained from a bitstream. A shape of each largest coding unit may be a square shape of the same size. However, the present disclosure is not limited thereto.

For example, information about a maximum size of a luma coding block may be obtained from a bitstream. For example, the maximum size of the luma coding block indicated by the information about the maximum size of the luma coding block may be one of 4x4, 8x8, 16x16, 32x32, 64x64, 128x128, and 256x256.

For example, information about a luma block size difference and a maximum size of a luma coding block that may be split into two may be obtained from a bitstream. The information about the luma block size difference may refer to a size difference between a luma largest coding unit and a largest luma coding block that may be split into two. Accordingly, when the information about the maximum size of the luma coding block that may be split into two and the information about the luma block size difference obtained from the bitstream are combined with each other, a size of the luma largest coding unit may be determined. A size of a chroma largest coding unit may be determined by using the size of the luma largest coding unit. For example, when a Y: Cb: Cr ratio is 4:2:0 according to a color format, a size of a chroma block may be half a size of a luma block, and a size of a chroma largest coding unit may be half a size of a luma largest coding unit.

According to an embodiment of the present disclosure, because information about a maximum size of a luma coding block that is binary splittable is obtained from a bitstream, the maximum size of the luma coding block that is binary splittable may be variably determined. In contrast, a maximum size of a luma coding block that is ternary splittable may be fixed. For example, the maximum size of the luma coding block that is ternary splittable in an I-image may be 32x32, and the maximum size of the luma coding block that is ternary splittable in a P-picture or a B-image may be 64x64.

Also, a largest coding unit may be hierarchically split into coding units based on split shape mode information obtained from a bitstream. At least one of information indicating whether quad splitting is performed, information indicating whether multi-splitting is performed, split direction information, and split type information may be obtained as the split shape mode information from the bitstream.

For example, the information indicating whether quad splitting is performed may indicate whether a current coding unit is quad split (QUAD_SPLIT) or not.

When the current coding unit is not quad split, the information indicating whether multi-splitting is performed may indicate whether the current coding unit is no longer split (NO_SPLIT) or binary/ternary split.

When the current coding unit is binary split or ternary split, the split direction information indicates that the current coding unit is split in one of a horizontal direction and a vertical direction.

When the current coding unit is split in the horizontal direction or the vertical direction, the split type information indicates that the current coding unit is binary split or ternary split.

A split mode of the current coding unit may be determined according to the split direction information and the split type information. A split mode when the current coding unit is binary split in the horizontal direction may be determined to be a binary horizontal split mode (SPLIT_BT_HOR), a split mode when the current coding unit is ternary split in the horizontal direction may be determined to be a ternary horizontal split mode (SPLIT_TT_HOR), a split mode when the current coding unit is binary split in the vertical direction may be determined to be a binary vertical split mode (SPLIT_BT_VER), and a split mode when the current coding unit is ternary split in the vertical direction may be determined to be a ternary vertical split mode (SPLIT_TT_VER).

The image decoding apparatus 100 may obtain, from the bitstream, the split shape mode information from one bin string. A form of the bitstream received by the image decoding apparatus 100 may include fixed length binary code, unary code, truncated unary code, pre-determined binary code, or the like. The bin string is information in a binary number. The bin string may include at least one bit. The image decoding apparatus 100 may obtain the split shape mode information corresponding to the bin string, based on the split rule. The image decoding apparatus 100 may determine whether to quad split a coding unit, whether not to split a coding unit, a split direction, and a split type, based on one bin string.

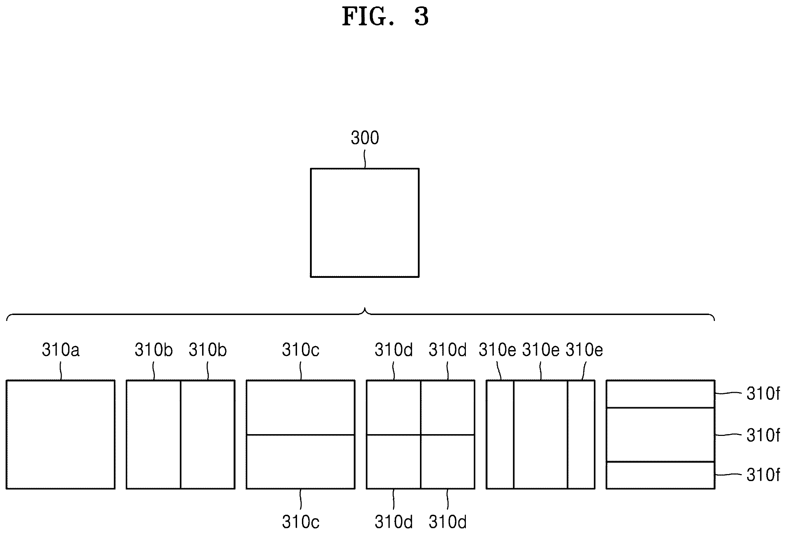

The coding unit may be smaller than or the same as the largest coding unit. For example, because a largest coding unit is a coding unit having a maximum size, the largest coding unit is one of coding units. When split shape mode information about a largest coding unit indicates that splitting is not performed, a coding unit determined in the largest coding unit has the same size as that of the largest coding unit. When split shape mode information about a largest coding unit indicates that splitting is performed, the largest coding unit may be split into coding units. Also, when split shape mode information about a coding unit indicates that splitting is performed, the coding unit may be split into smaller coding units. However, the splitting of the image is not limited thereto, and the largest coding unit and the coding unit may not be distinguished. The splitting of the coding unit will be described in more detail with reference to FIGS. 3 -16.

Also, one or more prediction blocks for prediction may be determined from a coding unit. The prediction block may be equal to or smaller than the coding unit. Also, one or more transform blocks for transform may be determined from a coding unit. The transform block may be equal to or smaller than the coding unit.

The shapes and sizes of the transform block and prediction block may not be related to each other.

In another embodiment, prediction may be performed by using a coding unit as a prediction unit. Also, transform may be performed by using a coding unit as a transform block.

The splitting of the coding unit will be described in more detail with reference to FIGS. 3-16. A current block and a neighboring block of the present disclosure may indicate one of the largest coding unit, the coding unit, the prediction block, and the transform block. Also, the current block or the current coding unit is a block that is currently being decoded or encoded or a block that is currently being split. The neighboring block may be a block reconstructed prior to the current block. The neighboring block may be adjacent to the current block spatially or temporally. The neighboring block may be located at one of the lower left, left, upper left, top, upper right, right, and lower right of the current block.

The above embodiment is an embodiment for describing an operation related to an image decoding method performed by the image decoding apparatus 100. Hereinafter, an operation of the image encoding apparatus 200 for performing an image encoding method corresponding to a reverse process of the image decoding method will be described through an embodiment of the present disclosure.

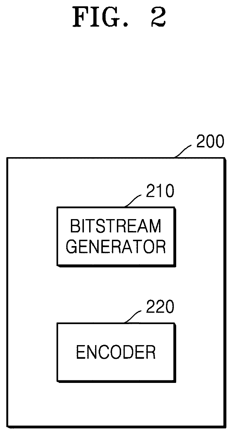

FIG. 2 is a block diagram illustrating the image encoding apparatus 200 capable of encoding an image based on at least one of block shape information and split shape mode information, according to an embodiment of the present disclosure.

The image encoding apparatus 200 may include an encoder 220 and a bitstream generator 210. The encoder 220 may receive an input image and may encode the input image. The encoder 220 may obtain at least one syntax element by encoding the input image. The syntax element may include at least one of a skip flag, a prediction mode, a motion vector difference, a motion vector prediction method (or index), a transform quantized coefficient, a coded block pattern, a coded block flag, an intra prediction mode, a direct flag, a merge flag, a delta QP, a reference index, a prediction direction, and a transform index. The encoder 220 may determine a context model based on block shape information including at least one of a shape, a direction, a ratio of a width and a height, or a size of a coding unit.

The bitstream generator 210 may generate a bitstream based on the encoded input image. For example, the bitstream generator 210 may generate the bitstream by entropy encoding the syntax element based on the context model. Also, the image encoding apparatus 200 may transmit the bitstream to the image decoding apparatus 100.

According to an embodiment of the present disclosure, the encoder 220 of the image encoding apparatus 200 may determine a shape of the coding unit. For example, the coding unit may have a square shape or a non-square shape, and information indicating the shape may be included in the block shape information.

According to an embodiment of the present disclosure, the encoder 220 may determine a shape into which the coding unit is to be split. The encoder 220 may determine a shape of at least one coding unit included in the coding unit, and the bitstream generator 210 may generate the bitstream including split shape mode information including information about the shape of the coding unit.

According to an embodiment of the present disclosure, the encoder 220 may determine whether the coding unit is split or not. When the encoder 220 determines that only one coding unit is included in the coding unit or the coding unit is not split, the bitstream generator 210 may generate the bitstream including the split shape mode information indicating that the coding unit is not split. Also, the encoder 220 may split the coding unit into a plurality of coding units included in the coding unit, and the bitstream generator 210 may generate the bitstream including the split shape mode information indicating that the coding unit is split into the plurality of coding units.

According to an embodiment of the present disclosure, information indicating the number of coding units into which the coding unit is to be split or a direction in which the coding unit is to be split may be included in the split shape mode information. For example, the split shape mode information may indicate that splitting is performed in at least one of a vertical direction and a horizontal direction or that splitting is not performed.

The image encoding apparatus 200 determines information about a split shape mode based on the split shape mode of the coding unit. The image encoding apparatus 200 determines a context model based on at least one of a shape, a direction, a ratio of a width and a height, or a size of the coding unit. Also, the image encoding apparatus 200 generates the information about the split shape mode for splitting the coding unit as a bitstream based on the context model.

In order to determine the context model, the image encoding apparatus 200 may obtain an arrangement for making a correspondence between at least one of the shape, the direction, the ratio of the width and the height, or the size of the coding unit and an index for the context model. The image encoding apparatus 200 may obtain, in the arrangement, the index for the context model based on at least one of the shape, the direction, the ratio of the width and the height, or the size of the coding unit. The image encoding apparatus 200 may determine the context model based on the index for the context model.

In order to determine the context model, the image encoding apparatus 200 may determine the context model further based on block shape information including at least one of a shape, a direction, a ratio of a width and a height, or a size of a neighboring coding unit adjacent to the coding unit. Also, the neighboring coding unit may include at least one coding unit located at the lower left, left, upper left, top, upper right, right, and lower right of the coding unit.

Also, in order to determine the context model, the image encoding apparatus 200 may compare a length of a width of the upper neighboring coding unit with a length of a width of the coding unit. Also, the image encoding apparatus 200 may compare a length of a height of each of the left neighboring coding unit and the right neighboring coding unit with a length of a height of the coding unit. Also, the image encoding apparatus 200 may determine the context model based on comparison results.

An operation of the image encoding apparatus 200 is similar to an operation of the image decoding apparatus 100 described with reference to FIGS. 3-19, and thus, a detailed description thereof will be omitted.

FIG. 3 illustrates a process in which the image decoding apparatus 100 determines at least one coding unit by splitting a current coding unit, according to an embodiment of the present disclosure.

A block shape may include 4Nx4N, 4Nx2N, 2Nx4N, 4NxN, Nx4N, 32NxN, Nx32N, 16NxN, Nx16N, 8NxN, or Nx8N. Here, N may be a positive integer. Block shape information is information indicating at least one of a shape, a direction, a ratio of a width and a height, or a size of a coding unit.

The shape of the coding unit may include a square and a non-square. When the width and the height of the coding unit are the same (i.e., when the block shape of the coding unit is 4Nx4N), the image decoding apparatus 100 may determine the block shape information of the coding unit to be a square. The image decoding apparatus 100 may determine the shape of the coding unit to be a non-square.

When the width and the height of the coding unit are different from each other (i.e., when the block shape of the coding unit is 4Nx2N, 2Nx4N, 4NxN, Nx4N, 32NxN, Nx32N, 16NxN, Nx16N, 8NxN, or Nx8N), the image decoding apparatus 100 may determine the block shape information of the coding unit to be a non-square. When the shape of the coding unit is a non-square, the image decoding apparatus 100 may determine the ratio of the width and the height among the block shape information of the coding unit to be at least one of 1:2, 2:1, 1:4, 4:1, 1:8, 8:1, 1:16, 16:1, 1:32, or 32:1. Also, the image decoding apparatus 100 may determine whether the coding unit is in a horizontal direction or a vertical direction, based on the length of the width and the length of the height of the coding unit. Also, the image decoding apparatus 100 may determine the size of the coding unit, based on at least one of the length of the width, the length of the height, or the area of the coding unit.

According to an embodiment of the present disclosure, the image decoding apparatus 100 may determine the shape of the coding unit by using the block shape information, and may determine a splitting method of the coding unit by using split shape mode information. That is, a coding unit splitting method indicated by the split shape mode information may be determined based on a block shape indicated by the block shape information used by the image decoding apparatus 100.

The image decoding apparatus 100 may obtain the split shape mode information from a bitstream. However, an embodiment of the present disclosure is not limited thereto, and the image decoding apparatus 100 and the image encoding apparatus 200 may determine pre-agreed split shape mode information, based on the block shape information. The image decoding apparatus 100 may determine the pre-agreed split shape mode information with respect to a largest coding unit or a smallest coding unit. For example, the image decoding apparatus 100 may determine the split shape mode information with respect to the largest coding unit to be a quad split. Also, the image decoding apparatus 100 may determine the split shape mode information with respect to the smallest coding unit to be "not to perform splitting". In particular, the image decoding apparatus 100 may determine the size of the largest coding unit to be 256x256. The image decoding apparatus 100 may determine the pre-agreed split shape mode information to be a quad split. The quad split is a split shape mode in which the width and the height of the coding unit are both bisected. The image decoding apparatus 100 may obtain a coding unit of a 128x128 size from the largest coding unit of a 256x256 size, based on the split shape mode information. Also, the image decoding apparatus 100 may determine the size of the smallest coding unit to be 4x4. The image decoding apparatus 100 may obtain split shape mode information indicating "not to perform splitting" with respect to the smallest coding unit.

According to an embodiment of the present disclosure, the image decoding apparatus 100 may use the block shape information indicating that the current coding unit has a square shape. For example, the image decoding apparatus 100 may determine whether not to split a square coding unit, whether to vertically split the square coding unit, whether to horizontally split the square coding unit, or whether to split the square coding unit into four coding units, based on the split shape mode information. Referring to FIG. 3, when the block shape information of a current coding unit 300 indicates a square shape, the decoder 120 may not split a coding unit 310a having the same size as the current coding unit 300, based on the split shape mode information indicating not to perform splitting, or may determine coding units 310b, 310c, 310d, 310e, or 310f split based on the split shape mode information indicating a certain splitting method.

Referring to FIG. 3, according to an embodiment of the present disclosure, the image decoding apparatus 100 may determine two coding units 310b obtained by splitting the current coding unit 300 in a vertical direction, based on the split shape mode information indicating to perform splitting in a vertical direction. The image decoding apparatus 100 may determine two coding units 310c obtained by splitting the current coding unit 300 in a horizontal direction, based on the split shape mode information indicating to perform splitting in a horizontal direction. The image decoding apparatus 100 may determine four coding units 310d obtained by splitting the current coding unit 300 in vertical and horizontal directions, based on the split shape mode information indicating to perform splitting in vertical and horizontal directions. According to an embodiment of the present disclosure, the image decoding apparatus 100 may determine three coding units 310e obtained by splitting the current coding unit 300 in a vertical direction, based on the split shape mode information indicating to perform ternary splitting in a vertical direction. The image decoding apparatus 100 may determine three coding units 310f obtained by splitting the current coding unit 300 in a horizontal direction, based on the split shape mode information indicating to perform ternary splitting in a horizontal direction. However, splitting methods of the square coding unit are not limited to the above-described methods, and the split shape mode information may indicate various methods. Certain splitting methods of splitting the square coding unit will be described in detail below through an embodiment of the present disclosure.

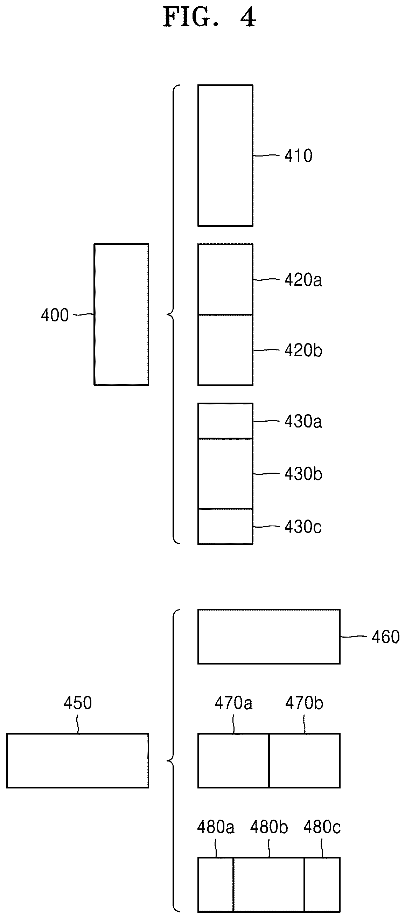

FIG. 4 illustrates a process in which the image decoding apparatus 100 determines at least one coding unit by splitting a non-square coding unit, according to an embodiment of the present disclosure.

According to an embodiment of the present disclosure, the image decoding apparatus 100 may use block shape information indicating that a current coding unit has a non-square shape. The image decoding apparatus 100 may determine whether not to split the non-square current coding unit or whether to split the non-square current coding unit by using a certain splitting method, based on split shape mode information. Referring to FIG. 4, when the block shape information of a current coding unit 400 or 450 indicates a non-square shape, the image decoding apparatus 100 may determine a coding unit 410 or 460 having the same size as the current coding unit 400 or 450, based on the split shape mode information indicating not to perform splitting, or may determine coding units 420a and 420b, 430a to 430c, 470a and 470b, or 480a to 480c split based on the split shape mode information indicating a certain splitting method. Certain splitting methods of splitting a non-square coding unit will be described in detail below through an embodiment of the present disclosure.

According to an embodiment of the present disclosure, the image decoding apparatus 100 may determine a splitting method of a coding unit by using the split shape mode information and, in this case, the split shape mode information may indicate the number of one or more coding units generated by splitting a coding unit. Referring to FIG. 4, when the split shape mode information indicates to split the current coding unit 400 or 450 into two coding units, the image decoding apparatus 100 may determine two coding units 420a and 420b, or 470a and 470b included in the current coding unit 400 or 450, by splitting the current coding unit 400 or 450 based on the split shape mode information.

According to an embodiment of the present disclosure, when the image decoding apparatus 100 splits the non-square current coding unit 400 or 450 based on the split shape mode information, the image decoding apparatus 100 may consider the location of a long side of the non-square current coding unit 400 or 450 to split a current coding unit. For example, the image decoding apparatus 100 may determine a plurality of coding units by splitting the current coding unit 400 or 450 in a direction of splitting a long side of the current coding unit 400 or 450, in consideration of the shape of the current coding unit 400 or 450.

According to an embodiment of the present disclosure, when the split shape mode information indicates to split (ternary split) a coding unit into an odd number of blocks, the image decoding apparatus 100 may determine an odd number of coding units included in the current coding unit 400 or 450. For example, when the split shape mode information indicates to split the current coding unit 400 or 450 into three coding units, the image decoding apparatus 100 may split the current coding unit 400 or 450 into three coding units 430a, 430b, and 430c, or 480a, 480b, and 480c.

According to an embodiment of the present disclosure, a ratio of a width and a height of the current coding unit 400 or 450 may be 4:1 or 1:4. When the ratio of the width and the height is 4:1, the block shape information may indicate a horizontal direction because the length of the width is longer than the length of the height. When the ratio of the width and the height is 1:4, the block shape information may indicate a vertical direction because the length of the width is shorter than the length of the height. The image decoding apparatus 100 may determine to split a current coding unit into an odd number of blocks, based on the split shape mode information. Also, the image decoding apparatus 100 may determine a split direction of the current coding unit 400 or 450, based on the block shape information of the current coding unit 400 or 450. For example, when the current coding unit 400 is in the vertical direction, the image decoding apparatus 100 may determine the coding units 430a, 430b, and 430c by splitting the current coding unit 400 in the horizontal direction. Also, when the current coding unit 450 is in the horizontal direction, the image decoding apparatus 100 may determine the coding units 480a, 480b, and 480c by splitting the current coding unit 450 in the vertical direction.

According to an embodiment of the present disclosure, the image decoding apparatus 100 may determine an odd number of coding units included in the current coding unit 400 or 450, and not all the determined coding units may have the same size. For example, a certain coding unit 430b or 480b from among the determined odd number of coding units 430a, 430b, and 430c, or 480a, 480b, and 480c may have a size different from the size of the other coding units 430a and 430c, or 480a and 480c. That is, coding units which may be determined by splitting the current coding unit 400 or 450 may have multiple sizes and, in some cases, all of the odd number of coding units 430a, 430b, and 430c, or 480a, 480b, and 480c may have different sizes.

According to an embodiment of the present disclosure, when the split shape mode information indicates to split a coding unit into the odd number of blocks, the image decoding apparatus 100 may determine the odd number of coding units included in the current coding unit 400 or 450, and moreover, may put a certain restriction on at least one of the odd number of coding units generated by splitting the current coding unit 400 or 450. Referring to FIG. 4, the image decoding apparatus 100 may set a decoding process regarding the coding unit 430b or 480b located at the center among the three coding units 430a, 430b, and 430c, or 480a, 480b, and 480c generated as the current coding unit 400 or 450 is split to be different from that of the other coding units 430a and 430c, or 480a and 480c. For example, the image decoding apparatus 100 may restrict the coding unit 430b or 480b at the center location to be no longer split or to be split only a certain number of times, unlike the other coding units 430a and 430c, or 480a and 480c.

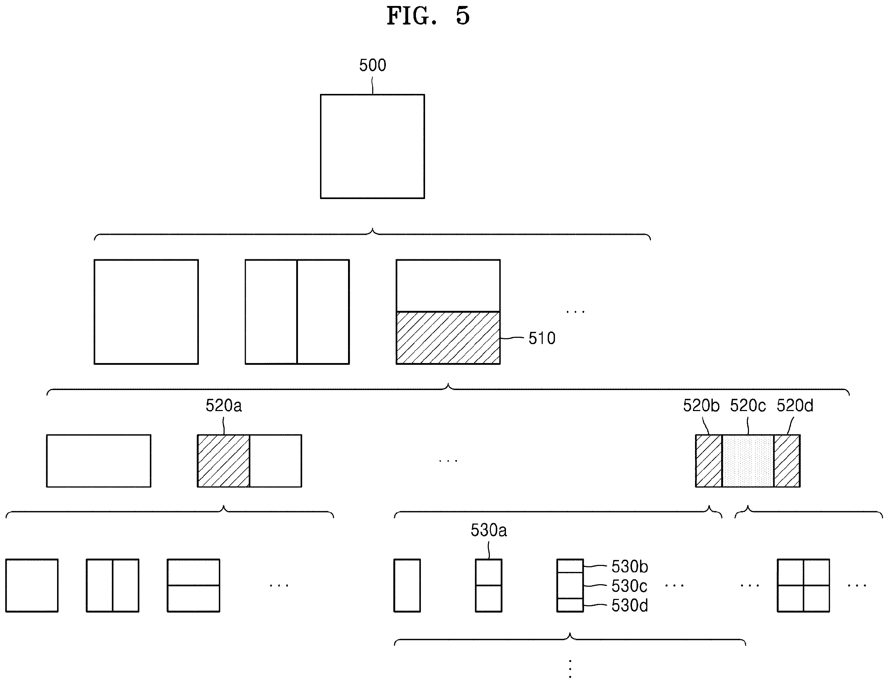

FIG. 5 illustrates a process in which the image decoding apparatus 100 splits a coding unit based on at least one of block shape information and split shape mode information, according to an embodiment of the present disclosure.

According to an embodiment of the present disclosure, the image decoding apparatus 100 may determine to split or not to split a square first coding unit 500 into coding units, based on at least one of the block shape information and the split shape mode information. According to an embodiment of the present disclosure, when the split shape mode information indicates to split the first coding unit 500 in a horizontal direction, the image decoding apparatus 100 may determine a second coding unit 510 by splitting the first coding unit 500 in a horizontal direction. A first coding unit, a second coding unit, and a third coding unit used according to an embodiment of the present disclosure are terms used to understand a relation before and after splitting a coding unit. For example, a second coding unit may be determined by splitting a first coding unit, and a third coding unit may be determined by splitting the second coding unit. It will be understood that the relation of the first coding unit, the second coding unit, and the third coding unit follows the above descriptions.

According to an embodiment of the present disclosure, the image decoding apparatus 100 may determine to split or not to split the determined second coding unit 510 into coding units, based on the split shape mode information. Referring to FIG. 5, the image decoding apparatus 100 may or may not split the non-square second coding unit 510, which is determined by splitting the first coding unit 500, into one or more third coding units 520a, 520b, 520c, and 520d based on the split shape mode information. The image decoding apparatus 100 may obtain the split shape mode information, and may obtain a plurality of various-shaped second coding units (e.g., 510) by splitting the first coding unit 500, based on the obtained split shape mode information, and the second coding unit 510 may be split by using a splitting method of the first coding unit 500 based on the split shape mode information. According to an embodiment of the present disclosure, when the first coding unit 500 is split into the second coding units 510 based on the split shape mode information of the first coding unit 500, the second coding unit 510 may also be split into the third coding units (e.g., 520a, or 520b, 520c, and 520d) based on the split shape mode information of the second coding unit 510. That is, a coding unit may be recursively split based on the split shape mode information of each coding unit. Accordingly, a square coding unit may be determined by splitting a non-square coding unit, and a non-square coding unit may be determined by recursively splitting the square coding unit.

Referring to FIG. 5, a certain coding unit (e.g., a coding unit located at a center location, or a square coding unit) from among an odd number of third coding units 520b, 520c, and 520d determined by splitting the non-square second coding unit 510 may be recursively split. According to an embodiment of the present disclosure, the non-square third coding unit 520b from among the odd number of third coding units 520b, 520c, and 520d may be split in a horizontal direction into a plurality of fourth coding units. A non-square fourth coding unit 530b or 530d from among the plurality of fourth coding units 530a, 530b, 530c, and 530d may be re-split into a plurality of coding units. For example, the non-square fourth coding unit 530b or 530d may be re-split into an odd number of coding units. A method that may be used to recursively split a coding unit will be described below through an embodiment of the present disclosure.

According to an embodiment of the present disclosure, the image decoding apparatus 100 may split each of the third coding units 520a, 520b, 520c, and 520d into coding units, based on the split shape mode information. Also, the image decoding apparatus 100 may determine not to split the second coding unit 510 based on the split shape mode information. According to an embodiment of the present disclosure, the image decoding apparatus 100 may split the non-square second coding unit 510 into the odd number of third coding units 520b, 520c, and 520d. The image decoding apparatus 100 may put a certain restriction on a certain third coding unit from among the odd number of third coding units 520b, 520c, and 520d. For example, the image decoding apparatus 100 may restrict the third coding unit 520c at a center location from among the odd number of third coding units 520b, 520c, and 520d to be no longer split or to be split a settable number of times.

Referring to FIG. 5, the image decoding apparatus 100 may restrict the third coding unit 520c, which is at the center location from among the odd number of third coding units 520b, 520c, and 520d included in the non-square second coding unit 510, to be no longer split, to be split by using a certain splitting method (e.g., split into only four coding units or split by using a splitting method of the second coding unit 510), or to be split only a certain number of times (e.g., split only n times (where n>0)). However, the restrictions on the third coding unit 520c at the center location are not limited to the above-described embodiments, and may include various restrictions for decoding the third coding unit 520c at the center location differently from the other third coding units 520b and 520d.

According to an embodiment of the present disclosure, the image decoding apparatus 100 may obtain the split shape mode information, which is used to split a current coding unit, from a certain location in the current coding unit.

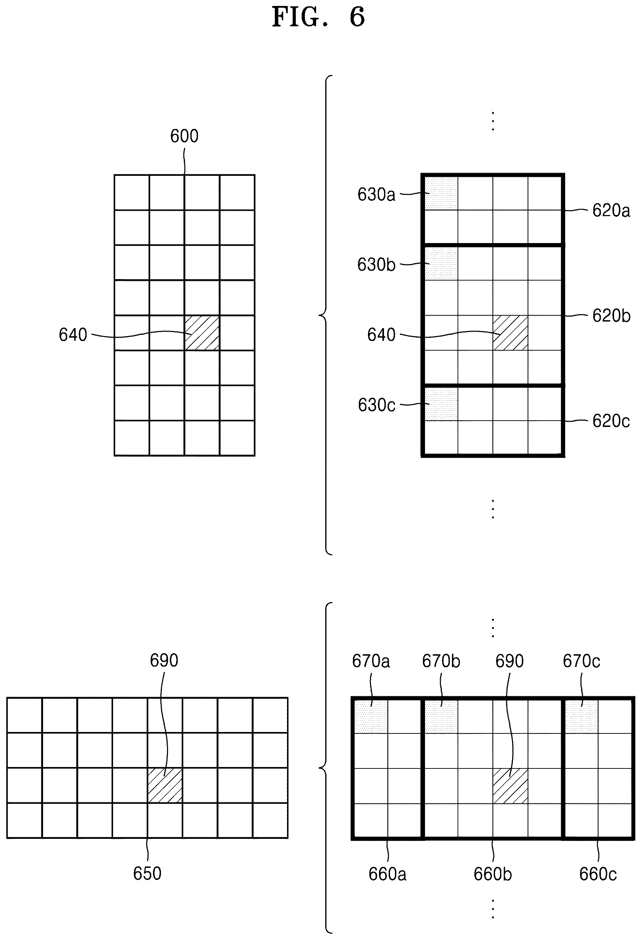

FIG. 6 illustrates a method in which the image decoding apparatus 100 determines a certain coding unit from among an odd number of coding units, according to an embodiment of the present disclosure.

Referring to FIG. 6, split shape mode information of a current coding unit 600 or 650 may be obtained from a sample of a certain location (e.g., a sample 640 or 690 of a center location) from among a plurality of samples included in the current coding unit 600 or 650. However, the certain location in the current coding unit 600, from which at least one piece of the split shape mode information may be obtained, is not limited to the center location in FIG. 6, and may include various locations included in the current coding unit 600 (e.g., top, bottom, left, right, upper left, lower left, upper right, lower right locations, or the like). The image decoding apparatus 100 may obtain the split shape mode information from the certain location and may determine to split or not to split the current coding unit into various-shaped and various-sized coding units.

According to an embodiment of the present disclosure, when the current coding unit is split into a certain number of coding units, the image decoding apparatus 100 may select one of the coding units. Various methods may be used to select one of a plurality of coding units, as will be described below through an embodiment of the present disclosure.

According to an embodiment of the present disclosure, the image decoding apparatus 100 may split the current coding unit into a plurality of coding units, and may determine a coding unit at a certain location.

According to an embodiment of the present disclosure, the image decoding apparatus 100 may use information indicating locations of the odd number of coding units, to determine a coding unit at a center location from among the odd number of coding units. Referring to FIG. 6, the image decoding apparatus 100 may determine the odd number of coding units 620a, 620b, and 620c or the odd number of coding units 660a, 660b, and 660c by splitting the current coding unit 600 or the current coding unit 650. The image decoding apparatus 100 may determine the middle coding unit 620b or the middle coding unit 660b by using information about locations of the odd number of coding units 620a, 620b, and 620c or the odd number of coding units 660a, 660b, and 660c. For example, the image decoding apparatus 100 may determine the coding unit 620b of the center location by determining the locations of the coding units 620a, 620b, and 620c based on information indicating locations of certain samples included in the coding units 620a, 620b, and 620c. In detail, the image decoding apparatus 100 may determine the coding unit 620b at the center location by determining the locations of the coding units 620a, 620b, and 620c based on information indicating locations of upper left samples 630a, 630b, and 630c of the coding units 620a, 620b, and 620c.

According to an embodiment of the present disclosure, the information indicating the locations of the upper left samples 630a, 630b, and 630c, which are respectively included in the coding units 620a, 620b, and 620c, may include information about locations or coordinates of the coding units 620a, 620b, and 620c in a picture. According to an embodiment of the present disclosure, the information indicating the locations of the upper left samples 630a, 630b, and 630c, which are included in the coding units 620a, 620b, and 620c, respectively, may include information indicating widths or heights of the coding units 620a, 620b, and 620c included in the current coding unit 600, and the widths or heights may correspond to information indicating differences between the coordinates of the coding units 620a, 620b, and 620c in the picture. That is, the image decoding apparatus 100 may determine the coding unit 620b at the center location by directly using the information about the locations or coordinates of the coding units 620a, 620b, and 620c in the picture, or by using the information about the widths or heights of the coding units, which correspond to the difference values between the coordinates.

According to an embodiment of the present disclosure, information indicating the location of the upper left sample 630a of the upper coding unit 620a may include coordinates (xa, ya), information indicating the location of the upper left sample 630b of the middle coding unit 620b may include coordinates (xb, yb), and information indicating the location of the upper left sample 630c of the lower coding unit 620c may include coordinates (xc, yc). The image decoding apparatus 100 may determine the middle coding unit 620b by using the coordinates of the upper left samples 630a, 630b, and 630c which are included in the coding units 620a, 620b, and 620c, respectively. For example, when the coordinates of the upper left samples 630a, 630b, and 630c are sorted in an ascending or descending order, the coding unit 620b including the coordinates (xb, yb) of the sample 630b at a center location may be determined as a coding unit at a center location from among the coding units 620a, 620b, and 620c determined by splitting the current coding unit 600. However, the coordinates indicating the locations of the upper left samples 630a, 630b, and 630c may include coordinates indicating absolute locations in the picture, or may use coordinates (dxb, dyb) indicating a relative location of the upper left sample 630b of the middle coding unit 620b and coordinates (dxc, dyc) indicating a relative location of the upper left sample 630c of the lower coding unit 620c with respect to the location of the upper left sample 630a of the upper coding unit 620a. A method of determining a coding unit at a certain location by using coordinates of a sample included in the coding unit as information indicating a location of the sample is not limited to the above-described method, and may include various arithmetic methods capable of using the coordinates of the sample.

According to an embodiment of the present disclosure, the image decoding apparatus 100 may split the current coding unit 600 into a plurality of coding units 620a, 620b, and 620c, and may select one of the coding units 620a, 620b, and 620c based on a certain criterion. For example, the image decoding apparatus 100 may select the coding unit 620b, which has a size different from that of the others, from among the coding units 620a, 620b, and 620c.

According to an embodiment of the present disclosure, the image decoding apparatus 100 may determine the width or height of each of the coding units 620a, 620b, and 620c by using the coordinates (xa, ya) that are the information indicating the location of the upper left sample 630a of the upper coding unit 620a, the coordinates (xb, yb) that are the information indicating the location of the upper left sample 630b of the middle coding unit 620b, and the coordinates (xc, yc) that are the information indicating the location of the upper left sample 630c of the lower coding unit 620c. The image decoding apparatus 100 may determine the respective sizes of the coding units 620a, 620b, and 620c by using the coordinates (xa, ya), (xb, yb), and (xc, yc) indicating the locations of the coding units 620a, 620b, and 620c. According to an embodiment of the present disclosure, the image decoding apparatus 100 may determine the width of the upper coding unit 620a to be the width of the current coding unit 600. The image decoding apparatus 100 may determine the height of the upper coding unit 620a to be yb-ya. According to an embodiment of the present disclosure, the image decoding apparatus 100 may determine the width of the middle coding unit 620b to be the width of the current coding unit 600. The image decoding apparatus 100 may determine the height of the middle coding unit 620b to be yc-yb. According to an embodiment of the present disclosure, the image decoding apparatus 100 may determine the width or height of the lower coding unit 620c by using the width or height of the current coding unit 600 and the widths or heights of the upper and middle coding units 620a and 620b. The image decoding apparatus 100 may determine a coding unit, which has a size different from that of the others, based on the determined widths and heights of the coding units 620a, 620b, and 620c. Referring to FIG. 6, the image decoding apparatus 100 may determine the middle coding unit 620b, which has a size different from the size of the upper and lower coding units 620a and 620c, as the coding unit of the certain location. However, the above-described process in which the image decoding apparatus 100 determines a coding unit having a size different from the size of the other coding units merely corresponds to an example of determining a coding unit at a certain location by using the sizes of coding units, which are determined based on coordinates of samples, and thus various processes of determining a coding unit at a certain location by comparing the sizes of coding units, which are determined based on coordinates of certain samples, may be used.

The image decoding apparatus 100 may determine the width or height of each of the coding units 660a, 660b, and 660c by using coordinates (xd, yd) that are information indicating a location of an upper left sample 670a of the left coding unit 660a, coordinates (xe, ye) that are information indicating a location of an upper left sample 670b of the middle coding unit 660b, and coordinates (xf, yf) that are information indicating a location of an upper left sample 670c of the right coding unit 660c. The image decoding apparatus 100 may determine the respective sizes of the coding units 660a, 660b, and 660c by using the coordinates (xd, yd), (xe, ye), and (xf, yf) indicating the locations of the coding units 660a, 660b, and 660c.

According to an embodiment of the present disclosure, the image decoding apparatus 100 may determine the width of the left coding unit 660a to be xe-xd. The image decoding apparatus 100 may determine the height of the left coding unit 660a to be the height of the current coding unit 650. According to an embodiment of the present disclosure, the image decoding apparatus 100 may determine the width of the middle coding unit 660b to be xf-xe. The image decoding apparatus 100 may determine the height of the middle coding unit 660b to be the height of the current coding unit 650. According to an embodiment of the present disclosure, the image decoding apparatus 100 may determine the width or height of the right coding unit 660c by using the width or height of the current coding unit 650 and the widths or heights of the left and middle coding units 660a and 660b. The image decoding apparatus 100 may determine a coding unit, which has a size different from that of the others, based on the determined widths and heights of the coding units 660a, 660b, and 660c. Referring to FIG. 6, the image decoding apparatus 100 may determine the middle coding unit 660b, which has a size different from the size of the left and right coding units 660a and 660c, as the coding unit of the certain location. However, the above-described process in which the image decoding apparatus 100 determines a coding unit having a size different from the size of the other coding units merely corresponds to an example of determining a coding unit at a certain location by using the sizes of coding units, which are determined based on coordinates of samples, and thus various processes of determining a coding unit at a certain location by comparing the sizes of coding units, which are determined based on coordinates of certain samples, may be used.

However, locations of samples considered to determine locations of coding units are not limited to the above-described upper left locations, and information about arbitrary locations of samples included in the coding units may be used.

According to an embodiment of the present disclosure, the image decoding apparatus 100 may select a coding unit at a certain location from among an odd number of coding units determined by splitting the current coding unit, by considering the shape of the current coding unit. For example, when the current coding unit has a non-square shape, a width of which is longer than a height, the image decoding apparatus 100 may determine the coding unit at the certain location in a horizontal direction. That is, the image decoding apparatus 100 may determine one of coding units at different locations in a horizontal direction and may put a restriction on the coding unit. When the current coding unit has a non-square shape, a height of which is longer than a width, the image decoding apparatus 100 may determine the coding unit at the certain location in a vertical direction. That is, the image decoding apparatus 100 may determine one of coding units at different locations in a vertical direction and may put a restriction on the coding unit.

According to an embodiment of the present disclosure, the image decoding apparatus 100 may use information indicating respective locations of an even number of coding units, to determine the coding unit at the certain location from among the even number of coding units. The image decoding apparatus 100 may determine an even number of coding units by splitting (binary splitting) the current coding unit, and may determine the coding unit at the certain location by using the information about the locations of the even number of coding units. An operation related thereto may correspond to the operation of determining a coding unit at a certain location (e.g., a center location) from among an odd number of coding units, which has been described in detail above with reference to FIG. 6, and thus detailed descriptions thereof will be omitted.

According to an embodiment of the present disclosure, when a non-square current coding unit is split into a plurality of coding units, certain information about a coding unit at a certain location may be used in a splitting operation to determine the coding unit at the certain location from among the plurality of coding units. For example, the image decoding apparatus 100 may use at least one of block shape information or split shape mode information, which is stored in a sample included in a middle coding unit, in a splitting operation to determine a coding unit at a center location from among the plurality of coding units determined by splitting the current coding unit.

Referring to FIG. 6, the image decoding apparatus 100 may split the current coding unit 600 into the plurality of coding units 620a, 620b, and 620c based on the split shape mode information, and may determine the coding unit 620b at a center location from among the plurality of the coding units 620a, 620b, and 620c. Furthermore, the image decoding apparatus 100 may determine the coding unit 620b at the center location, in consideration of a location from which the split shape mode information is obtained. That is, the split shape mode information of the current coding unit 600 may be obtained from the sample 640 at a center location of the current coding unit 600 and, when the current coding unit 600 is split into the plurality of coding units 620a, 620b, and 620c based on the split shape mode information, the coding unit 620b including the sample 640 may be determined as the coding unit at the center location. However, information used to determine the coding unit at the center location is not limited to the split shape mode information, and various types of information may be used to determine the coding unit at the center location.

According to an embodiment of the present disclosure, certain information for identifying the coding unit at the certain location may be obtained from a certain sample included in a coding unit to be determined. Referring to FIG. 6, the image decoding apparatus 100 may use the split shape mode information, which is obtained from a sample at a certain location in the current coding unit 600 (e.g., a sample at a center location of the current coding unit 600) to determine a coding unit at a certain location from among the plurality of the coding units 620a, 620b, and 620c determined by splitting the current coding unit 600 (e.g., a coding unit at a center location from among a plurality of split coding units). That is, the image decoding apparatus 100 may determine the sample at the certain location by considering a block shape of the current coding unit 600, may determine the coding unit 620b including a sample, from which certain information (e.g., the split shape mode information) may be obtained, from among the plurality of coding units 620a, 620b, and 620c determined by splitting the current coding unit 600, and may put a certain restriction on the coding unit 620b. Referring to FIG. 6, according to an embodiment of the present disclosure, the image decoding apparatus 100 may determine the sample 640 at the center location of the current coding unit 600 as the sample from which the certain information may be obtained, and may put a certain restriction on the coding unit 620b including the sample 640, in a decoding process. However, the location of the sample from which the certain information may be obtained is not limited to the above-described location, and may include arbitrary locations of samples included in the coding unit 620b to be determined for a restriction.

According to an embodiment of the present disclosure, the location of the sample from which the certain information may be obtained may be determined based on the shape of the current coding unit 600. According to an embodiment of the present disclosure, the block shape information may indicate whether the current coding unit has a square or non-square shape, and the location of the sample from which the certain information may be obtained may be determined based on the shape. For example, the image decoding apparatus 100 may determine a sample located at a boundary for splitting at least one of a width and a height of the current coding unit in half, as the sample from which the certain information may be obtained, by using at least one of information about the width of the current coding unit and information about the height of the current coding unit. As another example, when the block shape information of the current coding unit indicates a non-square shape, the image decoding apparatus 100 may determine one of samples adjacent to a boundary for splitting a long side of the current coding unit in half, as the sample from which the certain information may be obtained.

According to an embodiment of the present disclosure, when the current coding unit is split into a plurality of coding units, the image decoding apparatus 100 may use the split shape mode information to determine a coding unit at a certain location from among the plurality of coding units. According to an embodiment of the present disclosure, the image decoding apparatus 100 may obtain the split shape mode information from a sample at a certain location in a coding unit, and may split the plurality of coding units, which are generated by splitting the current coding unit, by using the split shape mode information, which is obtained from the sample of the certain location in each of the plurality of coding units. That is, a coding unit may be recursively split based on the split shape mode information, which is obtained from the sample at the certain location in each coding unit. A process of recursively splitting a coding unit has been described above with reference to FIG. 5, and thus detailed descriptions thereof will be omitted.

According to an embodiment of the present disclosure, the image decoding apparatus 100 may determine one or more coding units by splitting the current coding unit, and may determine an order of decoding the one or more coding units, based on a certain block (e.g., the current coding unit).

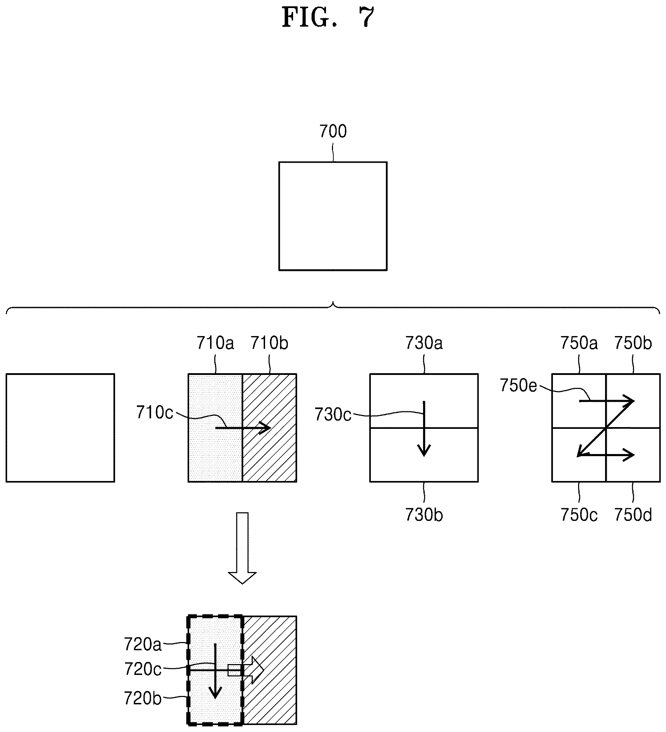

FIG. 7 illustrates an order of processing a plurality of coding units when the image decoding apparatus 100 determines the plurality of coding units by splitting a current coding unit, according to an embodiment of the present disclosure.

According to an embodiment of the present disclosure, the image decoding apparatus 100 may determine second coding units 710a and 710b by splitting a first coding unit 700 in a vertical direction, may determine second coding units 730a and 730b by splitting the first coding unit 700 in a horizontal direction, or may determine second coding units 750a, 750b, 750c, and 750d by splitting the first coding unit 700 in vertical and horizontal directions, based on split shape mode information.

Referring to FIG. 7, the image decoding apparatus 100 may determine to process the second coding units 710a and 710b, which are determined by splitting the first coding unit 700 in a vertical direction, in a horizontal direction order 710c. The image decoding apparatus 100 may determine to process the second coding units 730a and 730b, which are determined by splitting the first coding unit 700 in a horizontal direction, in a vertical direction order 730c. The image decoding apparatus 100 may determine to process the second coding units 750a, 750b, 750c, and 750d, which are determined by splitting the first coding unit 700 in vertical and horizontal directions, according to a certain order (e.g., a raster scan order or Z-scan order 750e) by which coding units in a row are processed and then coding units in a next row are processed.

According to an embodiment of the present disclosure, the image decoding apparatus 100 may recursively split coding units. Referring to FIG. 7, the image decoding apparatus 100 may determine the plurality of coding units 710a and 710b, 730a and 730b, or 750a, 750b, 750c, and 750d by splitting the first coding unit 700, and may recursively split each of the determined plurality of coding units 710a, 710b, 730a, 730b, 750a, 750b, 750c, and 750d. A splitting method of the plurality of coding units 710a and 710b, 730a and 730b, or 750a, 750b, 750c, and 750d may correspond to a splitting method of the first coding unit 700. Accordingly, each of the plurality of coding units 710a and 710b, 730a and 730b, or 750a, 750b, 750c, and 750d may be independently split into a plurality of coding units. Referring to FIG. 7, the image decoding apparatus 100 may determine the second coding units 710a and 710b by splitting the first coding unit 700 in a vertical direction, and may determine to independently split or not to split each of the second coding units 710a and 710b.

According to an embodiment of the present disclosure, the image decoding apparatus 100 may determine third coding units 720a and 720b by splitting the left second coding unit 710a in a horizontal direction, and may not split the right second coding unit 710b.

According to an embodiment of the present disclosure, a processing order of coding units may be determined based on a process of splitting a coding unit. In other words, a processing order of split coding units may be determined based on a processing order of coding units immediately before being split. The image decoding apparatus 100 may determine a processing order of the third coding units 720a and 720b determined by splitting the left second coding unit 710a, independently of the right second coding unit 710b. Because the third coding units 720a and 720b are determined by splitting the left second coding unit 710a in a horizontal direction, the third coding units 720a and 720b may be processed in a vertical direction order 720c. Because the left and right second coding units 710a and 710b are processed in the horizontal direction order 710c, the right second coding unit 710b may be processed after the third coding units 720a and 720b included in the left second coding unit 710a are processed in the vertical direction order 720c. A process of determining a processing order of coding units based on a coding unit before being split is not limited to the above-described example, and various methods may be used to independently process coding units, which are split and determined to various shapes, in a certain order.

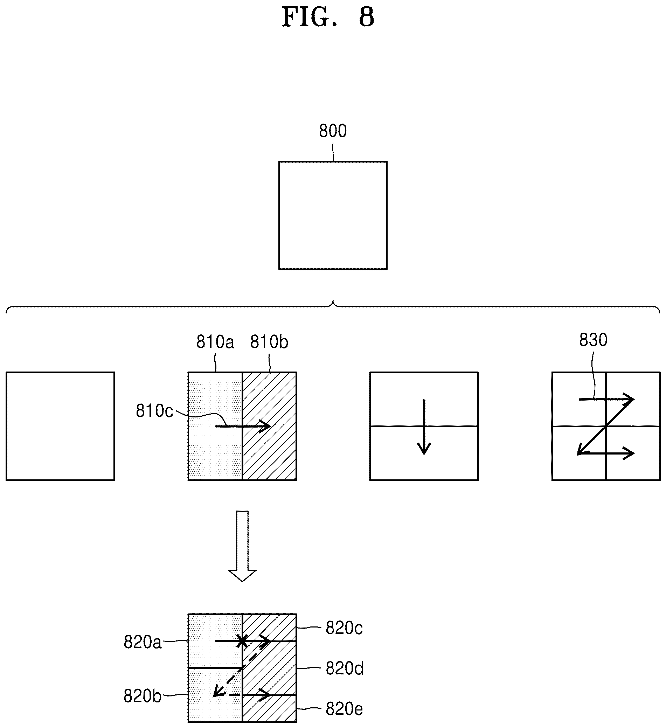

FIG. 8 illustrates a process in which the image decoding apparatus 100 determines that a current coding unit is to be split into an odd number of coding units when coding units are not processable in a certain order, according to an embodiment of the present disclosure.

According to an embodiment of the present disclosure, the image decoding apparatus 100 may determine that the current coding unit is to be split into an odd number of coding units, based on obtained split shape mode information. Referring to FIG. 8, a square first coding unit 800 may be split into non-square second coding units 810a and 810b, and the second coding units 810a and 810b may be independently split into third coding units 820a and 820b, and 820c, 820d, and 820e. According to an embodiment of the present disclosure, the image decoding apparatus 100 may determine the plurality of third coding units 820a and 820b by splitting the left second coding unit 810a in a horizontal direction, and may split the right second coding unit 810b into the odd number of third coding units 820c, 820d, and 820e.

According to an embodiment of the present disclosure, the image decoding apparatus 100 may determine whether any coding unit is split into an odd number of coding units, by determining whether the third coding units 820a and 820b, and 820c, 820d, and 820e are processable in a certain order. Referring to FIG. 8, the image decoding apparatus 100 may determine the third coding units 820a and 820b, and 820c, 820d, and 820e by recursively splitting the first coding unit 800. The image decoding apparatus 100 may determine whether any of the first coding unit 800, the second coding units 810a and 810b, or the third coding units 820a and 820b, and 820c, 820d, and 820e are split into an odd number of coding units, based on at least one of the block shape information or the split shape mode information. For example, a right coding unit from among the second coding units 810a and 810b may be split into an odd number of third coding units 820c, 820d, and 820e. A processing order of a plurality of coding units included in the first coding unit 800 may be a certain order (e.g., a Z-scan order 830), and the image decoding apparatus 100 may determine whether the third coding units 820c, 820d, and 820e, which are determined by splitting the right second coding unit 810b into an odd number of coding units, satisfy a condition for processing in the certain order.

According to an embodiment of the present disclosure, the image decoding apparatus 100 may determine whether the third coding units 820a and 820b, and 820c, 820d, and 820e included in the first coding unit 800 satisfy the condition for processing in the certain order, and the condition relates to whether at least one of a width and a height of the second coding units 810a and 810b is to be split in half along a boundary of the third coding units 820a and 820b, and 820c, 820d, and 820e. For example, the third coding units 820a and 820b determined when the height of the left second coding unit 810a of the non-square shape is split in half may satisfy the condition. It may be determined that the third coding units 820c, 820d, and 820e do not satisfy the condition because the boundaries of the third coding units 820c, 820d, and 820e determined when the right second coding unit 810b is split into three coding units are unable to split the width or height of the right second coding unit 810b in half. When the condition is not satisfied as described above, the image decoding apparatus 100 may decide disconnection of a scan order, and may determine that the right second coding unit 810b is to be split into an odd number of coding units, based on a result of the decision. According to an embodiment of the present disclosure, when a coding unit is split into an odd number of coding units, the image decoding apparatus 100 may put a certain restriction on a coding unit at a certain location from among the split coding units, and the restriction or the certain location has been described above through an embodiment of the present disclosure, and thus detailed descriptions thereof will be omitted.

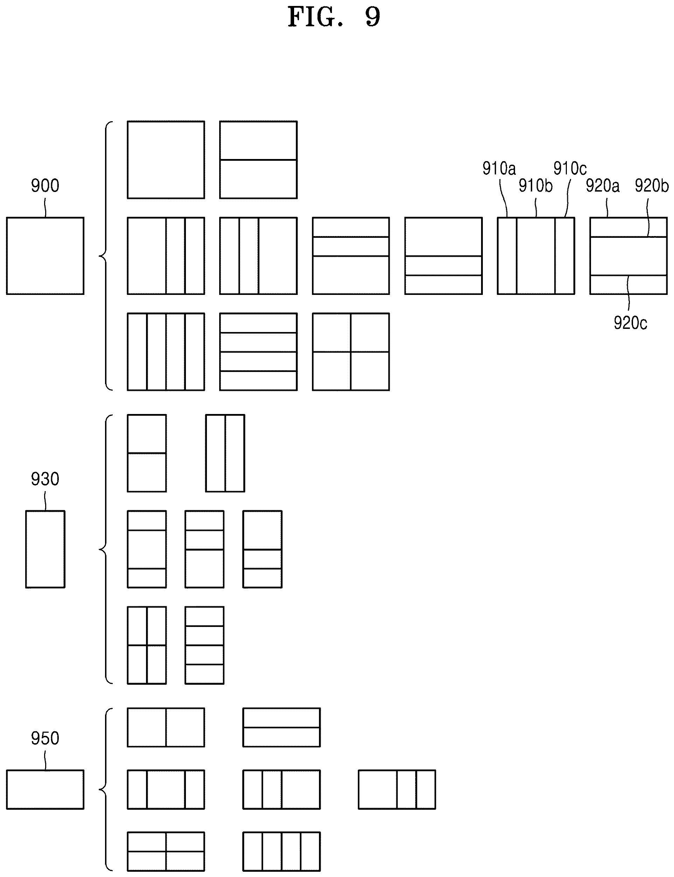

FIG. 9 illustrates a process in which the image decoding apparatus 100 determines at least one coding unit by splitting a first coding unit 900, according to an embodiment of the present disclosure.

According to an embodiment of the present disclosure, the image decoding apparatus 100 may split the first coding unit 900, based on split shape mode information, which is obtained by the bitstream obtainer 110. The square first coding unit 900 may be split into four square coding units, or may be split into a plurality of non-square coding units. For example, referring to FIG. 9, when the first coding unit 900 has a square shape and the split shape mode information indicates to split the first coding unit 900 into non-square coding units, the image decoding apparatus 100 may split the first coding unit 900 into a plurality of non-square coding units. In detail, when the split shape mode information indicates to determine an odd number of coding units by splitting the first coding unit 900 in a horizontal direction or a vertical direction, the image decoding apparatus 100 may split the square first coding unit 900 into an odd number of coding units, e.g., second coding units 910a, 910b, and 910c determined by splitting the square first coding unit 900 in a vertical direction or second coding units 920a, 920b, and 920c determined by splitting the square first coding unit 900 in a horizontal direction.

According to an embodiment of the present disclosure, the image decoding apparatus 100 may determine whether the second coding units 910a, 910b, 910c, 920a, 920b, and 920c included in the first coding unit 900 satisfy a condition for processing in a certain order, and the condition relates to whether at least one of a width and a height of the first coding unit 900 is to be split in half along a boundary of the second coding units 910a, 910b, 910c, 920a, 920b, and 920c. Referring to FIG. 9, because boundaries of the second coding units 910a, 910b, and 910c determined by splitting the square first coding unit 900 in a vertical direction do not split the width of the first coding unit 900 in half, it may be determined that the first coding unit 900 does not satisfy the condition for processing in the certain order. Also, because boundaries of the second coding units 920a, 920b, and 920c determined by splitting the square first coding unit 900 in a horizontal direction do not split the height of the first coding unit 900 in half, it may be determined that the first coding unit 900 does not satisfy the condition for processing in the certain order. When the condition is not satisfied as described above, the image decoding apparatus 100 may decide disconnection of a scan order, and may determine that the first coding unit 900 is to be split into an odd number of coding units, based on a result of the decision. According to an embodiment of the present disclosure, when a coding unit is split into an odd number of coding units, the image decoding apparatus 100 may put a certain restriction on a coding unit at a certain location from among the split coding units, and the restriction or the certain location has been described above through an embodiment of the present disclosure, and thus detailed descriptions thereof will be omitted.

According to an embodiment of the present disclosure, the image decoding apparatus 100 may determine various-shaped coding units by splitting a first coding unit.

Referring to FIG. 9, the image decoding apparatus 100 may split the square first coding unit 900 or a non-square first coding unit 930 or 950 into various-shaped coding units.

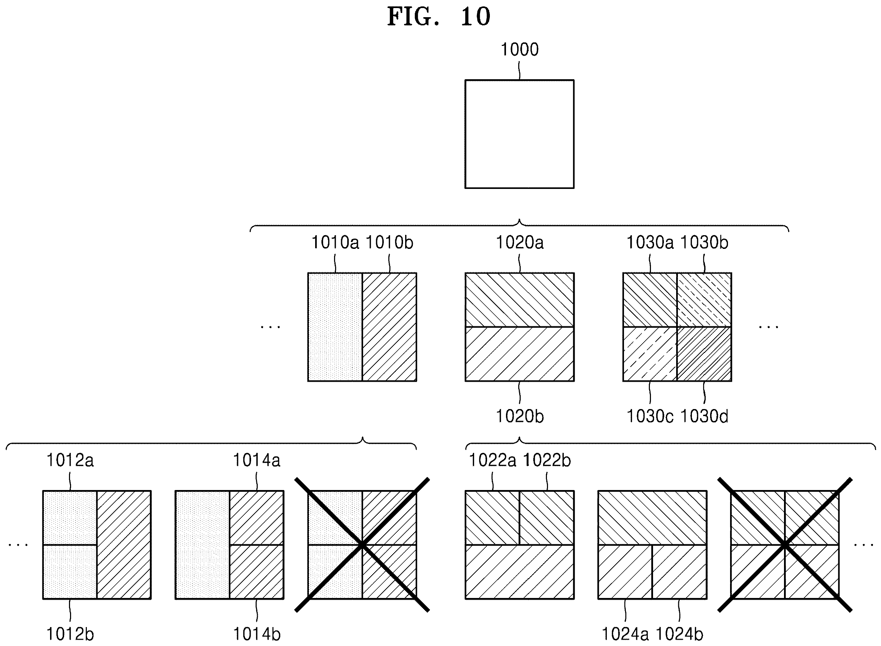

FIG. 10 illustrates that a shape into which a second coding unit is splittable is restricted when the second coding unit having a non-square shape, which is determined when the image decoding apparatus 100 splits a first coding unit 1000, satisfies a certain condition, according to an embodiment of the present disclosure.

According to an embodiment of the present disclosure, the image decoding apparatus 100 may determine to split the square first coding unit 1000 into non-square second coding units 1010a and 1010b, or 1020a and 1020b, based on split shape mode information, which is obtained by the bitstream obtainer 110. The second coding units 1010a and 1010b, or 1020a and 1020b may be independently split. Accordingly, the image decoding apparatus 100 may determine to split or not to split each of the second coding units 1010a and 1010b, or 1020a and 1020b into a plurality of coding units, based on the split shape mode information of each of the second coding units 1010a and 1010b, or 1020a and 1020b. According to an embodiment of the present disclosure, the image decoding apparatus 100 may determine third coding units 1012a and 1012b by splitting the non-square left second coding unit 1010a, which is determined by splitting the first coding unit 1000 in a vertical direction, in a horizontal direction. However, when the left second coding unit 1010a is split in a horizontal direction, the image decoding apparatus 100 may restrict the right second coding unit 1010b not to be split in a horizontal direction in which the left second coding unit 1010a is split. When third coding units 1014a and 1014b are determined by splitting the right second coding unit 1010b in the same direction, because the left and right second coding units 1010a and 1010b are independently split in a horizontal direction, the third coding units 1012a, 1012b, 1014a, and 1014b may be determined. However, this case serves equally as a case in which the image decoding apparatus 100 splits the first coding unit 1000 into four square second coding units 1030a, 1030b, 1030c, and 1030d, based on the split shape mode information, and may be inefficient in terms of image decoding.

According to an embodiment of the present disclosure, the image decoding apparatus 100 may determine third coding units 1022a and 1022b, or 1024a and 1024b by splitting the non-square second coding unit 1020a or 1020b, which is determined by splitting the first coding unit 1000 in a horizontal direction, in a vertical direction. However, when a second coding unit (e.g., the upper second coding unit 1020a) is split in a vertical direction, for the above-described reason, the image decoding apparatus 100 may restrict the other second coding unit (e.g., the lower second coding unit 1020b) not to be split in a vertical direction in which the upper second coding unit 1020a is split.

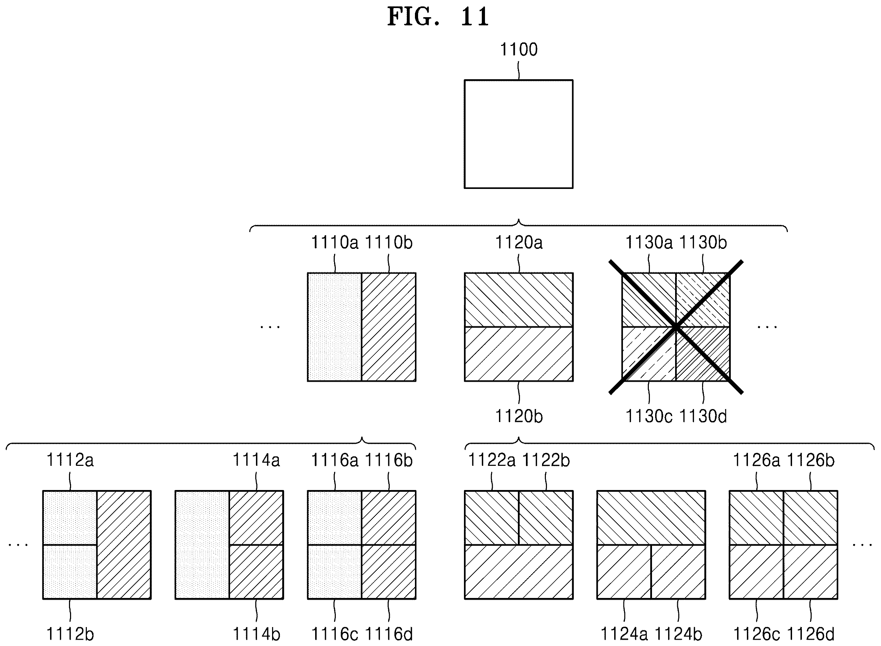

FIG. 11 illustrates a process in which the image decoding apparatus 100 splits a square coding unit when split shape mode information indicates that the square coding unit is not to be split into four square coding units, according to an embodiment of the present disclosure.

According to an embodiment of the present disclosure, the image decoding apparatus 100 may determine second coding units 1110a and 1110b, or 1120a and 1120b, etc. by splitting a first coding unit 1100, based on split shape mode information. The split shape mode information may include information about various methods of splitting a coding unit, but the information about various splitting methods may not include information for splitting a coding unit into four square coding units. According to such split shape mode information, the image decoding apparatus 100 may not split the square first coding unit 1100 into four square second coding units 1130a, 1130b, 1130c, and 1130d. The image decoding apparatus 100 may determine the non-square second coding units 1110a and 1110b, or 1120a and 1120b, etc., based on the split shape mode information.

According to an embodiment of the present disclosure, the image decoding apparatus 100 may independently split the non-square second coding units 1110a and 1110b, or 1120a and 1120b, etc. Each of the second coding units 1110a and 1110b, or 1120a and 1120b, etc. may be recursively split in a certain order, and this splitting method may correspond to a method of splitting the first coding unit 1100, based on the split shape mode information.

For example, the image decoding apparatus 100 may determine square third coding units 1112a and 1112b by splitting the left second coding unit 1110a in a horizontal direction, and may determine square third coding units 1114a and 1114b by splitting the right second coding unit 1110b in a horizontal direction. Furthermore, the image decoding apparatus 100 may determine square third coding units 1116a, 1116b, 1116c, and 1116d by splitting both of the left and right second coding units 1110a and 1110b in a horizontal direction. In this case, coding units having the same shape as the four square second coding units 1130a, 1130b, 1130c, and 1130d split from the first coding unit 1100 may be determined.

As another example, the image decoding apparatus 100 may determine square third coding units 1122a and 1122b by splitting the upper second coding unit 1120a in a vertical direction, and may determine square third coding units 1124a and 1124b by splitting the lower second coding unit 1120b in a vertical direction. Furthermore, the image decoding apparatus 100 may determine square third coding units 1126a, 1126b, 1126c, and 1126d by splitting both the upper and lower second coding units 1120a and 1120b in a vertical direction. In this case, coding units having the same shape as the four square second coding units 1130a, 1130b, 1130c, and 1130d split from the first coding unit 1100 may be determined.

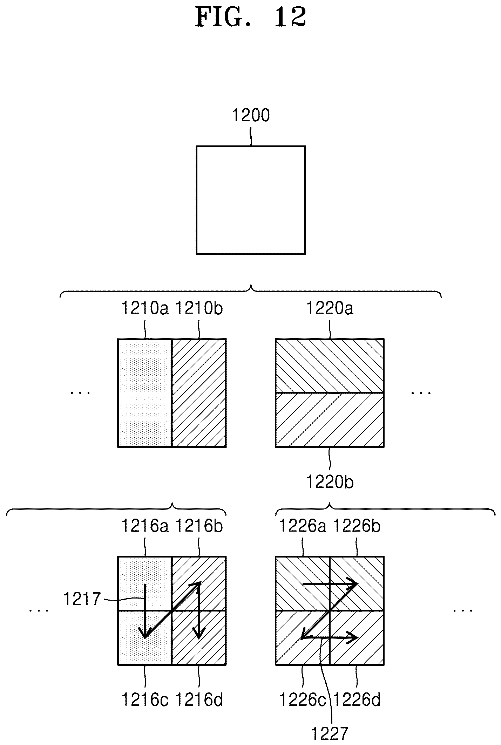

FIG. 12 illustrates that a processing order between a plurality of coding units may vary according to a process of splitting a coding unit, according to an embodiment of the present disclosure.

According to an embodiment of the present disclosure, the image decoding apparatus 100 may split a first coding unit 1200, based on split shape mode information. When a block shape indicates a square shape and the split shape mode information indicates to split the first coding unit 1200 in at least one of a horizontal direction and a vertical direction, the image decoding apparatus 100 may determine second coding units (e.g., 1210a and 1210b, or 1220a and 1220b, etc.) by splitting the first coding unit 1200. Referring to FIG. 12, the non-square second coding units 1210a and 1210b, or 1220a and 1220b determined by splitting the first coding unit 1200 in only a horizontal direction or vertical direction may be independently split based on the split shape mode information of each coding unit. For example, the image decoding apparatus 100 may determine third coding units 1216a, 1216b, 1216c, and 1216d by splitting the second coding units 1210a and 1210b, which are generated by splitting the first coding unit 1200 in a vertical direction, in a horizontal direction, and may determine third coding units 1226a, 1226b, 1226c, and 1226d by splitting the second coding units 1220a and 1220b, which are generated by splitting the first coding unit 1200 in a horizontal direction, in a vertical direction. A process of splitting the second coding units 1210a and 1210b, or 1220a and 1220b has been described above with reference to FIG. 11, and thus detailed descriptions thereof will be omitted.

According to an embodiment of the present disclosure, the image decoding apparatus 100 may process coding units in a certain order. An operation of processing coding units in a certain order has been described above with reference to FIG. 7, and thus detailed descriptions thereof will be omitted. Referring to FIG. 12, the image decoding apparatus 100 may determine four square third coding units 1216a, 1216b, 1216c, and 1216d, and 1226a, 1226b, 1226c, and 1226d by splitting the square first coding unit 1200. According to an embodiment of the present disclosure, the image decoding apparatus 100 may determine processing orders of the third coding units 1216a, 1216b, 1216c, and 1216d, and 1226a, 1226b, 1226c, and 1226d based on a split shape into which the first coding unit 1200 is split.

According to an embodiment of the present disclosure, the image decoding apparatus 100 may determine the third coding units 1216a, 1216b, 1216c, and 1216d by splitting the second coding units 1210a and 1210b generated by splitting the first coding unit 1200 in a vertical direction, in a horizontal direction, and may process the third coding units 1216a, 1216b, 1216c, and 1216d in a processing order 1217 for initially processing the third coding units 1216a and 1216c, which are included in the left second coding unit 1210a, in a vertical direction and then processing the third coding unit 1216b and 1216d, which are included in the right second coding unit 1210b, in a vertical direction.

According to an embodiment of the present disclosure, the image decoding apparatus 100 may determine the third coding units 1226a, 1226b, 1226c, and 1226d by splitting the second coding units 1220a and 1220b generated by splitting the first coding unit 1200 in a horizontal direction, in a vertical direction, and may process the third coding units 1226a, 1226b, 1226c, and 1226d in a processing order 1227 for initially processing the third coding units 1226a and 1226b, which are included in the upper second coding unit 1220a, in a horizontal direction and then processing the third coding unit 1226c and 1226d, which are included in the lower second coding unit 1220b, in a horizontal direction.

Referring to FIG. 12, the square third coding units 1216a, 1216b, 1216c, and 1216d, and 1226a, 1226b, 1226c, and 1226d may be determined by splitting the second coding units 1210a and 1210b, and 1220a and 1220b, respectively. Although the second coding units 1210a and 1210b are determined by splitting the first coding unit 1200 in a vertical direction differently from the second coding units 1220a and 1220b which are determined by splitting the first coding unit 1200 in a horizontal direction, the third coding units 1216a, 1216b, 1216c, and 1216d, and 1226a, 1226b, 1226c, and 1226d split therefrom eventually show same-shaped coding units split from the first coding unit 1200. As such, by recursively splitting a coding unit in different manners based on the split shape mode information, the image decoding apparatus 100 may process a plurality of coding units in different orders even when the coding units are eventually determined to have the same shape.

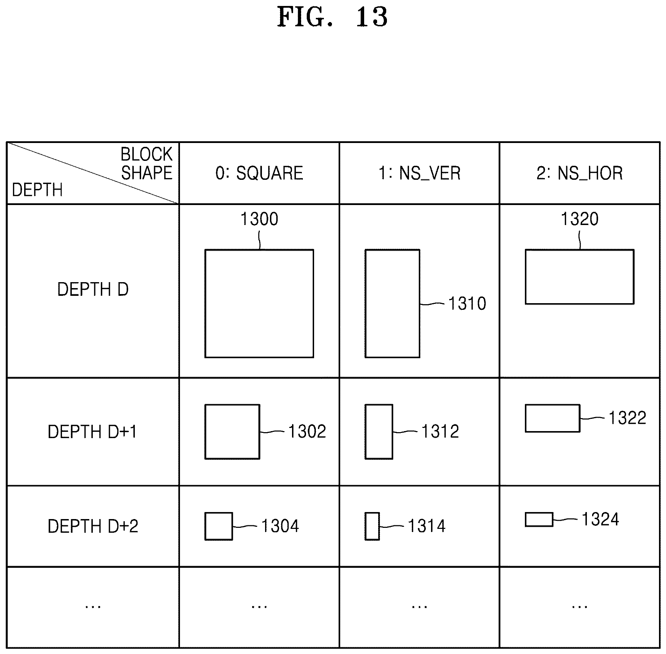

FIG. 13 illustrates a process of determining a depth of a coding unit as a shape and a size of the coding unit change, when the coding unit is recursively split to determine a plurality of coding units, according to an embodiment of the present disclosure.

According to an embodiment of the present disclosure, the image decoding apparatus 100 may determine a depth of a coding unit, based on a certain criterion. For example, the certain criterion may be the length of a long side of the coding unit. When the length of a long side of a coding unit before being split is 2n times (n>0) the length of a long side of a split current coding unit, the image decoding apparatus 100 may determine that a depth of the current coding unit is increased from a depth of the coding unit before being split, by n. In the following descriptions, a coding unit having an increased depth is represented as a coding unit of a lower depth.

Referring to FIG. 13, according to an embodiment of the present disclosure, the image decoding apparatus 100 may determine a second coding unit 1302 and a third coding unit 1304 of lower depths by splitting a square first coding unit 1300 based on block shape information indicating a square shape (e.g., the block shape information may be represented as '0: SQUARE'). Assuming that the size of the square first coding unit 1300 is $2N \times 2N$, the second coding unit 1302 determined by splitting a width and a height of the first coding unit 1300 in 1/2 may have a size of $N \times N$. Furthermore, the third coding unit 1304 determined by splitting a width and a height of the second coding unit 1302 in 1/2 may have a size of $N/2 \times N/2$. In this case, a width and a height of the third coding unit 1304 are 1/4 times those of the first coding unit 1300. When a depth of the first coding unit 1300 is D, a depth of the second coding unit 1302, the width and the height of which are 1/2 times those of the first coding unit 1300, may be D+1, and a depth of the third coding unit 1304, the width and the height of which are 1/4 times those of the first coding unit 1300, may be D+2.

According to an embodiment of the present disclosure, the image decoding apparatus 100 may determine a second coding unit 1312 or 1322 and a third coding unit 1314 or 1324 of lower depths by splitting a non-square first coding unit 1310 or 1320 based on block shape information indicating a non-square shape (e.g., the block shape information may be represented as '1: NS_VER' indicating a non-square shape, a height of which is longer than a width, or as '2: NS_HOR' indicating a non-square shape, a width of which is longer than a height).

The image decoding apparatus 100 may determine the second coding unit 1302, 1312, or 1322 by splitting at least one of a width and a height of the first coding unit 1310 having a size of $N \times 2N$. That is, the image decoding apparatus 100 may determine the second coding unit 1302 having a size of $N \times N$ or the second coding unit 1322 having a size of $N \times N/2$ by splitting the first coding unit 1310 in a horizontal direction, or may determine the second coding unit 1312 having a size of $N/2 \times N$ by splitting the first coding unit 1310 in horizontal and vertical directions.

According to an embodiment of the present disclosure, the image decoding apparatus 100 may determine a second coding unit (e.g., 1302, 1312, or 1322) by splitting at least one of a width and a height of the first coding unit 1320 having a size of $2N \times N$. That is, the image decoding apparatus 100 may determine the second coding unit 1302 having a size of $N \times N$ or the second coding unit 1312 having a size of $N/2 \times N$ by splitting the first coding unit 1320 in a vertical direction, or may determine the second coding unit 1322 having a size of $N \times N/2$ by splitting the first coding unit 1320 in horizontal and vertical directions.

According to an embodiment of the present disclosure, the image decoding apparatus 100 may determine a third coding unit (e.g., 1304, 1314, or 1324) by splitting at least one of a width and a height of the second coding unit 1302 having a size of $N \times N$. That is, the image decoding apparatus 100 may determine the third coding unit 1304 having a size of $N/2 \times N/2$, the third coding unit 1314 having a size of $N/4 \times N/2$, or the third coding unit 1324 having a size of $N/2 \times N/4$ by splitting the second coding unit 1302 in vertical and horizontal directions.

According to an embodiment of the present disclosure, the image decoding apparatus 100 may determine a third coding unit (e.g., 1304, 1314, or 1324) by splitting at least one of a width and a height of the second coding unit 1312 having a size of $N/2 \times N$. That is, the image decoding apparatus 100 may determine the third coding unit 1304 having a size of $N/2 \times N/2$ or the third coding unit 1324 having a size of $N/2 \times N/4$ by splitting the second coding unit 1312 in a horizontal direction, or may determine the third coding unit 1314 having a size of N/4×N/2 by splitting the second coding unit 1312 in vertical and horizontal directions.

According to an embodiment of the present disclosure, the image decoding apparatus 100 may determine a third coding unit (e.g., 1304, 1314, or 1324) by splitting at least one of a width and a height of the second coding unit 1322 having a size of N×N/2. That is, the image decoding apparatus 100 may determine the third coding unit 1304 having a size of N/2×N/2 or the third coding unit 1314 having a size of N/4×N/2 by splitting the second coding unit 1322 in a vertical direction, or may determine the third coding unit 1324 having a size of N/2×N/4 by splitting the second coding unit 1322 in vertical and horizontal directions.

According to an embodiment of the present disclosure, the image decoding apparatus 100 may split a square coding unit (e.g., 1300, 1302, or 1304) in a horizontal or vertical direction. For example, the image decoding apparatus 100 may determine the first coding unit 1310 having a size of N×2N by splitting the first coding unit 1300 having a size of 2N×2N in a vertical direction, or may determine the first coding unit 1320 having a size of 2N×N by splitting the first coding unit 1300 in a horizontal direction. According to an embodiment of the present disclosure, when a depth is determined based on the length of a longest side of a coding unit, a depth of a coding unit determined by splitting the first coding unit 1300 having a size of 2N×2N in a horizontal or vertical direction may be the same as the depth of the first coding unit 1300.

According to an embodiment of the present disclosure, a width and a height of the third coding unit 1314 or 1324 may be 1/4 times those of the first coding unit 1310 or 1320. When a depth of the first coding unit 1310 or 1320 is D, a depth of the second coding unit 1312 or 1322, the width and the height of which are 1/2 times those of the first coding unit 1310 or 1320, may be D+1, and a depth of the third coding unit 1314 or 1324, the width and the height of which are 1/4 times those of the first coding unit 1310 or 1320, may be D+2.

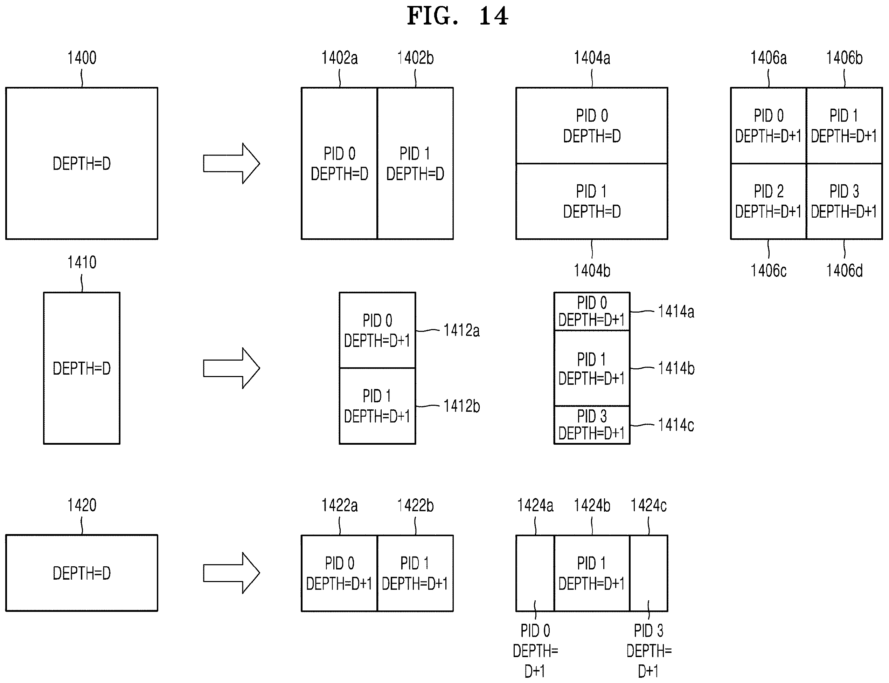

FIG. 14 illustrates depths that are determinable based on shapes and sizes of coding units, and part indexes (PIDs) that are for distinguishing the coding units, according to an embodiment of the present disclosure.

According to an embodiment of the present disclosure, the image decoding apparatus 100 may determine various-shaped second coding units by splitting a square first coding unit 1400. Referring to FIG. 14, the image decoding apparatus 100 may determine second coding units 1402a and 1402b, 1404a and 1404b, and 1406a, 1406b, 1406c, and 1406d by splitting the first coding unit 1400 in at least one of a vertical direction and a horizontal direction based on split shape mode information. That is, the image decoding apparatus 100 may determine the second coding units 1402a and 1402b, 1404a and 1404b, and 1406a, 1406b, 1406c, and 1406d, based on the split shape mode information of the first coding unit 1400.

According to an embodiment of the present disclosure, depths of the second coding units 1402a and 1402b, 1404a and 1404b, and 1406a, 1406b, 1406c, and 1406d that are determined based on the split shape mode information of the square first coding unit 1400 may be determined based on the length of a long side thereof. For example, because the length of a side of the square first coding unit 1400 equals the length of a long side of the non-square second coding units 1402a and 1402b, and 1404a and 1404b, the first coding unit 1400 and the non-square second coding units 1402a and 1402b, and 1404a and 1404b may have the same depth, e.g., D. However, when the image decoding apparatus 100 splits the first coding unit 1400 into the four square second coding units 1406a, 1406b, 1406c, and 1406d based on the split shape mode information, because the length of a side of the square second coding units 1406a, 1406b, 1406c, and 1406d is 1/2 times the length of a side of the first coding unit 1400, a depth of the second coding units 1406a, 1406b, 1406c, and 1406d may be D+1 which is deeper than the depth D of the first coding unit 1400 by 1.

According to an embodiment of the present disclosure, the image decoding apparatus 100 may determine a plurality of second coding units 1412a and 1412b, and 1414a, 1414b, and 1414c by splitting a first coding unit 1410, a height of which is longer than a width, in a horizontal direction based on the split shape mode information. According to an embodiment of the present disclosure, the image decoding apparatus 100 may determine a plurality of second coding units 1422a and 1422b, and 1424a, 1424b, and 1424c by splitting a first coding unit 1420, a width of which is longer than a height, in a vertical direction based on the split shape mode information.

According to an embodiment of the present disclosure, a depth of the second coding units 1412a and 1412b, and 1414a, 1414b, and 1414c, or 1422a and 1422b, and 1424a, 1424b, and 1424c, which are determined based on the split shape mode information of the non-square first coding unit 1410 or 1420, may be determined based on the length of a long side thereof. For example, because the length of a side of the square second coding units 1412a and 1412b is 1/2 times the length of a long side of the first coding unit 1410 having a non-square shape, a height of which is longer than a width, a depth of the square second coding units 1412a and 1412b is D+1 which is deeper than the depth D of the non-square first coding unit 1410 by 1.

Furthermore, the image decoding apparatus 100 may split the non-square first coding unit 1410 into an odd number of second coding units 1414a, 1414b, and 1414c based on the split shape mode information. The odd number of second coding units 1414a, 1414b, and 1414c may include the non-square second coding units 1414a and 1414c and the square second coding unit 1414b. In this case, because the length of a long side of the non-square second coding units 1414a and 1414c and the length of a side of the square second coding unit 1414b are 1/2 times the length of a long side of the first coding unit 1410, a depth of the second coding units 1414a, 1414b, and 1414c may be D+1 which is deeper than the depth D of the non-square first coding unit 1410 by 1. The image decoding apparatus 100 may determine depths of coding units split from the first coding unit 1420 having a non-square shape, a width of which is longer than a height, by using the above-described method of determining depths of coding units split from the first coding unit 1410.

According to an embodiment of the present disclosure, the image decoding apparatus 100 may determine PIDs for identifying split coding units, based on a size ratio between the coding units when an odd number of split coding units do not have the same size. Referring to FIG. 14, the coding unit 1414b of a center location among an odd number of split coding units 1414a, 1414b, and 1414c may have a width equal to that of the other coding units 1414a and 1414c and a height which is two times that of the other coding units 1414a and 1414c. That is, in this case, the coding unit 1414b at the center location may include two of the other coding unit 1414a or 1414c. Accordingly, when a PID of the coding unit 1414b at the center location is 1 based on a scan order, a PID of the coding unit 1414c located next to the coding unit 1414b may be increased by 2 and thus may be 3. That is, discontinuity in PID values may be present. According to an embodiment of the present disclosure, the image decoding apparatus 100 may determine whether an odd number of split coding units do not have the same size, based on whether discontinuity is present in PIDs for identifying the split coding units.

According to an embodiment of the present disclosure, the image decoding apparatus 100 may determine whether to use a specific splitting method, based on PID values for identifying a plurality of coding units determined by splitting a current coding unit. Referring to FIG. 14, the image decoding apparatus 100 may determine an even number of coding units 1412a and 1412b or an odd number of coding units 1414a, 1414b, and 1414c by splitting the first coding unit 1410 having a rectangular shape, a height of which is longer than a width. The image decoding apparatus 100 may use PIDs indicating respective coding units so as to identify the respective coding units. According to an embodiment of the present disclosure, the PID may be obtained from a sample at a certain location of each coding unit (e.g., an upper left sample).

According to an embodiment of the present disclosure, the image decoding apparatus 100 may determine a coding unit at a certain location from among the split coding units, by using the PIDs for distinguishing the coding units. According to an embodiment of the present disclosure, when the split shape mode information of the first coding unit 1410 having a rectangular shape, a height of which is longer than a width, indicates to split a coding unit into three coding units, the image decoding apparatus 100 may split the first coding unit 1410 into three coding units 1414a, 1414b, and 1414c. The image decoding apparatus 100 may assign a PID to each of the three coding units 1414a, 1414b, and 1414c. The image decoding apparatus 100 may compare PIDs of an odd number of split coding units to determine a coding unit at a center location from among the coding units. The image decoding apparatus 100 may determine the coding unit 1414b having a PID corresponding to a middle value among the PIDs of the coding units, as the coding unit at the center location from among the coding units determined by splitting the first coding unit 1410. According to an embodiment of the present disclosure, the image decoding apparatus 100 may determine PIDs for distinguishing split coding units, based on a size ratio between the coding units when the split coding units do not have the same size. Referring to FIG. 14, the coding unit 1414b generated by splitting the first coding unit 1410 may have a width equal to that of the other coding units 1414a and 1414c and a height which is two times that of the other coding units 1414a and 1414c. In this case, when the PID of the coding unit 1414b at the center location is 1, the PID of the coding unit 1414c located next to the coding unit 1414b may be increased by 2 and thus may be 3. When the PID is not uniformly increased as described above, the image decoding apparatus 100 may determine that a coding unit is split into a plurality of coding units including a coding unit having a size different from that of the other coding units. According to an embodiment of the present disclosure, when the split shape mode information indicates to split a coding unit into an odd number of coding units, the image decoding apparatus 100 may split a current coding unit in such a manner that a coding unit of a certain location among an odd number of coding units (e.g., a coding unit of a center location) has a size different from that of the other coding units. In this case, the image decoding apparatus 100 may determine the coding unit of the center location, which has a different size, by using PIDs of the coding units. However, the PIDs and the size or location of the coding unit of the certain location to be determined are not limited to the above-described examples, and various PIDs and various locations and sizes of coding units may be used.

According to an embodiment of the present disclosure, the image decoding apparatus 100 may use a certain data unit where a coding unit starts to be recursively split.

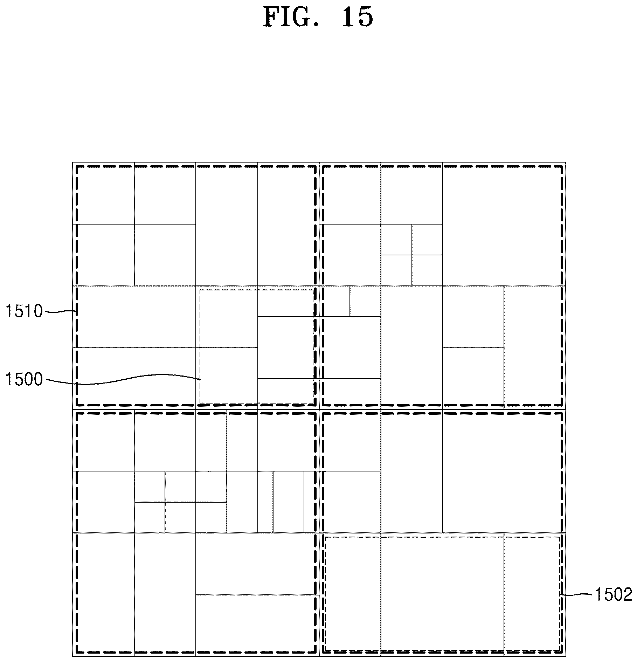

FIG. 15 illustrates that a plurality of coding units are determined based on a plurality of certain data units included in a picture, according to an embodiment of the present disclosure.

According to an embodiment of the present disclosure, a certain data unit may be defined as a data unit where a coding unit starts to be recursively split by using split shape mode information. That is, the certain data unit may correspond to a coding unit of a highest depth, which is used to determine a plurality of coding units split from a current picture. In the following descriptions, for convenience of explanation, the certain data unit is referred to as a reference data unit.

According to an embodiment of the present disclosure, the reference data unit may have a certain size and a certain shape. According to an embodiment of the present disclosure, a reference data unit may include M×N samples. Herein, M and N may be equal to each other, and may be integers represented as powers of 2. That is, the reference data unit may have a square or non-square shape, and may be split into an integer number of coding units.

According to an embodiment of the present disclosure, the image decoding apparatus 100 may split the current picture into a plurality of reference data units. According to an embodiment of the present disclosure, the image decoding apparatus 100 may split the plurality of reference data units, which are split from the current picture, by using the split shape mode information of each reference data unit. The process of splitting the reference data unit may correspond to a splitting process using a quadtree structure.

According to an embodiment of the present disclosure, the image decoding apparatus 100 may pre-determine a minimum size allowed for the reference data units included in the current picture. Accordingly, the image decoding apparatus 100 may determine reference data units having various sizes equal to or greater than the minimum size, and may determine one or more coding units by using the split shape mode information with reference to the determined reference data unit.

Referring to FIG. 15, the image decoding apparatus 100 may use a square reference coding unit 1500 or a non-square reference coding unit 1502. According to an embodiment of the present disclosure, the shape and size of reference coding units may be determined based on various data units capable of including one or more reference coding units (e.g., sequences, pictures, slices, slice segments, tiles, tile groups, largest coding units, or the like).

According to an embodiment of the present disclosure, the bitstream obtainer 110 of the image decoding apparatus 100 may obtain, from a bitstream, at least one of reference coding unit shape information or reference coding unit size information for each of the various data units. A process of splitting the square reference coding unit 1500 into one or more coding units has been described above in relation to the process of splitting the current coding unit 300 of FIG. 3, and a process of splitting the non-square reference coding unit 1502 into one or more coding units has been described above in relation to the process of splitting the current coding unit 400 or 450 of FIG. 4, and thus detailed descriptions thereof will be omitted.

According to an embodiment of the present disclosure, the image decoding apparatus 100 may use a PID for identifying the size and shape of reference coding units, to determine the size and shape of reference coding units according to some data units pre-determined based on a certain condition. That is, the bitstream obtainer 110 may obtain, from the bitstream, only the PID for identifying the size and shape of reference coding units with respect to each slice, slice segment, tile, tile group, or largest coding unit which is a data unit satisfying a certain condition (e.g., a data unit having a size equal to or smaller than a slice) among the various data units (e.g., sequences, pictures, slices, slice segments, tiles, tile groups, largest coding units, or the like). The image decoding apparatus 100 may determine the size and shape of reference data units for each data unit, which satisfies the certain condition, by using the PID. When the reference coding unit shape information and the reference coding unit size information are obtained and used from the bitstream according to each data unit having a relatively small size, the efficiency of using the bitstream may not be high, and therefore, only the PID may be obtained and used instead of directly obtaining the reference coding unit shape information and the reference coding unit size information. In this case, at least one of the size and the shape of reference coding units corresponding to the PID for identifying the size and shape of reference coding units may be pre-determined. That is, the image decoding apparatus 100 may determine at least one of the size and the shape of reference coding units included in a data unit serving as a unit for obtaining the PID, by selecting the pre-determined at least one of the size and the shape of reference coding units based on the PID.

According to an embodiment of the present disclosure, the image decoding apparatus 100 may use one or more reference coding units included in a largest coding unit 1510. That is, the largest coding unit 1510 split from an image may include one or more reference coding units, and coding units may be determined by recursively splitting each reference coding unit. According to an embodiment of the present disclosure, at least one of a width and a height of the largest coding unit 1510 may be integer times at least one of the width and the height of the reference coding units. According to an embodiment of the present disclosure, the size of reference coding units may be obtained by splitting the largest coding unit 1510 n times based on a quadtree structure. That is, the image decoding apparatus 100 may determine the reference coding units by splitting the largest coding unit 1510 n times based on a quadtree structure, and may split the reference coding unit based on at least one of the block shape information and the split shape mode information according to an embodiment of the present disclosure.

According to an embodiment of the present disclosure, the image decoding apparatus 100 may obtain block shape information indicating the shape of a current coding unit or split shape mode information indicating a splitting method of the current coding unit, from the bitstream, and may use the obtained information. The split shape mode information may be included in the bitstream related to various data units. For example, the image decoding apparatus 100 may use the split shape mode information included in a sequence parameter set, a picture parameter set, a video parameter set, a slice header, a slice segment header, a tile header, or a tile group header. Furthermore, the image decoding apparatus 100 may obtain, from the bitstream, a syntax element corresponding to the block shape information or the split shape mode information according to each largest coding unit or each reference coding unit and may use the obtained syntax element.

Hereinafter, a method of determining a split rule according to an embodiment of the present disclosure will be described in detail.

The image decoding apparatus 100 may determine a split rule of an image. The split rule may be pre-determined between the image decoding apparatus 100 and the image encoding apparatus 200. The image decoding apparatus 100 may determine the split rule of the image, based on information obtained from a bitstream. The image decoding apparatus 100 may determine the split rule based on the information obtained from at least one of a sequence parameter set, a picture parameter set, a video parameter set, a slice header, a slice segment header, a tile header, or a tile group header. The image decoding apparatus 100 may determine the split rule differently according to frames, slices, tiles, temporal layers, largest coding units, or coding units.

The image decoding apparatus 100 may determine the split rule based on a block shape of a coding unit. The block shape may include a size, a shape, a ratio of width and height, and a direction of the coding unit. The image encoding apparatus 200 and the image decoding apparatus 100 may pre-determine to determine the split rule based on the block shape of the coding unit. However, the present disclosure is not limited thereto. The image decoding apparatus 100 may determine the split rule based on the information obtained from the bitstream received from the image encoding apparatus 200.

The shape of the coding unit may include a square and a non-square. When the lengths of the width and the height of the coding unit are the same, the image decoding apparatus 100 may determine the shape of the coding unit to be a square. Also, when the lengths of the width and the height of the coding unit are not the same, the image decoding apparatus 100 may determine the shape of the coding unit to be a non-square.

The size of the coding unit may include various sizes, such as 4x4, 8x4, 4x8, 8x8, 16x4, 16x8, ... and 256x256. The size of the coding unit may be classified based on the length of a long side of the coding unit, the length of a short side, or the area. The image decoding apparatus 100 may apply the same split rule to coding units classified as the same group. For example, the image decoding apparatus 100 may classify coding units having the same lengths of long sides as having the same size. Also, the image decoding apparatus 100 may apply the same split rule to coding units having the same lengths of long sides.

The ratio of the width and the height of the coding unit may include 1:2, 2:1, 1:4, 4:1, 1:8, 8:1, 1:16, 16:1, 32:1, 1:32, or the like. Also, the direction of the coding unit may include a horizontal direction and a vertical direction. The horizontal direction may indicate a case in which the length of the width of the coding unit is longer than the length of the height thereof. The vertical direction may indicate a case in which the length of the width of the coding unit is shorter than the length of the height thereof.

The image decoding apparatus 100 may adaptively determine the split rule based on the size of the coding unit. The image decoding apparatus 100 may differently determine an allowable split shape mode based on the size of the coding unit. For example, the image decoding apparatus 100 may determine whether splitting is allowed based on the size of the coding unit. The image decoding apparatus 100 may determine a split direction according to the size of the coding unit. The image decoding apparatus 100 may determine an allowable split type according to the size of the coding unit.

The split rule determined based on the size of the coding unit may be a split rule pre-determined between the image encoding apparatus 200 and the image decoding apparatus 100. Also, the image decoding apparatus 100 may determine the split rule based on the information obtained from the bitstream.

The image decoding apparatus 100 may adaptively determine the split rule based on a location of the coding unit. The image decoding apparatus 100 may adaptively determine the split rule based on the location of the coding unit in the image.

Also, the image decoding apparatus 100 may determine the split rule so that coding units generated via different splitting paths do not have the same block shape. However, an embodiment of the present disclosure is not limited thereto, and the coding units generated via different splitting paths have the same block shape. The coding units generated via the different splitting paths may have different decoding processing orders. Because the decoding processing orders have been described above with reference to FIG. 12, detailed descriptions thereof will be omitted.

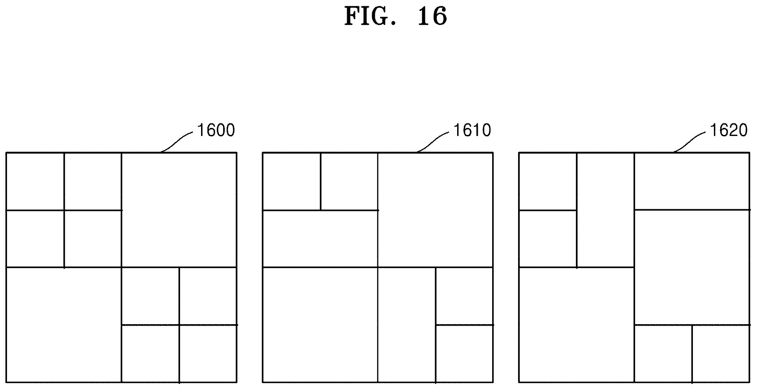

FIG. 16 illustrates coding units determinable for each picture when a combination of shapes for splitting a coding unit is different for each picture, according to an embodiment of the present disclosure.

Referring to FIG. 16, the image decoding apparatus 100 may differently determine, for each picture, a combination of split shapes for splitting a coding unit. For example, the image decoding apparatus 100 may decode an image by using, from among at least one picture included in the image, a picture 1600 splittable into 4 coding units, a picture 1610 splittable into 2 or 4 coding units, and a picture 1620 splittable into 2, 3, or 4 coding units. In order to split the picture 1600 into a plurality of coding units, the image decoding apparatus 100 may only use split shape information indicating that the picture 1600 is split into 4 square coding units. In order to split the picture 1610, the image decoding apparatus 100 may only use split shape information indicating that the picture 1610 is split into 2 or 4 coding units. In order to split the picture 1620, the image decoding apparatus 100 may only use split shape information indicating that the picture 1620 is split into 2, 3, or 4 coding units. Because such a combination of split shapes is only an embodiment for describing an operation of the image decoding apparatus 100, the combination of split shapes should not be construed as limited to the embodiment and it should be understood that various combinations of split shapes may be used for each data unit.

According to an embodiment of the present disclosure, the bitstream obtainer 110 of the image decoding apparatus 100 may obtain a bitstream including an index indicating a combination of split shape information for each data unit (e.g., sequence, picture, slice, slice segment, tile, or tile group). For example, the bitstream obtainer 110 may obtain the index indicating the combination of split shape information from a sequence parameter set, a picture parameter set, a slice header, a tile header, or a tile group header. The image decoding apparatus 100 may determine a combination of split shapes for splitting a coding unit for each data unit by using the obtained index, and thus, may use a different combination of split shapes according to each data unit.

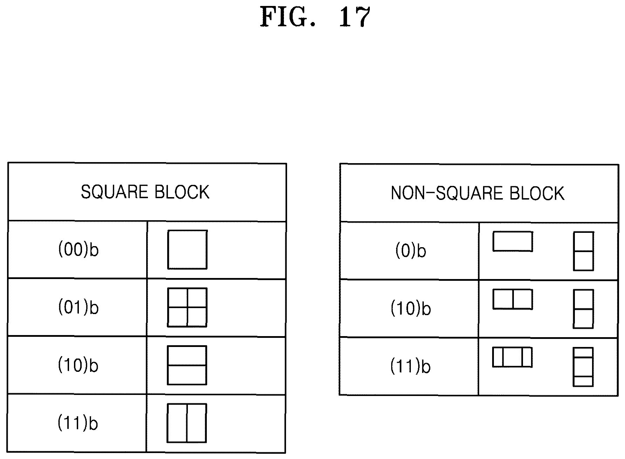

FIG. 17 illustrates various shapes of a coding unit determinable based on split shape mode information that may be represented as a binary code, according to an embodiment of the present disclosure.

According to an embodiment of the present disclosure, the image decoding apparatus 100 may split a coding unit into various shapes by using block shape information and split shape mode information obtained through the bitstream obtainer 110. Shapes for splitting a coding unit may correspond to various shapes including the shapes described through the above embodiments.

Referring to FIG. 17, the image decoding apparatus 100 may split a square coding unit in at least one of a horizontal direction and a vertical direction and may split a non-square coding unit in a horizontal direction or a vertical direction based on split shape mode information.

According to an embodiment of the present disclosure, when the image decoding apparatus 100 may split a square coding unit in a horizontal direction and a vertical direction into 4 square coding units, split shapes that may be indicated by split shape mode information for the square coding unit may be 4. According to an embodiment of the present disclosure, split shape mode information may be represented as a 2-bit binary code, and a binary code may be assigned to each split shape. For example, when a coding unit is not split, split shape mode information may be represented as (00)b, when a coding unit is split in a horizontal direction and a vertical direction, split shape mode information may be represented as (01)b, when a coding unit is split in a horizontal direction, split shape mode information may be represented as (10)b, and when a coding unit is split in a vertical direction, split shape mode information may be represented as (11)b.

According to an embodiment of the present disclosure, when the image decoding apparatus 100 splits a non-square coding unit in a horizontal direction or a vertical direction, split shapes that may be indicated by split shape mode information may be determined according to how many coding units the coding unit is split into. Referring to FIG. 17, the image decoding apparatus 100 may split a non-square coding unit into up to 3 coding units, according to an embodiment of the present disclosure. The image decoding apparatus 100 may split a coding unit into two coding units, and in this case, split shape mode information may be represented as (10)b. The image decoding apparatus 100 may split a coding unit into three coding units, and in this case, split shape mode information may be represented as (11)b. The image decoding apparatus 100 may determine not to split a coding unit, and in this case, split shape mode information may be represented as (0)b. That is, in order to use a binary code indicating split shape mode information, the image decoding apparatus 100 may use variable length coding (VLC) instead of fixed length coding (FLC).

According to an embodiment of the present disclosure, referring to FIG. 17, a binary code of split shape mode information indicating that a coding unit is not split may be represented as (0)b. When a binary code of split shape mode information indicating that a coding unit is not split is set to (00)b, binary codes of split shape mode information in 2 bits should all be used despite there is no split shape mode information set to (01)b. However, as shown in FIG. 17, when three split shapes are used for a non-square coding unit, the image decoding apparatus 100 may determine not to split a coding unit even by using a 1-bit binary code (0)b as split shape mode information, thereby efficiently using a bitstream. However, split shapes of a non-square coding unit, which are indicated by split shape mode information, should not be construed as limited to 3 shapes shown in FIG. 17, but should be understood to include various shapes including the above embodiments.

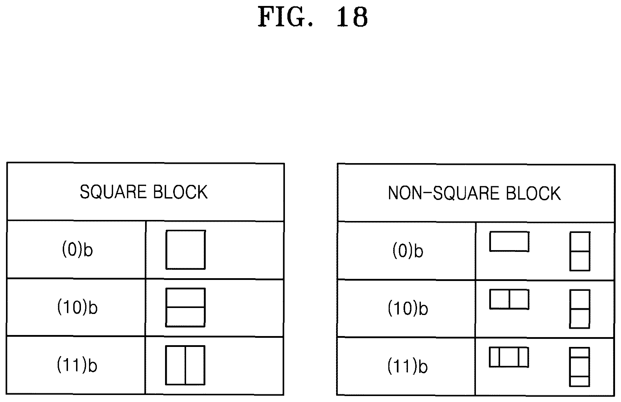

FIG. 18 illustrates other shapes of a coding unit determinable based on split shape mode information that may be represented as a binary code, according to an embodiment of the present disclosure.

Referring to FIG. 18, the image decoding apparatus 100 may split a square coding unit in a horizontal direction or a vertical direction and may split a non-square coding unit in a horizontal direction or a vertical direction based on split shape mode information. That is, split shape mode information may indicate that a square coding unit is split only in one direction. In this case, a binary code of split shape mode information indicating that a square coding unit is not split may be represented as (0)b. When a binary code of split shape mode information indicating that a coding unit is not split is set to (00)b, binary codes of split shape mode information in 2 bits should all be used despite that there is no split shape mode information set to (01)b. However, when three split shapes are used for a square coding unit as shown in FIG. 18, the image decoding apparatus 100 may determine not to split a coding unit even by using a 1-bit binary code (0)b as split shape mode information, thereby efficiently using a bitstream. However, split shapes of a square coding unit, which are indicated by split shape mode information should not be construed as limited to three shapes shown in FIG. 18, but should be understood to include various shapes including the above embodiments.

According to an embodiment of the present disclosure, block shape information or split shape mode information may be represented by using a binary code, and such information may be directly generated as a bitstream. Also, block shape information or split shape mode information that may be represented by using a binary code may be generated as a binary code input in context adaptive binary arithmetic coding (CABAC) rather than being directly generated as a bitstream.

According to an embodiment of the present disclosure, a process in which the image decoding apparatus 100 obtains a syntax for block shape information or split shape mode information through CABAC will be described. A bitstream including a binary code for the syntax may be obtained through the bitstream obtainer 110. The image decoding apparatus 100 may detect a syntax element indicting the block shape information or the split shape mode information by performing inverse-binarization on a bin string included in the obtained bitstream. According to an embodiment of the present disclosure, the image decoding apparatus 100 may obtain a set of binary bin strings corresponding to the syntax element to be decoded and may decode each bin by using probability information, and the image decoding apparatus 100 may repeat this process until a bin string including the decoded bins is the same as one of pre-obtained bin strings. The image decoding apparatus 100 may determine the syntax element by performing inverse-binarization on the bin string.

According to an embodiment of the present disclosure, the image decoding apparatus 100 may determine the syntax for the bin string by performing a decoding process of adaptive binary arithmetic coding, and the image decoding apparatus 100 may update a probability model for the bins obtained through the bitstream obtainer 110. Referring to FIG. 17, the bitstream obtainer 110 of the image decoding apparatus 100 may obtain a bitstream indicating a binary code indicating split shape mode information according to an embodiment of the present disclosure. The image decoding apparatus 100 may determine a syntax for the split shape mode information by using the obtained binary code having a size of 1 bit or 2 bits. The image decoding apparatus 100 may update a probability of each bit of the 2-bit binary code, in order to determine the syntax for the split shape mode information. That is, the image decoding apparatus 100 may update a probability of having a value of 0 or 1 when decoding a next bin, depending on whether a value of a first bin in the 2-bit binary code is 0 or 1.

According to an embodiment of the present disclosure, the image decoding apparatus 100 may update probabilities of bins used to decode the bins of the bin string for the syntax during a process of determining the syntax, and the image decoding apparatus 100 may determine that a certain bit in the bin string has the same probability without updating the probability.

Referring to FIG. 17, during a process of determining a syntax by using a bin string indicating split shape mode information about a non-square coding unit, the image decoding apparatus 100 may determine the syntax for the split shape mode information by using one bin having a value of 0 when the non-square coding unit is not split. That is, when block shape information indicates that a current coding unit has a non-square shape, a first bin of the bin string for the split shape mode information may be 0 when the non-square coding unit is not split, and may be 1 when the non-square coding unit is split into 2 or 3 coding units. Accordingly, a probability that the first bin of the bin string of the split shape mode information about the non-square coding unit is 0 may be 1/3 and a probability that the first bin is 1 may be 2/3. As described above, because the split shape mode information indicating that the non-square coding unit is not split may be represented by a 1-bit bin string having a value of 0, the image decoding apparatus 100 may determine the syntax for the split shape mode information by determining whether a second bin is 0 or 1 only when the first bin of the split shape mode information is 1. According to an embodiment of the present disclosure, when the first bin of the split shape mode information is 1, the image decoding apparatus 100 may decode the bin assuming that probabilities of the second bin being 0 or 1 are the same.

According to an embodiment of the present disclosure, the image decoding apparatus 100 may use various probabilities for each bin during a process of determining bins in the bin string for the split shape mode information. According to an embodiment of the present disclosure, the image decoding apparatus 100 may differently determine probabilities of bins for the split shape mode information according to a direction of a non-square block. According to an embodiment of the present disclosure, the image decoding apparatus 100 may differently determine probabilities of bins for the split shape mode information according to a length of a long side or a width of a current coding unit. According to an embodiment of the present disclosure, the image decoding apparatus 100 may differently determine probabilities of bins for the split shape mode information according to at least one of a length of a long side and a shape of a current coding unit.

According to an embodiment of the present disclosure, for coding units having a certain size or more, the image decoding apparatus 100 may determine that probabilities of bins for the split shape mode information are the same. For example, for coding units having a long side length of 64 samples or more, it may be determined that probabilities of bins for the split shape mode information are the same.

According to an embodiment of the present disclosure, the image decoding apparatus 100 may determine initial probabilities of bins constituting the bin string of the split shape mode information based on a slice type (e.g., I slice, P slice, or B slice).

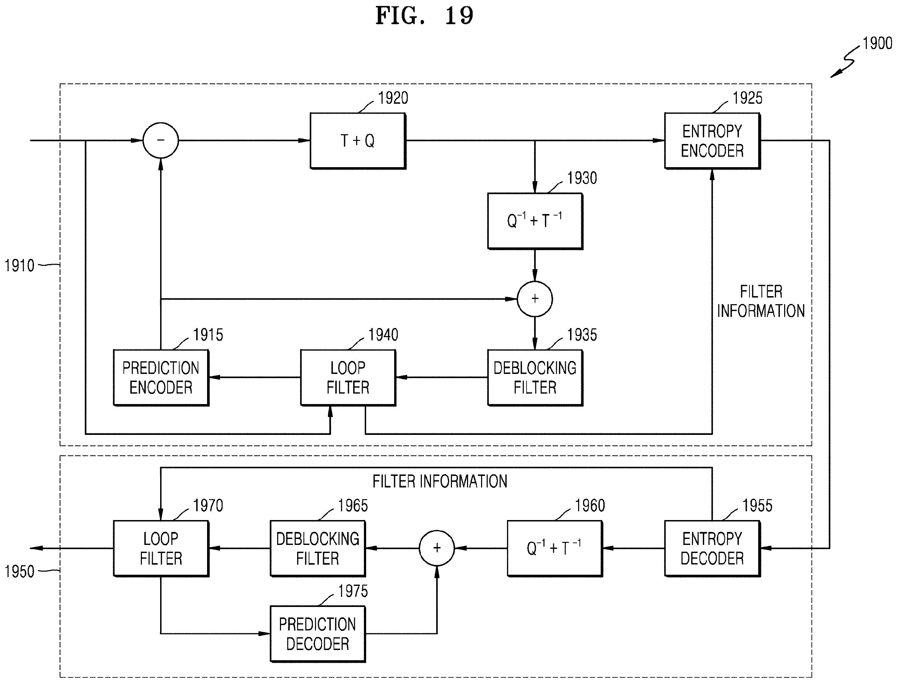

FIG. 19 is a block diagram illustrating an image encoding and decoding system for performing loop filtering.

An encoder 1910 of an image encoding and decoding system 1900 transmits an encoded bitstream of an image, and a decoder 1950 receives the bitstream and decodes the bitstream to output a reconstructed image. The encoder 1910 may have a configuration similar to the image encoding apparatus 200 described below, and the decoder 1950 may have a configuration similar to the image decoding apparatus 100.

In the encoder 1910, a prediction encoder 1915 outputs prediction data through inter prediction and intra prediction, and a transformer and quantizer 1920 outputs a quantized transform coefficient of residual data between the prediction data and a current input image. An entropy encoder 1925 encodes and transforms the quantized transform coefficient and outputs a bitstream. The quantized transform coefficient is reconstructed to data of a spatial domain via an inverse quantizer and inverse transformer 1930, and the data of the reconstructed spatial domain is output as a reconstructed image via a deblocking filter 1935 and a loop filter 1940. The reconstructed image may pass through the prediction encoder 1915 and may be used as a reference image of a next input image.

Encoded image data among the bitstream received by the decoder 1950 passes through an entropy decoder 1955 and an inverse quantizer and inverse transformer 1960 and is reconstructed to residual data of a spatial domain. The residual data and prediction data output from the prediction decoder 1975 may be combined to constitute image data of a spatial domain, and a deblocking filter 1965 and a loop filter 1970 may perform filtering on the image data of the spatial domain to output a reconstructed image for the current original image. The reconstructed image may be used as a reference image for a next original image by the prediction decoder 1975.

The loop filter 1940 of the encoder 1910 performs loop filtering by using input information input according to a user input or system settings. The filter information used by the loop filter 1940 is output to the entropy encoder 1925 and is transmitted together with the encoded image data to the decoder 1950. The loop filter 1970 of the decoder 1950 may perform loop filtering based on the filter information input from the decoder 1950.

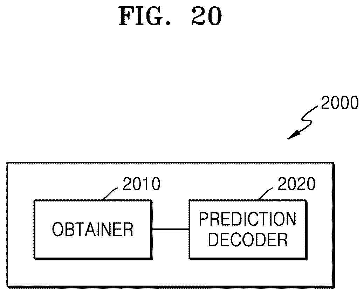

FIG. 20 is a block diagram illustrating a configuration of an image decoding apparatus, according to an embodiment of the present disclosure.

Referring to FIG. 20, an image decoding apparatus 2000 may include an obtainer 2010 and a prediction decoder 2020.

In an embodiment of the present disclosure, the obtainer 2010 and the prediction decoder 2020 may be implemented as at least one processor. In an embodiment of the present disclosure, the image decoding apparatus 2000 may include a memory storing at least one of input/output data of the obtainer 2010 and the prediction decoder 2020 or instructions. The obtainer 2010 and the prediction decoder 2020 may operate according to the instructions stored in the memory. In an embodiment of the present disclosure, the image decoding apparatus 2000 may include a memory controller for controlling data input/output to/from the memory.

In an embodiment of the present disclosure, the obtainer 2010 may correspond to the entropy decoder 1955 of FIG. 19. In an embodiment of the present disclosure, the prediction decoder 2020 may correspond to the prediction decoder 1975 of FIG. 19.

The obtainer 2010 may obtain a bitstream generated as a result of encoding an image. The bitstream may include an encoding result for a current block. In an embodiment of the present disclosure, the obtainer 2010 may receive the bitstream from an image encoding apparatus through a network. In an embodiment of the present disclosure, the obtainer 2010 may obtain the bitstream from a data storage medium including at least one of a magnetic medium such as a hard disk, a floppy disk, or a magnetic tape, an optical recording medium such as a CD-ROM or a DVD, or a magneto-optical medium such as a floptical disk.

The obtain 2010 may obtain syntax elements for decoding the image from the bitstream. Values corresponding to the syntax elements may be included in the bitstream according to a hierarchical structure of the image. In an embodiment of the present disclosure, the obtainer 2010 may obtain the syntax elements by entropy decoding bins included in the bitstream.

In an embodiment of the present disclosure, the bitstream may include information about a prediction mode of the current block in the current image. The current block may include at least one of a largest coding unit, a coding unit, a transform unit, or a prediction unit split from the current image to be decoded. In an embodiment of the present disclosure, the prediction mode of the current block may include at least one of an intra mode or an inter mode. The intra mode may include at least one of a block copy mode or a template matching-based prediction mode. In an embodiment, the block copy mode may include an intra block copy mode. In an embodiment, the template matching-based prediction mode may include a template matching-based intra prediction mode.

The prediction decoder 2020 may reconstruct the current block by performing intra prediction or inter prediction on the current block according to the prediction mode of the current block.

In an embodiment of the present disclosure, when the prediction mode of the current block is the intra mode, the obtainer 2010 may obtain information about an intra prediction mode of the current block from the bitstream.

In an embodiment of the present disclosure, when the prediction mode of the current block is the block copy mode, the obtainer 2010 may obtain information about a block vector indicating a reference block from the bitstream.

The prediction decoder 2020 may generate a prediction block corresponding to the current block through intra prediction.

In an embodiment of the present disclosure, when the prediction mode of the current block is the block copy mode, the prediction decoder 2020 may reconstruct the current block based on the reference block included in the current image. In an embodiment of the present disclosure, the prediction decoder 2020 may determine the prediction block based on the reference block. For example, the prediction decoder 2020 may determine the prediction block to be the same as the reference block or by performing filtering on the reference block.

In an embodiment of the present disclosure, when the prediction mode of the current block is the template matching prediction mode, the prediction decoder 2020 may reconstruct the current block by using the reference block included in the current image. The prediction decoder 2020 may determine the prediction block by performing template matching-based intra prediction on the current image.

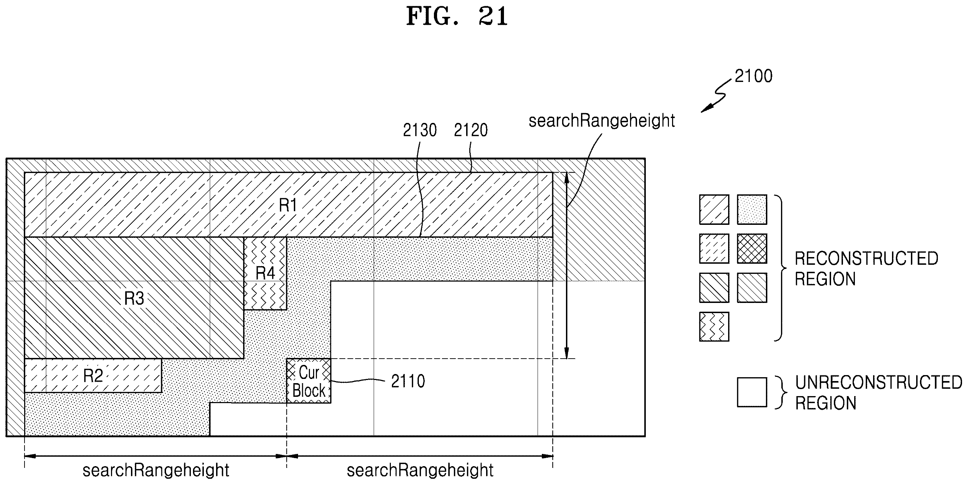

In an embodiment of the present disclosure, the reference block may include an unreconstructed sample. The prediction decoder 2020 may determine the unreconstructed sample of the reference block by using reconstructed samples of the current image. In an embodiment of the present disclosure, the prediction decoder 2020 may determine the unreconstructed sample of the reference block by performing intra prediction by using the reconstructed samples. A process of determining an unreconstructed sample according to an embodiment of the present disclosure will be described with reference to FIGS. 21 to 25, 26A, 26B, and 27 to 29.

In an embodiment of the present disclosure, the prediction decoder 2020 may determine the unreconstructed sample of the reference block by using a bit depth BitDepth. For example, the prediction decoder 2020 may determine the unreconstructed sample using a mid-value of the bit depth BitDepth. In an embodiment of the present disclosure, a process in which the prediction decoder 2020 determines a sample may include a process of determining a value of the sample.

The prediction decoder 2020 may generate a reconstructed current block by using the prediction block. In an embodiment of the present disclosure, the prediction decoder 2020 may determine the prediction block as the reconstructed current block. In an embodiment, the prediction decoder 2020 may generate the reconstructed current block by combining the prediction block with residual data obtained from the bitstream by the obtainer 2010. The reconstructed current block may be used as a reference block for a next block. The reconstructed current block may include at least one of the current block on which filtering is not performed or the current block on which filtering is performed.

In an intra mode, assuming that there is continuity between neighboring samples of the current block and samples in the current block, the prediction block of the current block may be generated based on the neighboring samples of the current block according to the intra prediction mode. The prediction decoder 2020 according to an embodiment of the present disclosure may use not only the neighboring samples of the current block included in the current image but also a spatial reference sample included in the current image for intra prediction. When samples reconstructed prior to the current block are used, samples of the current block may be predicted by using not only immediately adjacent samples but also samples far from the current block, thereby reducing the size of the residual data. In an embodiment of the present disclosure, the image decoding apparatus 2000 may perform intra prediction by using the reference block including the unreconstructed sample, thereby increasing a range of a region that may be determined as the reference block. The image decoding apparatus 2000 according to an embodiment of the present disclosure may increase the efficiency of intra prediction, thereby improving compression efficiency.

FIG. 21 is a diagram for describing a process of determining a reference block in intra prediction, according to an embodiment of the present disclosure.

Referring to FIG. 21, a current image 2100 may be classified into a reconstructed region and an unreconstructed region. The current image 2100 may be reconstructed by being split into a plurality of blocks. The current image 2100 may be reconstructed in a certain direction. For example, the current image 2100 may be reconstructed in a right direction from a block located at a left boundary of the current image 2100.

In an embodiment of the present disclosure, the plurality of blocks of the current image 2100 may be reconstructed in parallel. For example, the plurality of blocks included in the current image 2100 may be independently reconstructed for each row. For example, a plurality of blocks in a first column and a plurality of blocks in a second column may be independently reconstructed. In an embodiment of the present disclosure, a current block 2110 may be reconstructed by using a reference block including reconstructed samples of the current image 2100.

In an embodiment of the present disclosure, when a prediction mode of the current block 2110 is an intra mode, the image decoding apparatus 2000 may determine the reference block in the current image 2100. The image decoding apparatus 2000 may reconstruct the current block 2110 by using the reference block. In an embodiment of the present disclosure, the reference block may be determined by using an upper left position of the reference block, a height of the reference block, and a width of the reference block.

In an embodiment of the present disclosure, an upper left sample of the reference block may be determined in a reference region. The reference region may refer to a region including samples that are allowable as the upper left sample of the reference block among the reconstructed samples of the current image 2100. In an embodiment of the present disclosure, the reference region may include a first reference region 2120 and a second reference region 2130.

In an embodiment of the present disclosure, the first reference region 2120 may refer to a region where the upper left sample of the reference block in which all samples are reconstructed samples may be located. For example, when one sample included in the first reference region 2120 is the upper left sample of the reference block, the image decoding apparatus 2000 may determine the reference block in which all samples are reconstructed samples.

In an embodiment of the present disclosure, the second reference region 2130 may refer to a region including upper left samples of the reference block including an unreconstructed sample. For example, when one sample included in the second reference region 2130 is the upper left sample of the reference block, the image decoding apparatus 2000 may determine the reference block in which some samples are not reconstructed.

In an embodiment of the present disclosure, the first reference region 2120 and the second reference region 2130 may be determined based on a width and a height of the current block 2110. For example, the first reference region 2120 may be determined as a region in which a distance from a boundary of the reconstructed region in the reference region is greater than the width or the height of the current block 2110. A lower boundary of the first reference region 2120 may be at a distance from a lower boundary of the reference region that is greater than the height of the current block 2110. A right boundary of the first reference region 2120 may be at a distance from a right boundary of the reference region that is greater than the width of the current block 2110. Likewise, the second reference region 2130 may be determined as a region in which a distance from a boundary of the reconstructed region in the reference region is less than the width or the height of the current block 2110.

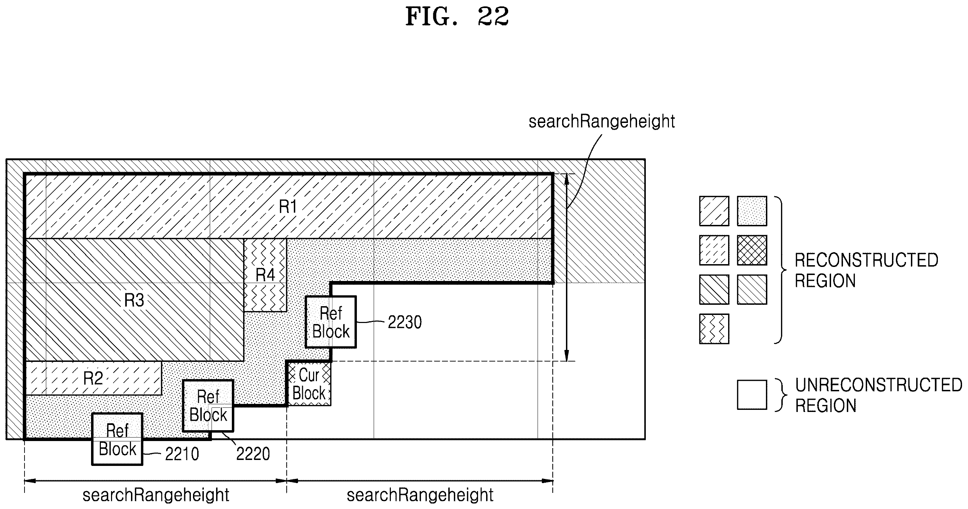

In an embodiment of the present disclosure, the image decoding apparatus 2000 may determine the reference block including an unreconstructed sample. The image decoding apparatus 2000 may determine the unreconstructed sample of the reference block by using samples of the reconstructed region. For example, a value of the unreconstructed sample of the reference block determined from the second reference region 2130 may be determined by using the reconstructed samples of the current image 2100. A process in which the image decoding apparatus 2000 according to an embodiment of the present disclosure determines the unreconstructed sample of the reference block will be described in detail with reference to FIGS. 22 to 25, 26A, 26B, and 27.

FIG. 22 is a diagram for describing a reference block including an unreconstructed sample, according to an embodiment of the present disclosure.

Referring to FIG. 22, a plurality of reference blocks 2210, 2220, and 2230 may include unreconstructed samples. Upper left samples of the plurality of reference blocks 2210, 2220, and 2230 according to an embodiment may be blocks included in the second reference region 2130 of FIG. 21.

In an embodiment of the present disclosure, the image decoding apparatus 2000 may determine a reference block for a current block by using a block vector. The block vector may refer to a vector indicating the reference block. For example, the block vector may be a position vector from an upper left sample of the current block to an upper left sample of the reference block. The block vector may be used when a prediction mode of the current block is a block copy mode.

In an embodiment of the present disclosure, the first reference block 2210 may be a block in which lower samples are not reconstructed. The second reference block 2220 may be a block in which lower right samples are not reconstructed. The third reference block 2230 may be a block in which right samples are not reconstructed.

In an embodiment of the present disclosure, the image decoding apparatus 2000 may determine an unreconstructed sample of the reference block. For example, the image decoding apparatus 2000 may determine a value of the unreconstructed sample of the reference block. In an embodiment, the image decoding apparatus 2000 may determine the unreconstructed sample by using a reconstructed sample of the reference block.

In an embodiment of the present disclosure, the image decoding apparatus 2000 may determine the unreconstructed sample by using a sample adjacent to the unreconstructed sample. In an embodiment of the present disclosure, the image decoding apparatus 2000 may determine the unreconstructed sample to be the same as a reconstructed sample. For example, the image decoding apparatus 2000 may determine the sample to be the same as a reconstructed sample located at a lower boundary of the first reference block 2210. That is, when lower samples are not reconstructed as in the first reference block 2210, the unreconstructed sample may be determined as a reconstructed sample having the same horizontal coordinate. Also, for example, the image decoding apparatus 2000 may determine the sample to be the same as a reconstructed sample located at a right boundary of the third reference block 2230. That is, when right samples are not reconstructed as in the third reference block 2230, the unreconstructed sample may be determined as a reconstructed sample having the same vertical coordinate.

In an embodiment of the present disclosure, the image decoding apparatus 2000 may determine the unreconstructed sample by using a weighted sum of reconstructed samples. In an embodiment of the present disclosure, the image decoding apparatus 2000 may determine the value of the unreconstructed sample by using weights of values of samples adjacent to an unreconstructed region of the second reference block 2220. For example, the image decoding apparatus 2000 may determine the unreconstructed sample by using a weighted sum of a left sample and an upper sample adjacent to the unreconstructed sample. In an embodiment, weights used in the weighted sum may be the same. For example, weights of the upper sample and the left sample may be 1:1. In an embodiment of the present disclosure, the weights used in the weighted sum may be determined based on a ratio of a width and a height of the unreconstructed region.

In an embodiment of the present disclosure, the image decoding apparatus 2000 may determine the unreconstructed sample by using a setting value for a current image. In an embodiment, the image decoding apparatus 2000 may determine a value of the unreconstructed sample by using a bit depth of the current image. For example, the image decoding apparatus 2000 may determine the value of the unreconstructed sample using a middle value of the bit depth of the current image. For example, the bit depth of the image may be 8 bits or 10 bits or more (e.g., 10 bits, 12 bits, or 16 bits).

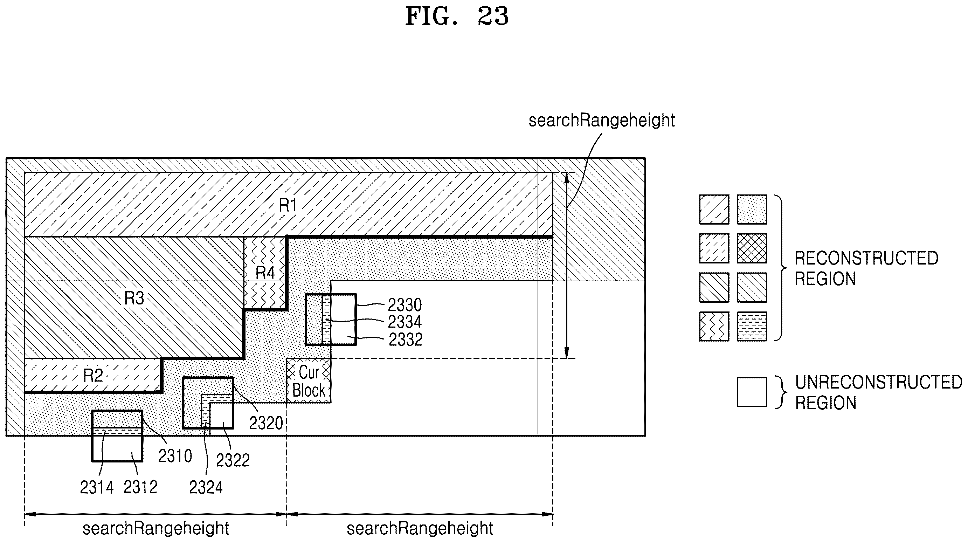

A process in which the image decoding apparatus 2000 according to an embodiment of the present disclosure determines the unreconstructed sample by using intra prediction will be described in detail with reference to FIGS. 23 to 25, 26A, 26B, and 27 to 29.

FIG. 23 is a diagram for determining an unreconstructed reference block, according to an embodiment of the present disclosure.

Referring to FIG. 23, a reference block according to an embodiment of the present disclosure may be one of a first reference block 2310 in which lower samples are not reconstructed, a second reference block 2320 in which lower right samples are not reconstructed, and a third reference block 2330 in which right samples are not reconstructed. The first reference block 2310 may include unreconstructed samples 2312 and reference samples 2314 for determining the unreconstructed samples 2312. Likewise, the second reference block 2320 may include unreconstructed samples 2322 and reference samples 2324 for determining the unreconstructed samples 2322, and the third reference block 2330 may include unreconstructed samples 2332 and reference samples 2334 for determining the unreconstructed samples 2332. In an embodiment of the present disclosure, the image decoding apparatus 2000 may determine the unreconstructed samples 2312, 2322, and 2332 by using intra prediction.

In an embodiment of the present disclosure, an intra prediction mode may include a DC mode or a planar mode. In an embodiment, the image decoding apparatus 2000 may determine the unreconstructed samples 2322 by performing intra prediction of the DC mode or the planar mode by using the reference samples 2324.

In an embodiment of the present disclosure, the intra prediction mode may include a directional intra prediction mode. In an embodiment, the image decoding apparatus 2000 may determine the unreconstructed samples 2312, 2322, and 2332 by performing intra prediction of the directional intra mode by using the reference samples 2314, 2324, and 2334. In an embodiment, when a reference sample corresponding to the directional intra mode is not reconstructed, the unreconstructed reference sample may be determined by using a value of a sample adjacent to the unreconstructed reference sample. For example, when a reference sample corresponding to the directional intra mode is not reconstructed, a value of the unreconstructed reference sample may be determined by padding a reconstructed reference sample.

In an embodiment of the present disclosure, the intra prediction mode may be determined by using a most probable mode (MPM) of a current block. In an embodiment, the image decoding apparatus 2000 may determine the intra prediction mode by using an MPM list of the current block. The image decoding apparatus 2000 may determine the unreconstructed samples 2312, 2322, and 2332 by performing intra prediction of the intra mode determined by using the reference samples 2314, 2324, and 2334.

In an embodiment of the present disclosure, the intra prediction mode may be determined by using an intra prediction mode of a reconstructed region. In an embodiment, the image decoding apparatus 2000 may determine the intra prediction mode of the reconstructed region as the intra prediction mode. The image decoding apparatus 2000 may determine the unreconstructed samples 2312, 2322, and 2332 by performing intra prediction of the intra mode determined by using the reference samples 2314, 2324, and 2334.

In an embodiment of the present disclosure, the intra prediction mode may be determined by using template-based intra mode derivation (TIMD). The image decoding apparatus 2000 may determine the intra prediction mode from among the reference samples 2314, 2324, and 2334 of a template.

In an embodiment of the present disclosure, the intra prediction mode may be determined by using decoder side intra mode derivation (DIMD). DIMD may refer to a process of obtaining an intra mode of a current block based on a gradient of a template of the current block. In an embodiment of the present disclosure, the image decoding apparatus 2000 may determine the reference samples 2314, 2324, and 2334 of the reference blocks 2310, 2320, and 2330 as a template for the unreconstructed samples 2312, 2322, and 2332. The image decoding apparatus may determine a gradient by using the reference samples 2314, 2324, and 2334 of the template. In an embodiment of the present disclosure, the image decoding apparatus 2000 may determine a gradient by using a Sobel filter. For example, the image decoding apparatus 2000 may determine a horizontal difference value and a vertical difference value for a sample by using the one sample and neighboring samples among the reference samples 2314, 2324, and 2334. The image decoding apparatus 2000 may determine a gradient by using a ratio between the vertical difference value and the horizontal difference value. The image decoding apparatus 2000 may determine gradients for samples included in the template.

In an embodiment of the present disclosure, the image decoding apparatus 2000 may determine the intra prediction mode of the reference block based on the gradients of the samples included in the template. In an embodiment of the present disclosure, the image decoding apparatus 2000 may determine an intra prediction mode corresponding to a most frequent gradient among the gradients of the samples included in the template.

In an embodiment of the present disclosure, the image decoding apparatus 2000 may determine intra prediction modes corresponding to the gradients of the samples included in the template. The image decoding apparatus 2000 may determine the unreconstructed samples 2312, 2322, and 2332 by using a plurality of intra prediction modes. For example, the image decoding apparatus 2000 may perform intra prediction by using top three most frequent gradients among the gradients of the samples included in the template. The image decoding apparatus 2000 may determine the unreconstructed samples 2312, 2322, and 2332 by applying weights to intra predicted samples.

In an embodiment of the present disclosure, when the image decoding apparatus 2000 obtains the intra mode of the current block through DMID, the image decoding apparatus 2000 may not obtain information for determining the intra prediction mode (e.g., a multi-reference line (MRL) index, an intra sub-partitioning (ISP) index, a most probable mode (MPM) flag, or an intra prediction mode (IPM) index) from a bitstream. For example, the image decoding apparatus 2000 may obtain a DIMD flag indicating whether DIMD is applied (or whether information about the intra prediction mode is obtained). When the DIMD flag indicates that DIMD is not applied, the image decoding apparatus 2000 may obtain the information for determining the intra prediction mode. When the DIMD flag indicates that DIMD is applied, the image decoding apparatus 2000 may determine the intra prediction mode through DIMD without obtaining the information for determining the intra prediction mode.

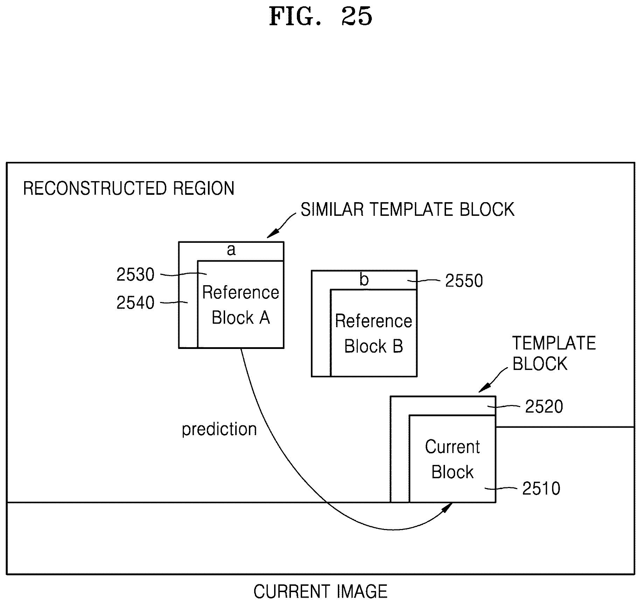

In an embodiment of the present disclosure, the image decoding apparatus 2000 may determine the unreconstructed samples 2312, 2322, and 2332 by using a template matching-based prediction mode. The image decoding apparatus 2000 may determine a template including the reference samples 2314, 2324, and 2334. The image decoding apparatus 2000 may determine the unreconstructed samples 2312, 2322, and 2332 by performing template matching-based intra prediction by using the template including the reference samples 2314, 2324, and 2334. A process in which the image decoding apparatus 2000 according to an embodiment of the present disclosure performs template matching-based intra prediction will be described in detail with reference to FIG. 25.

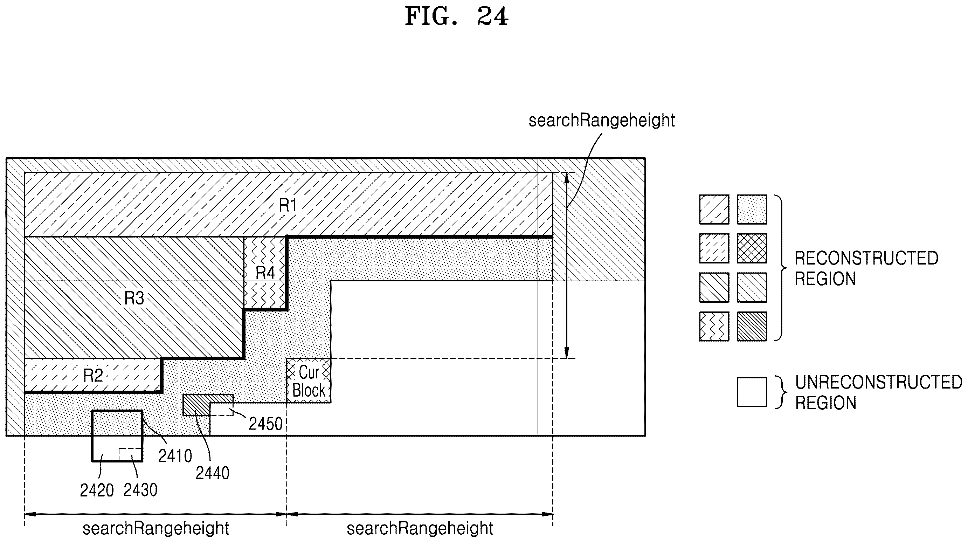

In an embodiment of the present disclosure, the image decoding apparatus 2000 may determine some of the unreconstructed samples 2312, 2322, and 2332 by using reconstructed samples. For example, when the image decoding apparatus 2000 determines the unreconstructed samples 2312, 2322, and 2332 based on a block in which some samples are not reconstructed, some of the unreconstructed samples 2312, 2322, and 2332 may not be determined. In an embodiment of the present disclosure, a process of determining some undetermined samples from among the unreconstructed samples 2312, 2322, and 2332 will be described in detail with reference to FIG. 24.

FIG. 24 is a diagram for describing a process of determining an unreconstructed sample, according to an embodiment of the present disclosure.

Referring to FIG. 24, unreconstructed samples 2420 of a reference block 2410 of a current block may be determined by using reconstructed samples of a current image. However, in some cases, some of the unreconstructed samples 2420 may not be determined. For example, when the unreconstructed samples 2420 of the reference block 2410 are determined by using a block 2440 including unreconstructed samples 2450, samples corresponding to the unreconstructed samples 2450 may not be determined. In an embodiment of the present disclosure, the image decoding apparatus 2000 may determine unreconstructed samples 2430 by performing a block copy mode or template matching-based intra prediction. In an embodiment of the present disclosure, a block including an unreconstructed sample may be determined according to a block vector of an intra copy mode or template matching.

In an embodiment of the present disclosure, the image decoding apparatus 2000 may perform a second process of determining the undetermined samples 2430 according to a first process of determining the unreconstructed samples 2420 by using reconstructed samples. The first process according to an embodiment of the present disclosure may correspond to a process of determining unreconstructed samples described with reference to FIG. 23.

According to an embodiment of the present disclosure, the image decoding apparatus 2000 may determine the undetermined samples 2430 according to the first process by using the second process of determining unreconstructed samples described with reference to FIG. 23. For example, the undetermined samples 2430 may be considered in the same manner as the second reference block 2320 of FIG. 23 and may be determined by using reconstructed samples. In an embodiment of the present disclosure, the undetermined samples 2430 may be determined by using samples determined in the first process.

FIG. 25 is a diagram for describing a template matching-based prediction mode, according to an embodiment of the present disclosure.

Referring to FIG. 25, when a prediction mode of a current block 2510 is an intra mode, a reference block 2530 may be determined from a reconstructed region of a current image.

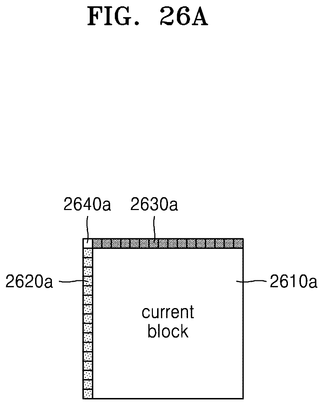

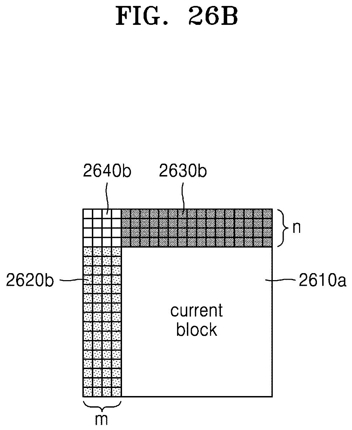

In an embodiment of the present disclosure, the image decoding apparatus 2000 may reconstruct the current block 2510 by performing template-based intra prediction. The image decoding apparatus 2000 may determine a template 2520 of the current block 2510. In an embodiment, the image decoding apparatus 2000 may determine the template 2520 of the current block 2510 in a region that has already been reconstructed. A shape of the template 2520 according to an embodiment of the present disclosure will be described in detail with reference to FIGS. 26A and 26B.

In an embodiment of the present disclosure, the image decoding apparatus 2000 may determine a reference block based on the template 2520 of the current block 2510. The image decoding apparatus 2000 may determine a template similar to the template 2520 in the reconstructed region as a reference template. In an embodiment of the present disclosure, a process in which the image decoding apparatus 2000 determines the reference template similar to the template 2520 of the current block 2510 may be referred to as template matching.

In an embodiment of the present disclosure, the image decoding apparatus 2000 may compare samples included in the reconstructed region with the template 2520. For example, the image decoding apparatus 2000 may determine a similarity between the template 2520 and samples included in a comparison template having the same shape as the template 2520 of the current block 2510.

In an embodiment of the present disclosure, the image decoding apparatus 2000 may determine a similar region by using a cost function. For example, the image decoding apparatus 2000 may determine, in the reconstructed region, a region similar to the template 2520 of the current block 2510 by using at least one cost function among sum of absolute differences (SAD), sum of squared errors (SSE), or mean removed SAD (MR-SAD). For example, the image decoding apparatus 2000 may compare template A 2540 and template B 2550 with the template 2520 of the current block 2510 and may determine template A 2540 with a smaller error as a similar template.

The image decoding apparatus 2000 may determine a reference block corresponding to the similar template as a reference block for the current block 2510. For example, the image decoding apparatus 2000 may determine reference block A 2530 corresponding to the similar template 2540 as a reference block of the current block 2510. The image decoding apparatus 2000 may perform prediction on the current block 2510 based on a value of the reference block. In an embodiment, the image decoding apparatus 2000 may determine the current block 2510 to be the same as the reference block.

In an embodiment of the present disclosure, the image decoding apparatus 2000 may determine a similar template among all possible templates in the reconstructed region. For example, the image decoding apparatus 2000 may determine a similar template by comparing all or some of templates including reconstructed samples included in the reconstructed region with the template 2520 of the current block 2510. In an embodiment, the image decoding apparatus 2000 may determine a portion of the reconstructed region, and may perform template matching only on the determined portion.

In an embodiment of the present disclosure, the image decoding apparatus 2000 may determine a template similar to the template 2520 of the current block 2510 according to a block unit of the reconstructed region. For example, the image decoding apparatus 2000 may determine a similar template by comparing templates corresponding to blocks (e.g., transform blocks or coding blocks) of the reconstructed region with the template 2520 of the current block 2510.

In an embodiment of the present disclosure, the image decoding apparatus 2000 may determine one reference template from a candidate list. In an embodiment of the present disclosure, the image decoding apparatus 2000 may determine a most similar reference template by comparing templates corresponding to the candidate list with the template 2520 of the current block 2510. The image decoding apparatus 2000 may determine a reference block corresponding to the determined reference template, as in a relationship between the template 2520 and the current block 2510.

In an embodiment of the present disclosure, the image decoding apparatus 2000 may determine a plurality of reference templates from the candidate list. In an embodiment of the present disclosure, the image decoding apparatus 2000 may determine a plurality of reference templates with a high similarity by comparing templates corresponding to the candidate list with the template 2520 of the current block 2510. The image decoding apparatus 2000 may determine a plurality of reference blocks corresponding to the determined plurality of reference templates, as in a relationship between the template 2520 and the current block 2510. The image decoding apparatus 2000 may predict the current block 2510 by using a weighted sum of the plurality of reference blocks. In an embodiment of the present disclosure, weights may be determined based on costs of the reference templates or based on a Wiener filter.

In an embodiment of the present disclosure, the image decoding apparatus 2000 may determine a template by using a vector included in the candidate list. The image decoding apparatus 2000 may determine a position of the template by using the vector included in the candidate list. For example, the image decoding apparatus 2000 may determine the template based on a candidate pixel closest to a pixel moved by the vector from the current block 2510. The candidate pixel may be an integer pixel or a fractional pixel having a 1/2-pel or 1/4-pel precision.

In an embodiment of the present disclosure, the image decoding apparatus 2000 may perform filtering on the reference block based on a ratio between the reference template and the template 2520 of the current block 2510. For example, the image decoding apparatus 2000 may determine the current block 2510 by adjusting a value of the reference block by the ratio between the reference template and the template 2520 of the current block 2510. In an embodiment of the present disclosure, when one reference template is determined based on an integer pixel, the image decoding apparatus 2000 may perform filtering on the reference block based on the ratio between the reference template and the template 2520 of the current block 2510.

FIG. 26A is a diagram for describing a template of a template matching-based prediction mode, according to an embodiment of the present disclosure.

Referring to FIG. 26, a template of a current block 2610a according to an embodiment of the present disclosure may include at least one of a first template 2620a, a second template 2630a, and a third template 2640a.

In an embodiment of the present disclosure, the first template 2620a may refer to a region located on the left side of the current block. In an embodiment of the present disclosure, the second template 2630a may refer to a region located above the current block. In an embodiment of the present disclosure, the third template 2640a may refer to a region located on the upper left side of the current block.

The image decoding apparatus 2000 according to an embodiment of the present disclosure may determine the template of the current block 2610a to include at least one of the first template 2620a, the second template 2630a, or the third template 2640a. For example, the template of the current block 2160a may include the first template 2620a and the second template 2630a. In an embodiment of the present disclosure, a shape of a template compared in a reconstructed region may be determined according to the template of the current block 2610a.

The image decoding apparatus 2000 according to an embodiment of the present disclosure may determine a template based on a reference block. In an embodiment of the present disclosure, at least some regions of the first template 2620a and the second template 2630a may not be reconstructed. Referring to FIG. 23, in the first reference block 2310, at least some samples corresponding to the first template 2620a may not be reconstructed. Likewise, in the third reference block 2330, some samples corresponding to the second template 2630a may not be reconstructed.

In an embodiment of the present disclosure, when some samples of the template corresponding to the reference block are not reconstructed, the image decoding apparatus 2000 may determine the template excluding the unreconstructed region. For example, when a part of the first template 2620a is not reconstructed, the image decoding apparatus 2000 may determine the template by using at least one of the second template 2630a and the third template 2640a.

In an embodiment of the present disclosure, the image decoding apparatus 2000 may determine the template based on a reference region and may perform template matching. In an embodiment of the present disclosure, the image decoding apparatus 2000 may dynamically determine the template according to the reconstructed region, and may perform template matching with the current block 2610a.

In an embodiment of the present disclosure, when some samples of the template corresponding to the reference block are not reconstructed, the image decoding apparatus 2000 may determine the unreconstructed samples. For example, when a part of the first template 2620a is not reconstructed, the image decoding apparatus 2000 may determine a value of an unreconstructed sample. The image decoding apparatus 2000 may determine the template including the determined sample.

FIG. 26A is a diagram for describing the template, according to an embodiment of the present disclosure, but the present disclosure is not limited thereto and various types of templates may be determined.

FIG. 26B is a diagram for describing a template of a template matching-based prediction mode, according to an embodiment of the present disclosure.

Referring to FIG. 26B, a template of a current block 2610b may include at least one of a first template 2620a, a second template 2630a, and a third template 2640a. The template of the current block 2610b may include a plurality of reference lines. The first template 2620b may include m reference lines, and the second template 2630b may include n reference lines.

The image decoding apparatus 2000 according to an embodiment of the present disclosure may determine the template of the current block 2610b to include at least one of the first template 2620b, the second template 2630b, and the third template 2640b.

The image decoding apparatus 2000 according to an embodiment of the present disclosure may determine the template of the current block 2610b to include at least some regions of the first template 2620b, the second template 2630b, and the third template 2640b. For example, the image decoding apparatus 2000 may determine the template to include all samples of a first reference line of the first template 2620b and some samples of a second reference line.

FIG. 26A may correspond to a case where the template of the current block 2610b includes one reference line. According to an embodiment of the present disclosure, even when the template includes a plurality of reference lines, a process in which the image decoding apparatus 2000 performs template matching may be performed in a manner similar to that described with reference to FIG. 26A.

FIG. 26B is a diagram for describing the template, according to an embodiment of the present disclosure, but the present disclosure is not limited thereto and various types of templates may be determined.

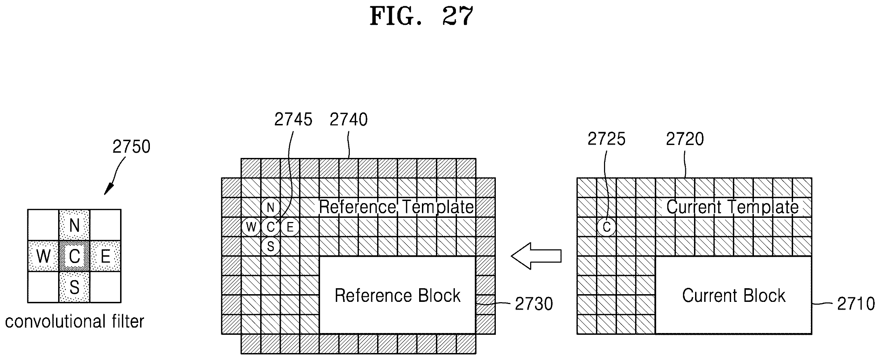

FIG. 27 is a diagram for describing a template matching-based prediction mode, according to an embodiment of the present disclosure.

Referring to FIG. 27, a convolutional filter 2750 may be applied to a reference block 2730 and a reference template 2740. The convolutional filter 2750 may be a filter using a center sample C, an upper sample N, a lower sample S, a left sample W, and a right sample E. In an embodiment of the present disclosure, a center sample C' filtered by the convolutional filter 2750 may be determined as shown in Equation 1.

[Equation 1]

$$C' = c0*C + c1*N + c2*S + c3*E + c4*W + c5*B$$

Here, $c_i$ is a coefficient of the convolutional filter 2750. B is a bias value. In an embodiment of the present disclosure, the bias value B may be determined based on a bit depth. For example, the bias value B may be determined to be a mid-value of the bit depth.

In an embodiment of the present disclosure, the image decoding apparatus 2000 may apply the convolutional filter 2750 to the reference template 2740. For example, the image decoding apparatus 2000 may apply the convolutional filter 2750 to samples 2745 included in the reference template 2740. The image decoding apparatus 2000 may perform template matching-based on the filtered reference template 2740 and a template 2720 of a current block 2710. A process in which the image decoding apparatus 2000 according to an embodiment of the present disclosure performs template matching has been described above, and thus, will not be described again.

In an embodiment of the present disclosure, when the filtered reference template 2740 is the reference template, the image decoding apparatus 2000 may determine the current block 2710 based on the filtered reference block 2730.

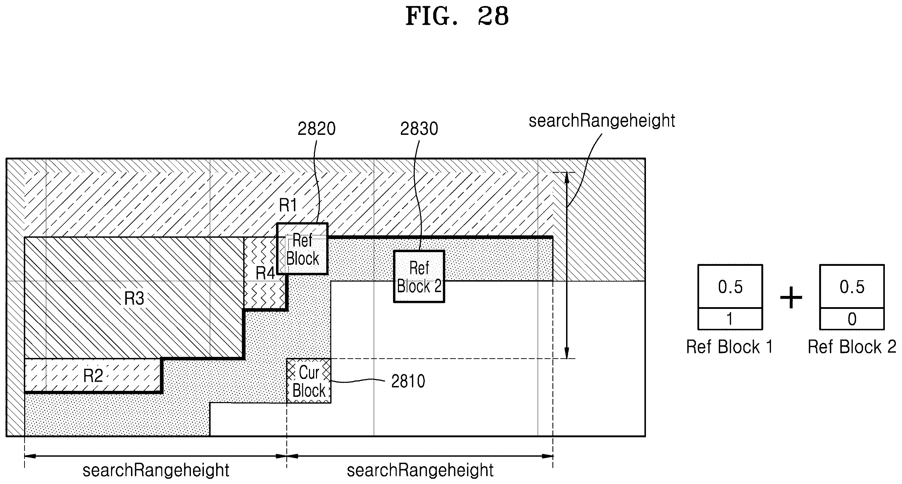

FIG. 28 is a flowchart for describing prediction using a plurality of reference blocks, according to an embodiment of the present disclosure.

Referring to FIG. 28, a plurality of reference blocks 2820 and 2830 may be determined for a current block 2810.

In an embodiment of the present disclosure, the image decoding apparatus 2000 may reconstruct the current block 2810 by using a weighted sum of a first reference block 2820 and a second reference block 2830. In an embodiment of the present disclosure, a process in which the image decoding apparatus 2000 reconstructs a current block by performing a weighted sum on a plurality of reference blocks may be referred to as a fusion mode.

In an embodiment of the present disclosure, the image decoding apparatus 2000 may determine the same weight for a reconstructed region of the first reference block 2820 and the second reference block 2830. For example, when samples of a lower region are not reconstructed and only samples of an upper region are reconstructed as in the second reference block 2830, the image decoding apparatus 2000 may determine the same weight for the upper region in the first reference block 2820 and the second reference block 2830. For example, weights of the first reference block 2820 and the second reference block 2830 may both be 0.5.

In an embodiment, the image decoding apparatus 2000 may differently determine a weight for an unreconstructed region in the first reference block 2820 or the second reference block 2830. For example, when samples of a lower region are not reconstructed and only samples of an upper region are reconstructed as in the second reference block 2830, the image decoding apparatus 2000 may determine a weight for the lower region in the second reference block 2830 to be 0. For example, a weight of the first reference block 2820 may be determined to be 1.

Although FIG. 28 is described assuming that there are two reference blocks, the same may apply to a case where there are three or more reference blocks. According to an embodiment, the image decoding apparatus 2000 may equally determine weights for reconstructed regions in reference blocks. For example, when there are three reference blocks and all of the reference blocks are reconstructed, weights may be determined to be 1/3, 1/3, and 1/3. For example, when one reference block is not reconstructed and only two reference blocks are reconstructed, weights may be determined to be 0, 1/2, and 1/2. For example, when two reference blocks are not reconstructed and only one reference block is reconstructed, weights may be determined to be 0, 0, and 1.

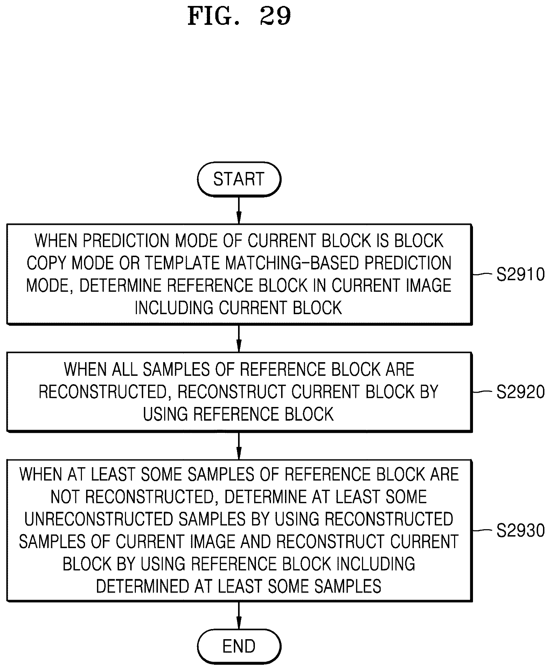

FIG. 29 is a flowchart illustrating an image decoding method of performing prediction on a current block, according to an embodiment of the present disclosure.

Referring to FIG. 29, in operation S2910, when a prediction mode of a current block is a mode for determining a reference block in a current image including the current block, the image decoding apparatus 2000 may determine the reference block in the current image including the current block. In an embodiment of the present disclosure, the reference block may include an unreconstructed sample. In an embodiment of the present disclosure, the image decoding apparatus 2000 may identify whether all samples of the reference block are reconstructed.

In operation S2920, when all samples of the reference block are reconstructed, the image decoding apparatus 2000 may reconstruct the current block by using the reference block. For example, the image decoding apparatus 2000 may determine the current block to be the same as the reference block.

In operation S2930, when at least some samples of the reference block are not reconstructed, the image decoding apparatus 2000 may determine the at least some unreconstructed samples by using reconstructed samples of the current image. In an embodiment of the present disclosure, the image decoding apparatus 2000 may determine some unreconstructed samples by performing intra prediction by using the reconstructed samples of the current image. In an embodiment of the present disclosure, determining some unreconstructed samples may include determining values of the some unreconstructed samples. The image decoding apparatus 2000 may reconstruct the current block by using the reference block including the determined at least some samples. For example, the image decoding apparatus 2000 may replace the unreconstructed samples of the reference block with the samples determined in operation S2930, and may reconstruct the current block by using the reference block including the determined samples and the reconstructed samples.

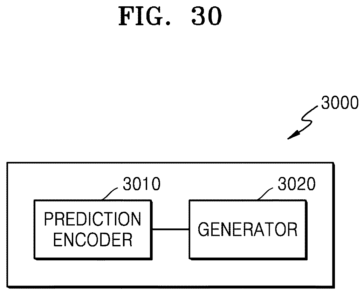

FIG. 30 is a block diagram illustrating a configuration of an image encoding apparatus, according to an embodiment of the present disclosure.

Referring to FIG. 30, an image encoding apparatus 3000 may include a prediction encoder 3010 and a generator 3020.

In an embodiment of the present disclosure, the prediction encoder 3010 and the generator 3020 may be implemented as at least one processor. In an embodiment of the present disclosure, the image encoding apparatus 3000 may include a memory storing input/output data of the prediction encoder 3010 and the generator 3020. The prediction encoder 3010 and the generator 3020 may operate according to instructions stored in the memory. In an embodiment of the present disclosure, the image encoding apparatus 3000 may include a memory controller for controlling data input/output to/from the memory.

In an embodiment of the present disclosure, the prediction encoder 3010 may correspond to the prediction encoder 1915 of FIG. 19. In an embodiment of the present disclosure, the generator 3020 may correspond to the entropy encoder 1925 of FIG. 19.

The prediction encoder 3010 may determine a prediction mode of a current block. The current block may include at least one of a largest coding unit, a coding unit, a transform unit, or a prediction unit split from a current image 2200 to be encoded. In an embodiment of the present disclosure, the prediction mode of the current block may include at least one of an intra mode or an inter mode. The intra mode may include at least one of a block copy mode or a template matching-based prediction mode.

In an embodiment of the present disclosure, when the prediction mode of the current block is an intra mode, the prediction encoder 3010 may determine an intra prediction mode of the current block.

In an embodiment of the present disclosure, when the prediction mode of the current block is a block copy mode, the prediction encoder 3010 may determine information about a block vector indicating a reference block.

In an embodiment of the present disclosure, the prediction encoder 3010 may perform intra prediction or inter prediction on the current block according to the prediction mode of the current block, and may encode the current block by using a prediction block generated as a result of performing the intra prediction or the inter prediction.

In an embodiment of the present disclosure, when the prediction mode of the current block is a block copy mode, the prediction encoder 3010 may determine a prediction block from the reference block. For example, the prediction encoder 3010 may determine the prediction block to be the same as the reference block or may determine the prediction block by performing filtering on the reference block.

In an embodiment of the present disclosure, when the prediction mode of the current block is a template matching prediction mode, the prediction encoder 3010 may reconstruct the current block by using the reference block. The prediction encoder 3010 may determine the prediction block by using the reference block.

In an embodiment of the present disclosure, the reference block may include an unreconstructed sample. In an embodiment of the present disclosure, the unrestricted sample may include an unpredicted sample. In an embodiment of the present disclosure, the prediction encoder 3010 may determine some unreconstructed samples of the reference block by using reconstructed samples. In an embodiment of the present disclosure, the prediction encoder 3010 may determine unreconstructed samples of the reference block by performing intra prediction by using reconstructed samples. A process of determining unreconstructed samples according to an embodiment of the present disclosure has been described with reference to FIGS. 21 to 25, 26A, 26B, and 27 to 29, and thus, a repeated description thereof will be omitted.

In an embodiment of the present disclosure, the prediction encoder 3010 may determine unreconstructed samples of the reference block by using a bit depth BitDepth. For example, the prediction encoder 3010 may determine unreconstructed samples by using a mid-value of the bit depth BitDepth of the current image. In an embodiment of the present disclosure, determining samples by the prediction encoder 3010 may include determining values of the samples.

In an embodiment of the present disclosure, encoding the current block may refer to a process in which the image decoding apparatus 2000 generates information for reconstructing the current block. The information generated through encoding may be included in a bitstream.

In an embodiment of the present disclosure, the prediction encoder 3010 may generate residual data corresponding to a difference between the prediction block and the current block. When the prediction block is determined to be the current block, the residual data may not be generated.

The generator 3020 may generate a bitstream including an image encoding result. The bitstream may include an encoding result for the current block.

In an embodiment of the present disclosure, when the prediction mode of the current block is a block copy mode, the generator 3020 may generate a bitstream including information about a block vector indicating the reference block.

In an embodiment of the present disclosure, the generator 3020 may transmit the bitstream to the image decoding apparatus 2000 through a network.

In an embodiment of the present disclosure, the generator 3020 may store the bitstream in a data storage medium including at least one of a magnetic medium such as a hard disk, a floppy disk, or a magnetic tape, an optical recording medium such as a CD-ROM and a DVD, or a magneto-optical medium such as a floptical disk.

The generator 3020 may generate a bitstream including syntax elements generated through image encoding. Values corresponding to the syntax elements may be included in the bitstream according to a hierarchical structure of the image.

The generator 3020 may obtain bins included in the bitstream by entropy encoding the syntax elements.

In an embodiment of the present disclosure, the bitstream may include information about the prediction mode of the current block in the current image.

In an embodiment of the present disclosure, when the prediction mode of the current block is an intra mode, the bitstream may include information indicating an intra prediction mode of the current block.

In the intra mode, assuming that there is continuity between neighboring samples of the current block and samples in the current block, the prediction block of the current block may be generated based on the neighboring samples of the current block according to the intra prediction mode. The prediction encoder 3010 according to an embodiment of the present disclosure may use not only the neighboring samples of the current block included in the current image but also a spatial reference sample included in the current image for intra prediction. When samples reconstructed prior to the current block are used, samples of the current block may be predicted by using not only immediately adjacent samples but also samples far from the current block, thereby reducing the size of the residual data. In an embodiment of the present disclosure, the image encoding apparatus 3000 may perform intra prediction by using the reference block including the unreconstructed sample, thereby increasing a range of a region that may be determined as the reference block. The image encoding apparatus 3000 according to an embodiment of the present disclosures may increase the efficiency of intra prediction, thereby improving compression efficiency.

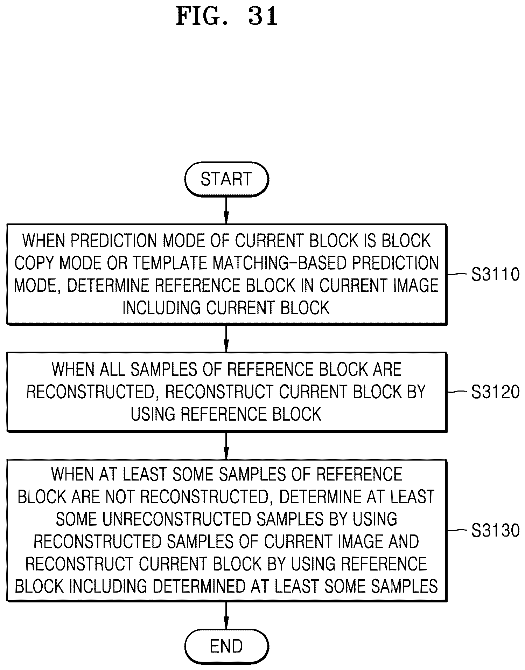

FIG. 31 is a flowchart illustrating an image encoding method of performing prediction on a current block, according to an embodiment of the present disclosure.

Referring to FIG. 31, in operation S3110, when a prediction mode of a current block is a mode for determining a reference block in a current image including the current block, the image encoding apparatus 3000 may determine the reference block in the current image including the current block. In an embodiment of the present disclosure, the reference block may include an unreconstructed sample. In an embodiment of the present disclosure, the image encoding apparatus 3000 may identify whether all samples of the reference block are reconstructed.

In operation S3120, when all samples of the reference block are reconstructed, the image encoding apparatus 3000 may reconstruct the current block by using the reference block. For example, the image encoding apparatus 3000 may determine the current block to be the same as the reference block.

In operation S3130, when at least some samples of the reference block are not reconstructed, the image encoding apparatus 3000 may determine the at least some unreconstructed samples by using reconstructed samples of the current image. In an embodiment of the present disclosure, the image encoding apparatus 3000 may determine some unreconstructed samples by performing intra prediction by using the reconstructed samples of the current image. In an embodiment of the present disclosure, determining some unreconstructed samples may include determining values of the some unreconstructed samples. In an embodiment of the present disclosure, the image encoding apparatus 3000 may reconstruct the current block by using the reference block including the determined at least some samples. For example, the image encoding apparatus 3000 may replace the unreconstructed samples of the reference block with the samples determined in operation S3130, and may reconstruct the current block by using the reference block including the determined samples and the reconstructed samples. In an embodiment of the present disclosure, the reconstructing may include predicting.

An image decoding method according to an embodiment of the present disclosure is provided. When a prediction mode of a current block is a mode for determining a reference block in a current image including the current block, the method may include determining the reference block in the current image including the current block. At least some samples of the reference block may be reconstructed. When all samples of the reference block are reconstructed, the method may include reconstructing the current block using the reference block. When at least some samples of the reference block are not reconstructed, the method may include determining the at least some unreconstructed samples using reconstructed samples of the current image. The method may include reconstructing the current block using the reference block including the determined at least some samples.

The determining of the reference block according to an embodiment of the present disclosure may include, when the prediction mode of the current block is a block copy mode, identifying a block vector indicating the reference block. The determining of the reference block may include determining the reference block using the block vector.

The determining of the reference block according to an embodiment of the present disclosure may include, when the current block is in a template matching-based prediction mode, determining a reference template similar to a template of the current block. The determining of the reference block may include determining the reference block based on the reference template.

An upper left sample of the reference block according to an embodiment of the present disclosure may be a reconstructed sample of the current image.

The method according to an embodiment of the present disclosure may include identifying a reconstructed region of the current image. When a lower right sample of the reference block is included in the reconstructed region, the method may include identifying that all samples of the reference block are reconstructed. When the lower right sample of the reference block is not included in the reconstructed region, the method may include identifying that at least some samples of the reference block are not reconstructed.

The determining of the at least some unreconstructed samples according to an embodiment of the present disclosure may include determining the at least some unreconstructed samples using at least one of a reconstructed left sample and a reconstructed upper sample adjacent to the at least some unreconstructed samples.

The determining of the at least some unreconstructed samples according to an embodiment of the present disclosure may include determining the at least some unreconstructed samples using a weighted sum of the reconstructed left sample and the reconstructed upper sample adjacent to the at least some unreconstructed samples.

The determining of the at least some unreconstructed samples according to an embodiment of the present disclosure may include determining the at least some unreconstructed samples using a bit depth of the current image.

The determining of the at least some unreconstructed samples according to an embodiment of the present disclosure may include determining a reconstructed reference sample adjacent to the at least some unreconstructed samples. The determining of the at least some unreconstructed samples may include determining the at least some unreconstructed samples by performing intra prediction using the reconstructed reference sample.

The intra prediction according to an embodiment of the present disclosure may be performed using at least one of a DC mode, a planar mode, a most probable mode (MPM) of the current block, an intra prediction mode of reconstructed samples of the reference block, template-based intra mode derivation (TIMD), or decoder side intra mode derivation (DIMD).

When there are undetermined samples in the current block after a part of the current block is determined based on the reference block, the method according to an embodiment of the present disclosure may include determining the undetermined samples using at least one of template matching or intra prediction.

The method according to an embodiment of the present disclosure may include determining a first reference block and a second reference block. The method may include determining the reference block using a weighted sum of the first reference block and the second reference block. When both a sample of the first reference block and a sample of the second reference block are reconstructed, weights thereof may be determined to be the same. When at least one of the sample of the first reference block and the sample of the second reference block is not reconstructed, a weight of the at least one unreconstructed sample may be determined to be 0.

An image decoding apparatus according to an embodiment of the present disclosure is provided. The image decoding apparatus may include at least one processor. When a prediction mode of a current block is a mode for determining a reference block in a current image including the current block, the at least one processor may be configured to determine the reference block in the current image including the current block. At least some samples of the reference block may be reconstructed. When all samples of the reference block are reconstructed, the at least one processor may be configured to reconstruct the current block using the reference block. When at least some samples of the reference block are not reconstructed, the at least one processor may be configured to determine the at least some unreconstructed samples using reconstructed samples of the current image. The at least one processor may be configured to reconstruct the current block using the reference block including the determined at least some samples.

When the prediction mode of the current block is a block copy mode, the at least one processor according to an embodiment of the present disclosure may be configured to identify a block vector indicating the reference block. The at least one processor may be configured to determine the reference block using the block vector.

When the current block is in a template matching-based prediction mode, the at least one processor according to an embodiment of the present disclosure may be configured to determine a reference template similar to a template of the current block. The at least one processor may be configured to determine the reference block based on the reference template.

An upper left sample of the reference block according to an embodiment of the present disclosure may be a reconstructed sample of the current image.

The at least one processor according to an embodiment of the present disclosure may be configured to identify a reconstructed region of the current image. When a lower right sample of the reference block is included in the reconstructed region, the at least one processor may be configured to identify that all samples of the reference block are reconstructed. When the lower right sample of the reference block is not included in the reconstructed region, the at least one processor may be configured to identify that at least some samples of the reference block are not reconstructed.

The at least one processor according to an embodiment of the present disclosure may be configured to determine at least some unreconstructed samples using at least one of a reconstructed left sample and a reconstructed upper sample adjacent to the at least some unreconstructed samples.

The at least one processor according to an embodiment of the present disclosure may be configured to determine at least some unreconstructed samples using a weighted sum of the reconstructed left sample and the reconstructed upper sample adjacent to the at least some unreconstructed samples.

The at least one processor according to an embodiment of the present disclosure may be configured to determine at least some unreconstructed samples using a bit depth of the current image.

The at least one processor according to an embodiment of the present disclosure may be configured to determine a reconstructed reference sample adjacent to the at least some unreconstructed samples. The at least one processor may be configured to determine at least some unreconstructed samples by performing intra prediction on the reconstructed reference sample.

The intra prediction according to an embodiment of the present disclosure may be performed using at least one of a DC mode, a planar mode, a most probable mode (MPM) of the current block, an intra prediction mode of reconstructed samples of the reference block, template-based intra mode derivation (TIMD), or decoder side intra mode derivation (DIMD).

When there are undetermined samples in the current block after a part of the current block is determined based on the reference block, the at least one processor according to an embodiment of the present disclosure may be configured to determine the undetermined samples using at least one of template matching or intra prediction.

The at least one processor according to an embodiment of the present disclosure may be configured to determine a first reference block and a second reference block. The at least one processor may be configured to determine the reference block using a weighted sum of the first reference block and the second reference block. When both a sample of the first reference block and a sample of the second reference block are reconstructed, weights thereof may be determined to be the same. When at least one of the sample of the first reference block and the sample of the second reference block is not reconstructed, a weight of the unreconstructed sample may be determined to be 0.

According to an embodiment of the present disclosure, an image encoding method is provided. When a prediction mode of a current block is a mode for determining a reference block in a current image including the current block, the method may include determining the reference block in the current image including the current block. At least some samples of the reference block may be reconstructed. When all samples of the reference block are reconstructed, the method may include reconstructing the current block using the reference block. When at least some samples of the reference block are not reconstructed, the method may include determining the at least some unreconstructed samples using reconstructed samples of the current image. The method may include reconstructing the current block using the reference block including the determined at least some samples.

According to an embodiment of the present disclosure, the determining of the reference block may include identifying a block vector indicating the reference block. The determining of the reference block may include determining the reference block using the block vector.

According to an embodiment of the present disclosure, the determining of the reference block may include determining a reference template similar to a template of the current block. The determining of the reference block may include determining the reference block based on the reference template.

According to an embodiment of the present disclosure, an upper left sample of the reference block may be a reconstructed sample of the current image.

According to an embodiment of the present disclosure, the method may include identifying a reconstructed region of the current image. When a lower right sample of the reference block is included in the reconstructed region, the method may include identifying that all samples of the reference block are reconstructed. When a lower right sample of the reference block is not included in the reconstructed region, the method may include identifying that at least some samples of the reference block are not reconstructed.

According to an embodiment of the present disclosure, the determining of the at least some unreconstructed samples may include determining the at least some unreconstructed samples using at least one of a reconstructed left sample and a reconstructed upper sample adjacent to the at least some unreconstructed samples.

The determining of the at least some unreconstructed samples according to an embodiment of the present disclosure may include determining the at least some unreconstructed samples using a weighted sum of the reconstructed left sample and the reconstructed upper sample adjacent to the at least some unreconstructed samples.

The determining of the at least some unreconstructed samples according to an embodiment of the present disclosure may include determining the at least some unreconstructed samples using a bit depth of the current image.

The determining of the at least some unreconstructed samples according to an embodiment of the present disclosure may include determining a reconstructed reference sample adjacent to the at least some unreconstructed samples. The determining of the at least some unreconstructed samples may include determining the at least some unreconstructed samples by performing intra prediction using the reconstructed reference sample.

The intra prediction according to an embodiment of the present disclosure may be performed using at least one of a DC mode, a planar mode, a most probable mode (MPM) of the current block, an intra prediction mode of reconstructed samples of the reference block, template-based intra mode derivation (TIMD), or decoder side intra mode derivation (DIMD).

When there are undetermined samples in the current block after a part of the current block is determined based on the reference block, the method according to an embodiment of the present disclosure may include determining the undetermined samples using at least one of template matching or intra prediction.

The method according to an embodiment of the present disclosure may include determining a first reference block and a second reference block. The method may include determining the reference block using a weighted sum of the first reference block and the second reference block. When both a sample of the first reference block and a sample of the second reference block are reconstructed, weights thereof may be determined to be the same. When at least one of the sample of the first reference block and the sample of the second reference block is not reconstructed, a weight of the unreconstructed sample may be determined to be 0.

An image encoding apparatus according to an embodiment of the present disclosure is provided. The image encoding apparatus may include at least one processor. When a prediction mode of a current block is a mode for determining a reference block in a current image including the current block, the at least one processor may be configured to determine the reference block in the current image including the current block. At least some samples of the reference block may be reconstructed. When all samples of the reference block are reconstructed, the at least one processor may be configured to reconstruct the current block using the reference block. When at least some samples of the reference block are not reconstructed, the at least one processor may be configured to determine the at least some unreconstructed samples using reconstructed samples of the current image. The at least one processor may be configured to reconstruct the current block using the reference block including the determined at least some samples.

According to an embodiment of the present disclosure, a computer-readable storage medium storing a bitstream is provided. In an embodiment of the present disclosure, the bitstream may be encoded by an image encoding method. In an embodiment of the present disclosure, the bitstream may be decoded by an image decoding method.

An image decoding method according to an embodiment of the present disclosure is provided. When a prediction mode of a current block is an intra block copy mode or a template matching-based intra prediction mode, the method may include determining a reference block in the current image including the current block. Some samples of the reference block may not be reconstructed. The method may include determining some unreconstructed samples using reconstructed samples of the current image. The method may include reconstructing the current block using the reference block including the determined some samples.

An image decoding apparatus according to an embodiment of the present disclosure is provided. The image decoding apparatus may include at least one processor. When a prediction mode of a current block is an intra block copy mode or a template matching-based intra prediction mode, the at least one processor may be configured to determine a reference block in a current image including the current block. Some samples of the reference block may not be reconstructed. The at least one processor may be configured to determine some unreconstructed samples using reconstructed samples of the current image. The at least one processor may be configured to reconstruct the current block using the reference block including the determined some samples.

According to an embodiment of the present disclosure, an image encoding method is provided. When a prediction mode of a current block is an intra block copy mode or a template matching-based intra prediction mode, the image encoding method may include determining a reference block in a current image including the current block. Some samples of the reference block may not be reconstructed. The image encoding method may include determining some unreconstructed samples using reconstructed samples of the current image. The image encoding method may include reconstructing the current block using the reference block including the determined some samples.

An image encoding apparatus according to an embodiment of the present disclosure is provided. The image encoding apparatus may include at least one processor. When a prediction mode of a current block is an intra block copy mode or a template matching-based intra prediction mode, the at least one processor may be configured to determine a reference block in a current image including the current block. Some samples of the reference block may not be reconstructed. The at least one processor may be configured to determine some unreconstructed samples using reconstructed samples of the current image. The at least one processor may be configured to reconstruct the current block using the reference block including the determined some samples.

According to an embodiment of the present disclosure, a computer-readable storage medium storing a bitstream is provided.

A machine-readable storage medium may be provided as a non-transitory storage medium. Here, 'non-transitory' means that the storage medium does not include a signal (e.g., an electromagnetic wave) and is tangible, but does not distinguish whether data is stored semi-permanently or temporarily in the storage medium. For example, the 'non-transitory storage medium' may include a buffer in which data is temporarily stored.

According to an embodiment, methods according to various embodiments of the present disclosure may be provided in a computer program product. The computer program product may be a product purchasable between a seller and a purchaser. The computer program product may be distributed in the form of a machine-readable storage medium (e.g., a compact disc read-only memory (CD-ROM)), or distributed (e.g., downloaded or uploaded) online via an application store or between two user devices (e.g., smartphones) directly. When distributed online, at least part of the computer program product (e.g., a downloadable application) may be temporarily generated or at least temporarily stored in a machine-readable storage medium, such as a memory of a server of a manufacturer, a server of an application store, or a relay server.

**Claims**

1.    An image decoding method comprising:

when a prediction mode of a current block is a mode for determining a reference block in a current image including the current block, determining the reference block in the current image including the current block, wherein at least some samples of the reference block are reconstructed;

when all samples of the reference block are reconstructed, reconstructing the current block using the reference block; and

when at least some samples of the reference block are not reconstructed, determining the at least some unreconstructed samples using reconstructed samples of the current image; and reconstructing the current block using the reference block including the determined at least some samples.

2. The image decoding method of claim 1, wherein the determining of the reference block comprises:

when the prediction mode of the current block is a block copy mode, identifying a block vector indicating the reference block; and

determining the reference block using the block vector.

3. The image decoding method of claim 1, wherein the determining of the reference block comprises:

when the current block is in a template matching-based prediction mode, determining a reference template similar to a template of the current block; and

determining the reference block based on the reference template.

4. The image decoding method of claim 1, wherein an upper left sample of the reference block is a reconstructed sample of the current image.

5. The image decoding method of claim 1, further comprising:

identifying a reconstructed region of the current image;

when a lower right sample of the reference block is included in the reconstructed region, identifying that all samples of the reference block are reconstructed; and

when the lower right sample of the reference block is not included in the reconstructed region, identifying that at least some samples of the reference block are not reconstructed.

6. The image decoding method of claim 1, wherein the determining of the at least some unreconstructed samples comprises determining the at least some unreconstructed samples using at least one of a reconstructed left sample and a reconstructed upper sample adjacent to the at least some unreconstructed samples.

7. The image decoding method of claim 6, wherein the determining of the at least some unreconstructed samples comprises determining the at least some unreconstructed samples using a weighted sum of the reconstructed left sample and the reconstructed upper sample adjacent to the at least some unreconstructed samples.

8. The image decoding method of claim 1, wherein the determining of the at least some unreconstructed samples comprises determining the at least some unreconstructed samples using a bit depth of the current image.

9. The image decoding method of claim 1, wherein the determining of the at least some unreconstructed samples comprises:

determining a reconstructed reference sample adjacent to the at least some unreconstructed samples; and

determining the at least some unreconstructed samples by performing intra prediction using the reconstructed reference sample.

10. The image decoding method of claim 9, wherein the intra prediction is performed using at least one of a DC mode, a planar mode, a most probable mode (MPM) of the current block, an intra prediction mode of reconstructed samples of the reference block, template-based intra mode derivation (TIMD), or decoder side intra mode derivation (DIMD).

11. The image decoding method of claim 3, further comprising,

when there are undetermined samples in the current block after at least a part of the current block is determined based on the reference block,

determining the undetermined samples using at least one of template matching or intra prediction.

12. The image decoding method of claim 1, further comprising:

determining a first reference block and a second reference block; and
determining the reference block using a weighted sum of the first reference block and the second reference block, wherein, when both a sample of the first reference block and a sample of the second reference block are reconstructed, weights thereof are determined to be same, and
when at least one of the sample of the first reference block and the sample of the second reference block is not reconstructed, a weight of the at least one unreconstructed sample is determined to be 0.

13. The image decoding method of claim 1, wherein the mode for determining the reference block in the current image comprises at least one of an intra block copy mode or a template matching-based intra prediction mode.

14. An image encoding method comprising:

when a prediction mode of a current block is a mode for determining a reference block in a current image including the current block, determining the reference block in the current image including the current block, wherein at least some samples of the current block are reconstructed;
when all samples of the reference block are reconstructed, reconstructing the current block using the reference block; and
when at least some samples of the reference block are not reconstructed, determining the at least some unreconstructed samples using reconstructed samples of the current image; and reconstructing the current block using the reference block including the determined at least some samples.

15. A computer-readable storage medium storing a bitstream encoded by an image encoding method, the image encoding method comprising: when a prediction mode of a current block is a mode for determining a reference block in a current image including the current block, determining the reference block in the current image including the current block, wherein at least some samples of the reference block are reconstructed;

when all samples of the reference block are reconstructed, reconstructing the current block using the reference block; and
when at least some samples of the reference block are not reconstructed, determining the at least some unreconstructed samples using reconstructed samples of the current image; and reconstructing the current block using the reference block including the determined at least some samples.

# FIG. 1

# FIG. 2

200

210

BITSTREAM
GENERATOR

220

ENCODER

# FIG. 3

EP 4 742 658 A1

# FIG. 4

400 — □

{ 410

420a
420b

430a
430b
430c

450

{ 460

470a   470b

480a  480b  480c

FIG. 5

EP 4 742 658 A1

# FIG. 6

# FIG. 7

# FIG. 8

# FIG. 9

# FIG. 10

# FIG. 11

EP 4 742 658 A1

# FIG. 12

# FIG. 13

| DEPTH \ BLOCK SHAPE | 0: SQUARE | 1: NS_VER | 2: NS_HOR |
|---|---|---|---|
| DEPTH D | 1300 | 1310 | 1320 |
| DEPTH D+1 | 1302 | 1312 | 1322 |
| DEPTH D+2 | 1304 | 1314 | 1324 |
| ... | ... | ... | ... |

# FIG. 14

1400

DEPTH=D

1402a 1402b

PID 0
DEPTH=D

PID 1
DEPTH=D

1404a

PID 0
DEPTH=D

PID 1
DEPTH=D

1404b

1406a 1406b

PID 0
DEPTH=D+1

PID 1
DEPTH=D+1

PID 2
DEPTH=D+1

PID 3
DEPTH=D+1

1406c 1406d

1410

DEPTH=D

PID 0
DEPTH=D+1 — 1412a

PID 1
DEPTH=D+1 — 1412b

PID 0
DEPTH=D+1 — 1414a

PID 1
DEPTH=D+1 — 1414b

PID 3
DEPTH=D+1 — 1414c

1420

DEPTH=D

1422a 1422b

PID 0
DEPTH=D+1

PID 1
DEPTH=D+1

1424a 1424b 1424c

PID 1
DEPTH=D+1

PID 0
DEPTH=
D+1

PID 3
DEPTH=
D+1

EP 4 742 658 A1

# FIG. 15

1510

1500

1502

FIG. 16

# FIG. 17

| SQUARE BLOCK | |
|---|---|
| (00)b | ☐ |
| (01)b | ⊞ |
| (10)b | ⊟ |
| (11)b | ◫ |

| NON-SQUARE BLOCK | | |
|---|---|---|
| (0)b | ▭ | ⯾ |
| (10)b | ⊟ | ⯾ |
| (11)b | ⊟ | ⯾ |

# FIG. 18

| SQUARE BLOCK | |
|---|---|
| (0)b | |
| (10)b | |
| (11)b | |

| NON-SQUARE BLOCK | | |
|---|---|---|
| (0)b | | |
| (10)b | | |
| (11)b | | |

FIG. 19

# FIG. 20

# FIG. 21

searchRangeheight

2130  2120

2100

R1

R4

R3

R2

Cur Block — 2110

searchRangeheight    searchRangeheight

RECONSTRUCTED REGION

UNRECONSTRUCTED REGION

EP 4 742 658 A1

FIG. 22

# FIG. 23

# FIG. 24

searchRangeheight

R1

R4

R3

R2

Cur Block

2450

2410

2420 2430

2440

searchRangeheight

searchRangeheight

RECONSTRUCTED REGION

UNRECONSTRUCTED REGION

EP 4 742 658 A1

# FIG. 25

CURRENT IMAGE

# FIG. 26A

FIG. 26B

## FIG. 27

convolutional filter

Reference Template

Reference Block

Current Template

Current Block

EP 4 742 658 A1

FIG. 28

# FIG. 29

START

WHEN PREDICTION MODE OF CURRENT BLOCK IS BLOCK COPY MODE OR TEMPLATE MATCHING-BASED PREDICTION MODE, DETERMINE REFERENCE BLOCK IN CURRENT IMAGE INCLUDING CURRENT BLOCK — S2910

WHEN ALL SAMPLES OF REFERENCE BLOCK ARE RECONSTRUCTED, RECONSTRUCT CURRENT BLOCK BY USING REFERENCE BLOCK — S2920

WHEN AT LEAST SOME SAMPLES OF REFERENCE BLOCK ARE NOT RECONSTRUCTED, DETERMINE AT LEAST SOME UNRECONSTRUCTED SAMPLES BY USING RECONSTRUCTED SAMPLES OF CURRENT IMAGE AND RECONSTRUCT CURRENT BLOCK BY USING REFERENCE BLOCK INCLUDING DETERMINED AT LEAST SOME SAMPLES — S2930

END

# FIG. 30

3000

PREDICTION ENCODER
3010

GENERATOR
3020

# FIG. 31

START

WHEN PREDICTION MODE OF CURRENT BLOCK IS BLOCK COPY MODE OR TEMPLATE MATCHING-BASED PREDICTION MODE, DETERMINE REFERENCE BLOCK IN CURRENT IMAGE INCLUDING CURRENT BLOCK ⟶ S3110

WHEN ALL SAMPLES OF REFERENCE BLOCK ARE RECONSTRUCTED, RECONSTRUCT CURRENT BLOCK BY USING REFERENCE BLOCK ⟶ S3120

WHEN AT LEAST SOME SAMPLES OF REFERENCE BLOCK ARE NOT RECONSTRUCTED, DETERMINE AT LEAST SOME UNRECONSTRUCTED SAMPLES BY USING RECONSTRUCTED SAMPLES OF CURRENT IMAGE AND RECONSTRUCT CURRENT BLOCK BY USING REFERENCE BLOCK INCLUDING DETERMINED AT LEAST SOME SAMPLES ⟶ S3130

END

## INTERNATIONAL SEARCH REPORT

International application No.

**PCT/KR2024/007146**

| A. | CLASSIFICATION OF SUBJECT MATTER |
|---|---|

**H04N 19/105**(2014.01)i; **H04N 19/593**(2014.01)i; **H04N 19/132**(2014.01)i; **H04N 19/176**(2014.01)i; **H04N 19/157**(2014.01)i

According to International Patent Classification (IPC) or to both national classification and IPC

| B. | FIELDS SEARCHED |
|---|---|

Minimum documentation searched (classification system followed by classification symbols)

H04N 19/105(2014.01); H04N 13/117(2018.01); H04N 13/243(2018.01); H04N 19/11(2014.01); H04N 19/129(2014.01); H04N 19/159(2014.01); H04N 19/176(2014.01); H04N 19/523(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 현재 영상(current picture), 참조 블록(reference block), 샘플 (sample), 복원(reconstruct), 블록 벡터(block vector)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2017-0029549 A (HFI INNOVATION INC.) 15 March 2017 (2017-03-15)<br>See paragraphs [0030]-[0032] and [0100]; and claims 9-10, 26 and 32. | 1-2,4-6,13-15 |
| Y | | 3,7-12 |
| Y | KR 10-2023-0073970 A (HYUNDAI MOTOR COMPANY et al.) 26 May 2023 (2023-05-26)<br>See claim 1. | 3,11 |
| Y | KR 10-2023-0051319 A (VID SCALE, INC.) 17 April 2023 (2023-04-17)<br>See paragraphs [0008], [0098] and [0133]; and figures 14-15. | 7,9-11 |
| Y | KR 10-2295418 B1 (QUALCOMM INCORPORATED) 27 August 2021 (2021-08-27)<br>See paragraph [0071]. | 8 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 September 2024** | **02 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/007146** |

| C. | DOCUMENTS CONSIDERED TO BE RELEVANT | |
| --- | --- | --- |
| Category* | Citation of document, with indication, where appropriate, of the relevant passages | Relevant to claim No. |
| Y | KR 10-2019-0062300 A (ELECTRONICS AND TELECOMMUNICATIONS RESEARCH INSTITUTE et al.) 05 June 2019 (2019-06-05)<br>See paragraphs [0665] and [0670]. | 12 |

## INTERNATIONAL SEARCH REPORT
### Information on patent family members

International application No.

**PCT/KR2024/007146**

| Patent document cited in search report | | | Publication date (day/month/year) | Patent family member(s) | | | Publication date (day/month/year) |
|---|---|---|---|---|---|---|---|
| KR | 10-2017-0029549 | A | 15 March 2017 | CN | 111147846 | A | 12 May 2020 |
| | | | | CN | 111147846 | B | 11 March 2022 |
| | | | | EP | 3152906 | A1 | 12 April 2017 |
| | | | | EP | 3152906 | B1 | 16 June 2021 |
| | | | | JP | 2019-083541 | A | 30 May 2019 |
| | | | | JP | 6781279 | B2 | 04 November 2020 |
| | | | | KR | 10-1961385 | B1 | 25 March 2019 |
| | | | | KR | 10-2017-0020928 | A | 24 February 2017 |
| | | | | US | 10869031 | B2 | 15 December 2020 |
| | | | | US | 2017-0134724 | A1 | 11 May 2017 |
| | | | | WO | 2016-004850 | A1 | 14 January 2016 |
| KR | 10-2023-0073970 | A | 26 May 2023 | WO | 2023-090613 | A1 | 25 May 2023 |
| KR | 10-2023-0051319 | A | 17 April 2023 | CN | 117135357 | A | 28 November 2023 |
| | | | | EP | 3482563 | A1 | 15 May 2019 |
| | | | | JP | 2023-105219 | A | 28 July 2023 |
| | | | | JP | 7295178 | B2 | 20 June 2023 |
| | | | | KR | 10-2022-0047402 | A | 15 April 2022 |
| | | | | KR | 10-2521272 | B1 | 12 April 2023 |
| | | | | US | 11388438 | B2 | 12 July 2022 |
| | | | | US | 2022-0368947 | A1 | 17 November 2022 |
| | | | | WO | 2018-009746 | A1 | 11 January 2018 |
| KR | 10-2295418 | B1 | 27 August 2021 | CN | 108141605 | A | 08 June 2018 |
| | | | | CN | 108141605 | B | 04 January 2022 |
| | | | | EP | 3357246 | A1 | 08 August 2018 |
| | | | | JP | 2018-530249 | A | 11 October 2018 |
| | | | | JP | 7211816 | B2 | 24 January 2023 |
| | | | | KR | 10-2018-0063094 | A | 11 June 2018 |
| | | | | US | 10812822 | B2 | 20 October 2020 |
| | | | | US | 2017-0099495 | A1 | 06 April 2017 |
| | | | | WO | 2017-058633 | A1 | 06 April 2017 |
| KR | 10-2019-0062300 | A | 05 June 2019 | CN | 111684801 | A | 18 September 2020 |
| | | | | KR | 10-2024-0063850 | A | 10 May 2024 |
| | | | | KR | 10-2402539 | B1 | 27 May 2022 |

Form PCT/ISA/210 (patent family annex) (July 2022)